# EUROPEAN PATENT APPLICATION

(11) **EP 2 154 213 A1**
(43) Date of publication of application: **17.02.2010**
(21) Application number: 09165115.8
(22) Date of filing: 10.07.2009
(51) Int. Cl.: C09D 11/10, C09D 11/00

(54) **Ink-jet ink composition, and ink-jet recording method**

(30) Priority: 16.07.2008 JP 2008184511
(71) Applicant: Fujifilm Corporation, Tokyo 106-0031 (JP)
(72) Inventor: Matsumura, Tokihiko, Kanagawa (JP)
(74) Representative: Grünecker, Kinkeldey, Stockmair & Schwanhäusser Anwaltssozietät

(57) **Abstract**

An ink-jet ink composition containing the following components of (a), (b), and (c), and having a viscosity at 25°C in the range of from 5 mPa·s to 100 mPa·s,
(a) a polymerizable compound,
(b) a photopolymerization initiator, and
(c) a sensitizer represented by the following formula (i):

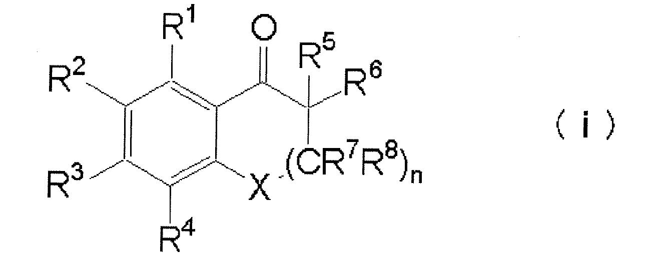

in the Formula (i), X represents O, S or NR; n represents an integer of 0 or 1; R represents a hydrogen atom, an alkyl group or an acyl group; each of R¹, R², R³, R⁴, R⁵, R⁶, R⁷ and R⁸ independently represents a hydrogen atom or a monovalent substituent, provided that any neighboring two of R¹, R², R³ and R⁴ may be bonded to each other to form a ring, and R⁵ and R⁷ or R⁸, or R⁶ and R⁷ or R⁸, may be bonded to each other to form an aliphatic ring but do not form an aromatic ring.

## Description

### BACKGROUND

### Field of the Invention

The present invention relates to an nk-jet ink composition suitably for ink-jet recording, and an ink-jet recording method using the ink-jet ink composition.

### Related Art

As methods of recording images on a recording medium, such as paper, based on an image data signal, an electrophotographic method, sublimation and melting thermal transfer methods, and an inkjet recording method are known. For example, the inkjet recording method is advantageous because recording apparatuses are inexpensive, and an image is directly formed on a recording medium by jetting inks only on necessary image parts, so that ink can be efficiently used and running costs are inexpensive. Further, the inkjet recording method produces little noise, and is therefore excellent as an image recording method.

By the ink-jet process, not only plane paper but also a water non-absorbable recording medium such as a plastics sheet or a metal plate is used as a printable medium. However, upon printing, high speed and high image quality have become important issues. The ink-jet process has such a character that drying of liquid drops after printing and the time required for curing largely affect the productivity of printed articles and the sharpness of printed images.
As one of ink-jet processes, there may be mentioned a recording process using an ink-jet recording ink that is curable with irradiation of radiation rays. According to this process, immediately after or waiting for a predetermined time after the ink is jetted, radiation rays are irradiated to cure the jetted ink drops, thereby improving printing productivity and providing sharp images.
By providing an ink-jet recording ink that is curable by irradiation of radiation rays such as UV-light with a high sensitivity, a highly curable property with respect to radiation rays is attained, thereby bringing about many advantages including improvement of ink-jet printing productivity, reduction in power consumption, extension of operating life due to reduction in load of a radiation ray generator, and prevention of volatilization of low molecular substances that is caused by insufficient curing. In addition, high sensitivity attained in this way is particularly important from the viewpoint of improving the strength of images formed.

The radiation ray curable ink-jet process, for example, an UV-light curable ink-jet process has drawn attention in recent years because the process is relatively less odorous and fast-drying and has a capability of allowing printing on a recording medium having no ink absorbability. An UV-light curable ink-jet ink composition using radical polymerization has been proposed (for example, see Japanese Patent Application Laid-Open (JP-A) Nos. 63-235382, 3-216379 and 5-214280, and Japanese Patent Publication (JP-B) Nos. 6-21256 and 6-62905.).
Further, as an ink-jet ink composition that has a high sensitivity for curing and provides good quality images, an ink-jet ink composition that contains at least one hydrophobic polymer selected from the group consisting of a fluorine group containing polymer, a long chain alkyl group containing polymer, and an alicyclic group containing polymer is known (for example, see JP-A 2006-182970).
However, these ink-jet ink compositions are accompanied by undesirable phenomena such as tackiness of formed images or bleeding of low molecular weight components out of the surface of the images (so-called, leaching), thereby having problems such as insufficient blocking resistance.

On the other hand, in the UV-light curable ink-jet ink composition, benzyl, benzoin, benzoin ethylether, Michler's ketone, anthraquinone, acridine, phenazine, benzophenone, 2-ethylanthraquinone, or the like is used usually as a photopolymerization initiator (for example, see Bruce M. Monroe et.al., Chemical Reviews, Vol. 93, p. 435-448 (1993)).
However, when these photopolymerization initiators are used, a long period of time is required for image exposure in an image forming process because the resultant composition has a low sensitivity for curing. Due to this, upon forming fine images, good quality images are hardly reproduced when minute vibrations are involved in the operation, so that the radiation energy intensity of a light source for exposure is needed to be increased, thereby requiring consideration for an accompanied enormous heat generation.
Generally, for the radiation ray curable compositions, as a method for increasing the sensitivity to radiation rays, various kinds of polymerization initiators are disclosed for use in that purpose (see, Bruce M. Monroe et.al., Chemical Reviews, Vol. 93, p. 435-448 (1993); U.S. Pat. No. 4,134,813, and JP-A Nos. 1-253731 and 6-308727). However, there is not any example in which a polymerization initiator that satisfies sufficient sensitivity for scanning exposure is employed for an ink.

In view of the circumstances described above, an ink-jet ink composition that has a capability of forming an image with excellent jetting stability is eagerly expected.

### SUMMARY

The present invention has been made in view of the above circumstances and provides an ink-jet ink composition and an ink-jet recording method.
A first aspect of the invention provides an ink-jet ink composition that contains the following components of (a), (b), and (c), and has a viscosity at 25°C in the range of from 5 mPa·s to 100 mPa·s:
(a) a polymerizable compound,
(b) a photopolymerization initiator, and
(c) a sensitizer represented by the following formula (i), 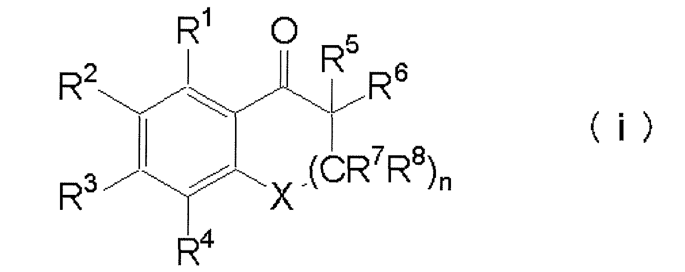
wherein, in Formula (i), X represents O, S or NR; n represents an integer of 0 or 1; R represents a hydrogen atom, an alkyl group or an acyl group; each of R¹, R², R³, R⁴, R⁵, R⁶, R⁷ and R⁸ independently represents a hydrogen atom or a monovalent substituent, provided that any neighboring two of R¹, R², R³ and R⁴ may be bonded to each other to form a ring, and R⁵ and R⁷ or R⁸ or R⁶ and R⁷ or R⁸, may be bonded to each other to form an aliphatic ring but do not form an aromatic ring.

### BRIEF DESCRIPTION OF THE DRAWINGS

Exemplary embodiments of the present invention will be described in detail based on the following figures, wherein:
Fig. 1 shows phosphorescence spectra of sensitizers. Solid line: specific sensitizer I-14, and Dashed line: diethylthioxanthone.
Fig. 2 shows absorption spectra of sensitizers. Solid line: specific sensitizer I-14, and Dashed line: diethylthioxanthone.

### DETAILED DESCRIPTION OF THE INVENTION

The present inventors have made intensive studies and found that the foregoing problems are able to be eliminated by using in combination (a) a polymerizable compound, (b) a photopolymerization initiator, and (c) a specific sensitizing agent, whereby an ink-jet ink composition according to the present invention has been accomplished.

An ink-jet recording method according to the present invention includes (1) jetting the ink-jet ink composition of the present invention onto a recording medium and (2) curing the ink-jet ink composition by irradiating an active radiation ray onto the jetted ink-jet ink composition.

Further, in the ink-jet recording method, it is preferable that the active radiation ray is an UV-light that is irradiated from a light emitting diode generating a UV-light having emission peak wavelength of from 340nm to 370nm and having a maximum illuminance of from 10 mW/cm² to 2,000 mW/m² on the surface of the recoding medium.

The action of the ink-jet ink composition of the present invention may be speculated as follows. The sensitizer of the present invention has a sufficient absorption in the range of from 300 nm to 400 nm and a high triplet energy, so that presumably the triplet energy may be transferred to the initiator efficiently, thereby promoting radical generation and providing a high sensitivity ink-jet ink composition. In addition, for the sensitization of the triplet energy transfer, contact between the sensitizer and the initiator is essential, so that presumably the composition may function efficiently particularly in a low viscosity region from the viewpoint of easiness of molecular diffusion.
Further, the sensitizer of the present invention has a higher solubility and a lower crystallinity than generally used thioxanthone compounds, so that presumably the ink-jet ink composition may have an excellent stability as a solution, and that excellent jetting stability is obtained when the ink-jet ink composition containing the sensitizer is used for ink-jet recording.

### Ink-Jet Ink Composition

The ink-jet ink composition of the present invention contains (a) a polymerizable compound, (b) a photopolymerization initiator, and (c) a specific sensitizer and has a viscosity at 25°C in the range of from 5 mPa·s to 100 mPa·s.
Hereinafter, the essential components of the ink-jet ink composition of the present invention will be described.

### (a) Polymerizable Compound

The ink composition of the present invention contains a polymerizable compound. The polymerizable compound (a) may include a radical polymerizable compound and a cationic polymerizable compound. In the present invention, the radical polymerizable compound and the cationic polymerizable compound may be used in combination, but preferably either one is used solely. In addition, as the polymerizable compound, the radical polymerizable compound is preferably used considering material cost and availability.

### <Radical Polymerizable Compound>

In the present invention, as the radical polymerizable compound, a compound having an ethylenic unsaturated bond is preferably used. Specific examples thereof may include (meth)acrylic acid, (meth)acrylic acid ester, (meth)acrylamide compounds, and vinyl compounds (for example, aliphatic vinyl compounds, aromatic vinyl compounds, or N-vinyl compounds). The term "(meth)acrylic acid" as used herein refers to either "acrylic acid" or "methacrylic acid" or both. The term "(meth)acrylate" refers to either "acrylate" or "methacrylate" or both.
Among these, as the compound having an ethylenic unsaturated bond, various kinds of (meth)acrylate monomers may be preferably used.

For example, there may be mentioned monofunctional monomers including isoamyl(meth)acrylate, stearyl(meth)acrylate, lauryl(meth)acrylate, octyl(meth)acrylate, decyl(meth)acrylate, isoamylstyl(meth)acrylate, isostearyl(meth)acrylate, 2-ethylhexyl-diglycol(meth)acrylate, 2-hydroxybutyl(meth)acrylate, 2-(meth)acryloyloxyethylhexahydrophthalic acid, butoxyethyl(meth)acrylate, ethoxydiethyleneglycol(meth)acrylate, methoxydiethyleneglyhcol(meth)acrylate, methoxypolyethyleneglycol(meth)acrylate, methoxypropyleneglycol(meth)acrylate, phenoxyethyl(meth)acrylate, tetrahydrofurfuryl(meth)acrylate, isobornyl(meth)acrylate, 2-hydroxyethyl(meth)acrylate, 2-hydroxypropyl(meth)acrylate, 2-hydroxy-3-phenoxypropyl(meth)acrylate, 2-(meth)acryloxyethylsuccinic acid, 2-(meth)acryloxyethylphthalic acid, 2-(meth)acryloxyethyl-2-hydroxyethyl-phthalic acid, lactone denatured flexible (meth)acrylate, and t-butylcyclohexyl(meth)acrylate.

In addition, there may be mentioned multifunctional monomers including triethyleneglycol di(meth)acrylate, tetraethyleneglycol di(meth)acrylate, polyethyleneglycol di(meth)acrylate, dipropyleneglycol di(meth)acrylate, tripropyleneglycol di(meth)acrylate, polypropyleneglycol di(meth)acrylate, 1,4-butanediol di(meth)acrylate, 1,6-hexanediol di(meth)acrylate, 1,9-nonanediol di(meth)acrylate, neopentylglycol di(meth)acrylate, dimethylol-tricyclodecane di(meth)acrylate, EO (ethyleneoxide) adduct di(meth)acrylate of bisphenol A, PO (propyleneoxide) adduct di(meth)acrylate of bisphenol A, hydroxypivalic acid neopentylglycol di(meth)acrylate, polytetramethyleneglycol di(meth)acrylate, trimethylolpropane tri(meth)acrylate, EO denatured trimethylolpropane tri(meth)acrylate, pentaerythritol tri(meth)acrylate, pentaerythritol tetra(meth)acrylate, dipentaerythritol hexa(meth)acrylate, ditrimethylolpropane tetra(meth)acrylate, glycerinpropoxy tri(meth)acrylate, caprolactone denatured trimethylolpropane tri(meth)acrylate, pentaerythritolethoxy tetra(meth)acrylate, and caprolactone denatured dipentaerythritol hexa(meth)acrylate.

Besides above, polymerizable oligomers may be mixed similarly to the monomers. Examples of the polymerizable oligomers may include epoxy(meth)acrylate, aliphatic urethane (meth)acrylate, aromatic urethane (meth)acrylate, polyester (meth)acrylate, and straight chain (meth)acrylic oligomers.

In the present invention, as the radical polymerizable compound, a radical polymerizable monomer having a ring structure is preferably used. As the radical polymerizable monomer having a ring structure, a monofunctional radical polymerizable monomer having an aliphatic ring structure or an aromatic monofunctional radical polymerizable monomer, or both are preferably used.

The monofunctional radical polymerizable monomer having an aliphatic ring structure and the aromatic monofunctional radical polymerizable monomer are preferably a monofunctional radical polymerizable monomer represented by the following formula (A1). Note that, the monofunctional radical polymerizable monomer having an aliphatic ring structure is a monofunctional radical polymerizable monomer having an alicyclic hydrocarbon group that may contain a hetero atom. The aromatic monofunctional radical polymerizable monomer is a monofunctional radical polymerizable monomer having an aromatic group. Further, the monofunctional radical polymerizable monomer is a compound that has only one polymerizable ethylenic unsaturated bond. Preferable examples of a group having a polymerizable ethylenic unsaturated bond may include an acryloyloxy group, a methacryloyloxy group, an acrylamide group, a methacrylamide group, a vinyl group, and a vinyloxy group.
Note that, the radical polymerizable monomer having an aliphatic ring structure has a radical polymerizable group besides the aliphatic ring structure, and the ethylenic unsaturated bond involved in the aliphatic ring structure is not counted as the polymerizable ethylenic unsaturated bond.

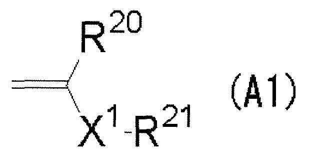

In formula (A1), R²⁰ represents hydrogen atom, a halogen atom, and an alkyl group having from 1 to 4 carbon atoms; X¹ represents a divalent linking group and is preferably an ether group (-O-), an ester group (-C(O)O- or -OC(O)-), an amide group (-C(O)NR'-), a carbonyl group (-C(O)-), nitrogen atom (-NR'-), an alkylene group that has from 1 to 15 carbon atoms and may have a substitution group, or a divalent group that is obtained by combining two or more of these groups; and R' represents hydrogen atom, a straight-chain, branched or cyclo alkyl group having from 1 to 20 carbon atoms, or an aryl group having from 6 to 20 carbon atoms.
R²¹ is an aromatic group including a single ring aromatic group and a multi-ring aromatic group, or an alicyclic hydrocarbon group; the aromatic group and the alicyclic hydrocarbon group may have a halogen atom, a hydroxyl group, an amino group, a siloxane group, a substitution group having 30 or less carbon atoms; and in the ring structure of the aromatic group or the alicyclic hydrocarbon group, a hetero atom such as O, N, or S may be involved.

In formula (A1), R²⁰ is preferably hydrogen atom or an alkyl group having from 1 to 4 carbon atoms, more preferably hydrogen atom or methyl group, and particularly preferably hydrogen atom.
X¹ has preferably an ester bond (-C(O)-O-).
Namely, in the present invention, the monofunctional radical polymerizable monomer having an aliphatic ring structure and the aromatic monofunctional radical polymerizable monomer are preferably acrylate (acrylic acid ester) or methacrylate (methacrylic acid ester).

The content of the monofunctional radical polymerizable monomer having an aliphatic ring structure and the aromatic monofunctional radical polymerizable monomer is preferably in the range of from 1.0% to 80.0% by mass with respect to the ink-jet ink composition. When the content is within the above range, preferably an adequate curing property is obtainable and a cured film may attain an adequate flexibility. The range is more preferably from 5.0% to 70.0% by mass and still more preferably from 10.0% to 60.0% by mass.
Note that, the monofunctional radical polymerizable monomer having an aliphatic ring structure and the aromatic monofunctional radical polymerizable monomer may be used in combination or either one solely may be used also preferably.

### (Monofunctional Radical Polymerizable Monomer Having Aliphatic Ring Structure)

R²¹ in formula (A1) may be an alicyclic hydrocarbon group or a group with an alicyclic hydrocarbon group having a hetero atom such as O, N or S.
The alicyclic hydrocarbon group preferably has a cycloalkane having from 3 to 12 carbon atoms.
Specific examples of the alicyclic hydrocarbon group having a hetero atom such as O, N or S may include a group that is obtained by eliminating at least one hydrogen atom from pyrrolidine, pyrazolidine, imidazolidine, isoxazoline, isothiazolidine, piperidine, piperazine, morpholine, thiomorpholine, diazole, triazole, or tetrazole.
These aliphatic hydrocarbon group and aliphatic hydrocarbon group that may have a hetero ring may have a substitution group. The substitution group is preferably a halogen atom, a hydroxyl group, an amino group, a thiol group, a siloxane group, a hydrocarbon group or a heterocyclic group having a hetero atom such as O, N or S that has 30 or less of carbon atoms in all and may further have a substitution group, or an oxy group (=O) that is a divalent substitution group.

The monofunctional radical polymerizable monomer having an aliphatic ring structure is more preferably a compound that has a norbornene backbone and is represented by the following formula (A2).

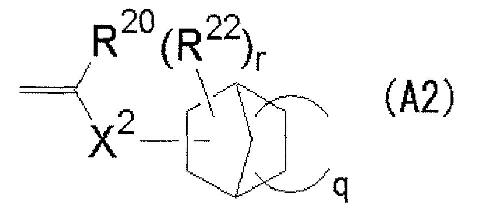

In formula (A2), R²⁰ has the same meaning as R²⁰ in formula (A1); X² represents a divalent linking group and is preferably an ether group (-O-), an ester group (-C(O)O- or -OC(O)-), an amide group (-C(O)NR'-), a carbonyl group (-C(O)-), nitrogen atom (-NR'-), an alkylene group that has from 1 to 15 carbon atoms and may have a substitution group, or a divalent group that is obtained by combining two or more of these groups. R' represents hydrogen atom, a straight-chain, branched or cyclo alkyl group having from 1 to 20 carbon atoms, or an aryl group having from 6 to 20 carbon atoms; R²² represents a monovalent or divalent substitution group; r is an integer of from 0 to 5; q represents a cyclic hydrocarbon structure; the cyclic hydrocarbon structure may include a carbonyl bond (-C(O)-) or an ester bond (-C(O)O-) or both besides a hydrocarbon bond; R²²s, r in number, each may be the same or different; and one of the carbon atoms in the norbornene backbone may be substituted by an ether bond (-O-) or an ester bond (-C(O)O-) or both.
In formula (A2), R²⁰ is preferably hydrogen atom or an alkyl group having from 1 to 4 carbon atoms, and more preferably hydrogen atom or methyl group.

The terminal portion that links to the vinyl group of X² in formula (A2) is preferably an ester group or an amide group to which the carbonyl carbon and vinyl group of X² link, and more preferably an ester bond. Particularly preferably, the terminal portion has a structure of H₂C=C(R²⁰)-C(O)O-. In that case, the other portion of X² that links to the norbornene backbone may be a single bond or an arbitrary group selected from the foregoing groups.
The vinyl portion (H₂C=C(R²⁰)-X²-) that has R²⁰ and X² may be bonded at an arbitrary position on the alicyclic hydrocarbon structure. Note that, "on the alicyclic hydrocarbon structure" means "on the norbornene structure" and "the cyclic hydrocarbon structure having q" in formula (A2).
Further, from the viewpoint of improving affinity to a colorant, the terminal portion that links to the alicyclic hydrocarbon structure of X² in formula (A2) is preferably oxygen atom, more preferably an ether oxygen atom, and still more preferably X² in formula (A2) is -C(O)O(CH₂CH₂O)ₚ- (p is 1 or 2).

R²²s in formula (A2), each is independently a monovalent or divalent substitution group and may be linked at an arbitrary position on the alicyclic hydrocarbon structure. R²²s, r in number, may be the same or different from each other.
R²²s, r in number, each may be independently a monovalent or divalent substitution group. The monovalent substitution group is preferably hydrogen atom, a hydroxyl group, a substituted or unsubstituted amino group, a thiol group, a siloxane group, or a hydrocarbon or heterocyclic group that has 30 or less of total number of carbon atoms and may have a substitution group. The divalent substitution group is preferably an oxy group (=O).

q in formula (A2) represents a cyclic hydrocarbon structure, and the both terminals thereof may be substituted at an arbitrary position of the norbornene backbone. The structure may be a single ring structure or a multi ring structure. The cyclic hydrocarbon structure may have a carbonyl bond (-C(O)-) or an ester bond (-C(O)O-) or both besides a hydrocarbon bond.

The monomer represented by formula (A2) is preferably a monomer represented by a formula (A3) or a formula (A4). Note that, the unsaturated bond in the cyclic hydrocarbon structure in formula (A4) is low in radical polymerizability. In the present invention, the compound represented by formula (A4) is a monofunctional radical polymerizable monomer.

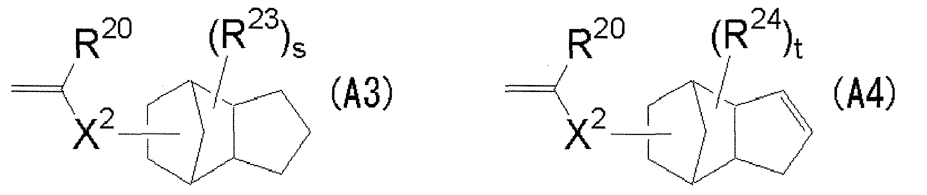

In formulae (A3) and (A4), R²⁰ represents hydrogen atom, a halogen atom, and an alkyl group having from 1 to 4 carbon atoms; X² represents a divalent linking group; R²³ and R²⁴, each is independently a substitution group; s and t, each is independently an integer of from 0 to 5; R²³s, s in number, and R²⁴s, t in number, may be the same or different from each other, respectively.

R²⁰ in formula (A3) or (A4) has the same meaning as R²⁰ in formula (A2), also having the same preferable range.
The vinyl portion that has R²⁰ and X² in formula (A3) or (A4) may be bonded at an arbitrary position on each alicyclic hydrocarbon structure described below in formula (A3) or (A4).

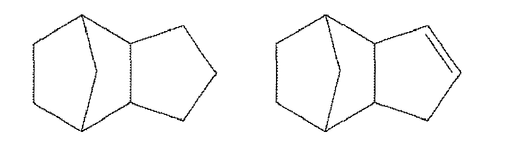

R²³ and R²⁴ in formula (A3) or (A4), each is independently a substitution group and may be bonded at an arbitrary position on each alicyclic hydrocarbon structure described above in formula (A3) or (A4). The substitution group in R²³ and R²⁴ has the same meaning as the substitution group in R²² in formula (A2), also having the same preferable range.
In formula (A3) or (A4), s and t, each is independently an integer of from 0 to 5. R²³s, s in number, and R²⁴s, t in number, may be the same or different from each other, respectively.

As the monomer represented by formula (A2), preferable specific examples of a monofunctional acrylate are shown below.
Note that, in a part of the following example compounds, a hydrocarbon chain is represented by a simplified formula in which the symbol (C) for carbon atom and the symbol (H) for hydrogen atom are abbreviated.

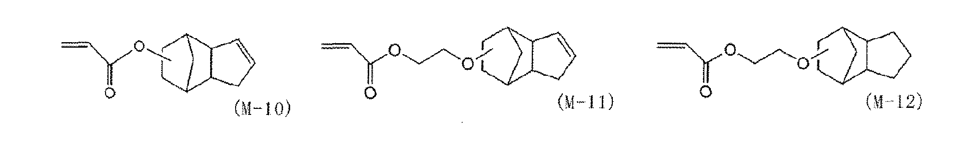

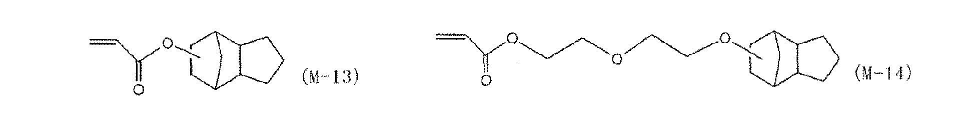

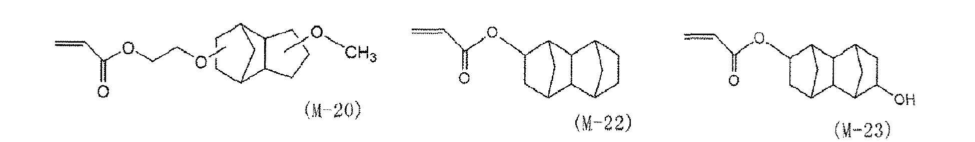

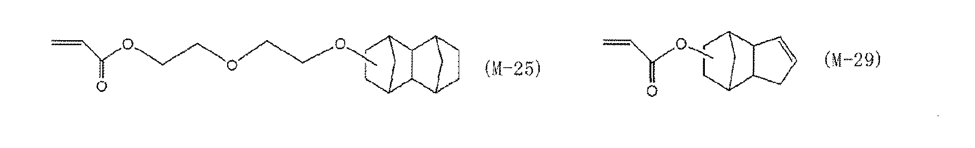

As the monomer represented by formula (A2), preferable specific examples of a monofunctional methacrylate are shown below.

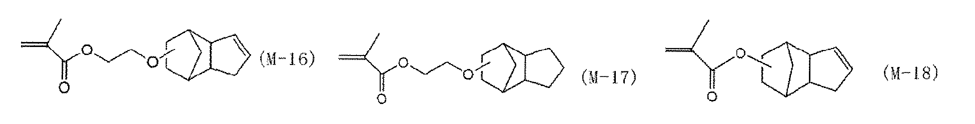

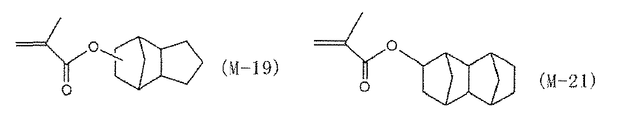

As the monomer represented by formula (A2), preferable specific examples of a monofunctional acrylamide are shown below.

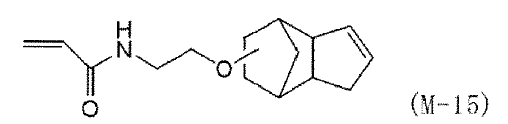

### (Aromatic Monofunctional Radical Polymerizable Monomer)

The aromatic monofunctional radical polymerizable monomer is preferably a polymerizable monomer represented by the following formula (A5).

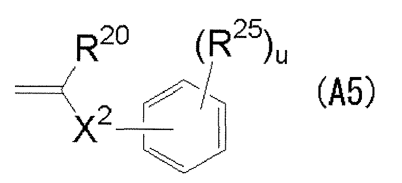

In formula (A5), R²⁰ represents hydrogen atom, a halogen atom, or an alkyl group having from 1 to 4 carbon atoms; X² represents a divalent linking group; R²⁵ represents a monovalent substitution group; u is an integer of from 0 to 5; R²⁵s, u in number, each may be the same or different from each other; and plural R²⁵s may link together to form a ring, and the ring may be an aromatic ring.

In formula (A5), R²⁰ is preferably hydrogen atom or an alkyl group having from 1 to 4 carbon atoms, more preferably hydrogen atom or methyl group, and still more preferably hydrogen atom.
X² has the same meaning as X² in formula (A2), also having the same preferable range.
R²⁵s, u in number, each is independently a monovalent substitution group. The monovalent substitution group is preferably hydrogen atom, a hydroxyl group, a substituted or unsubstituted amino group, a thiol group, a siloxane group, or a hydrocarbon or heterocyclic group that has 30 or less of total number of carbon atoms and may have a substitution group.

In formula (A5), when each of plural R²⁵s links together to form a ring, they form preferably an aromatic ring.
Namely, in formula (A5), a preferable aromatic group is, beside a group (phenyl group, phenylene group, or the like) that is obtained by eliminating at least one hydrogen atom from benzene that is a single ring aromatic group, a polycyclic aromatic group having from 2 to 4 rings, but not limitative. Specific examples thereof may include a group that is obtained by eliminating at least one hydrogen atom from naphthalene, anthracene, 1H-indene, 9H-fluorene, 1H-phenalene, phenanthrene, triphenylene, pyrene, naphthacene, tetraphenylene, biphenylene, as-indacene, s-indacene, acenaphthylene, fluoranthene, acephenanthrene, aceanthrylene, chrysene, pleiadene, and the like.

These aromatic groups may be an aromatic heterocyclic group that contain a hetero atom such as O, N or S. Specific examples thereof may include a group that is obtained by eliminating at least one hydrogen atom from a single ring aromatic heterocyclic compound such as furan, thiophene, 1H-pyrrole, 2H-pyrrole, 1H-pyrazole, 1H-imidazole, isoxazole, isothiazole, 2H-pyran, 2H-thiopyran, pyridine, pyridazine, pyrimidine, pyrazine, 1, 2, 3-triazole, or 1,2,4-triazole.

Further, a group that is obtained by eliminating at least one hydrogen atom from a polycyclic aromatic heterocyclic compound such as thianthrene, isobenzofuran, isochromene, 4H-chromene, xthantene, phenoxathine, indolizine, isoindole, indole, indazole, purine, 4H-quinolizine, isoquinoline, quinoline, phthalazine, naphthyridine, quinoxaline, quinazoline, cinnoline, pteridine, carbazole, β-carboline, phenanthridine, acridine, perimidine, phenanthroline, phenazine, phenothiazine, phenoxazine, or pyrrolidine may be included.

The foregoing aromatic groups may have at least one halogen atom, hydroxyl group, amino group, thiol group, siloxane group, or substitution group having 30 or less carbon atoms. For example, as seen in phthalic anhydride or phthalic imide anhydride, a ring structure that contains a hetero atom such as O, N or S may be formed by two or more substitution groups that are involved in an aromatic group.

In the present invention, a more preferable polycyclic aromatic group has from 2 to 3 rings, and naphthyl group is particularly preferable.

Specific examples of the aromatic monofunctional radical polymerizable monomer may include preferably [L-1] to [L-71], but not limitative. n each independently represent an integer of from 7 to 18.

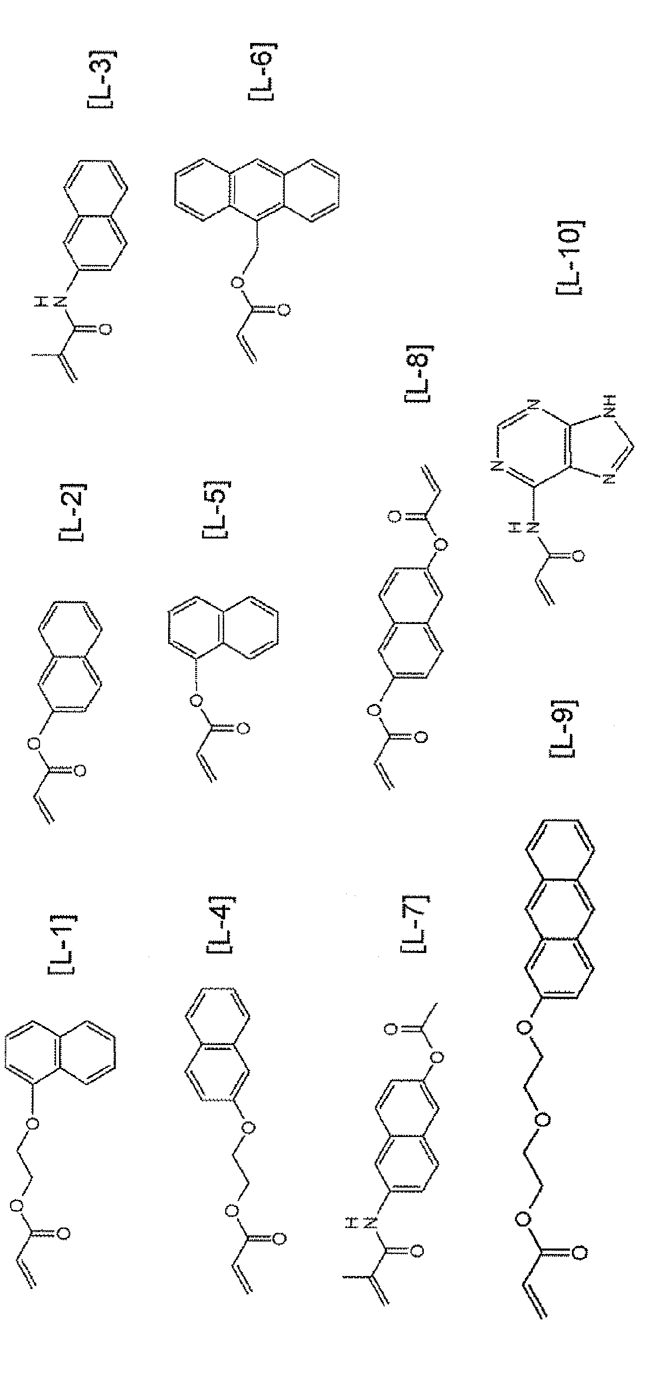

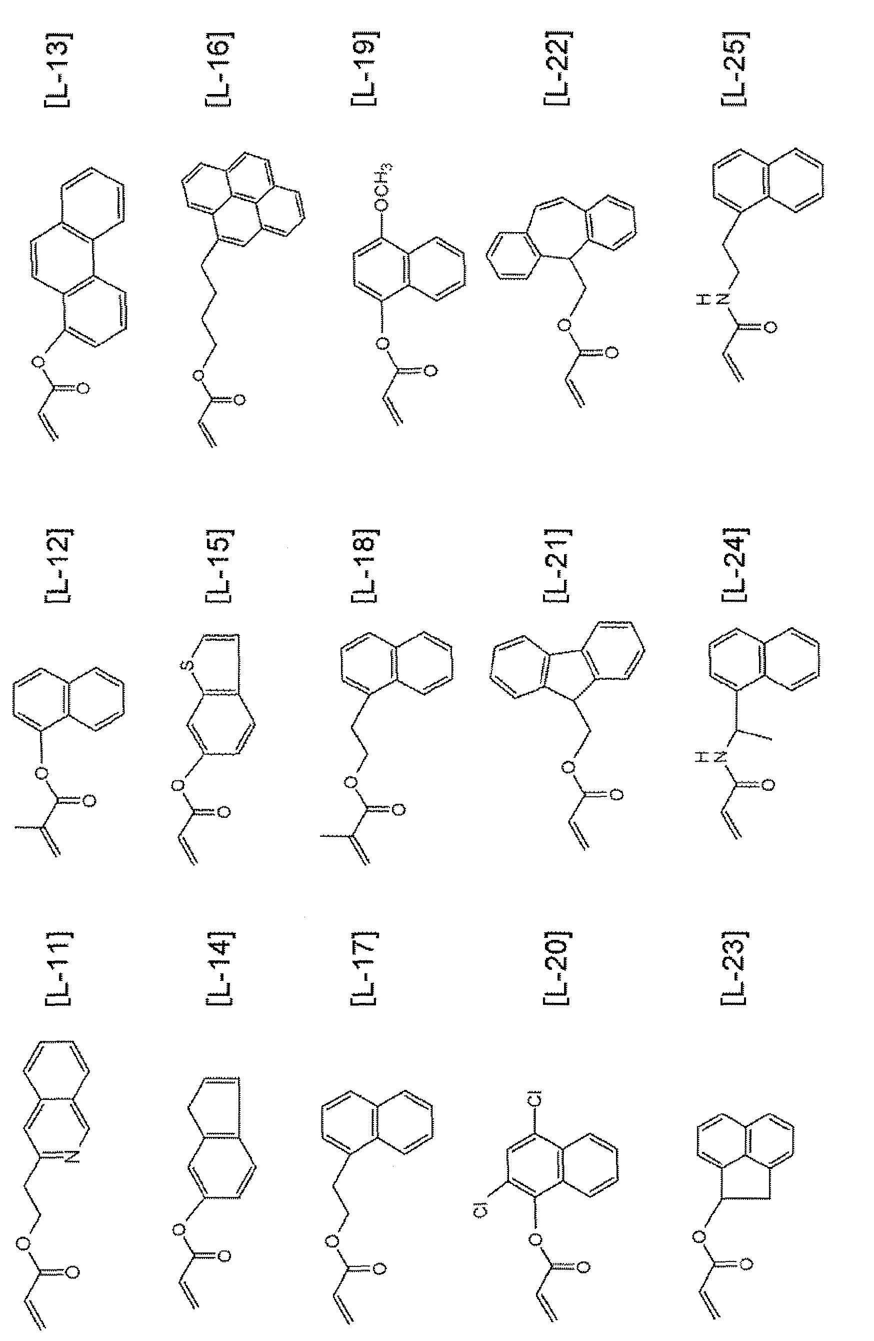

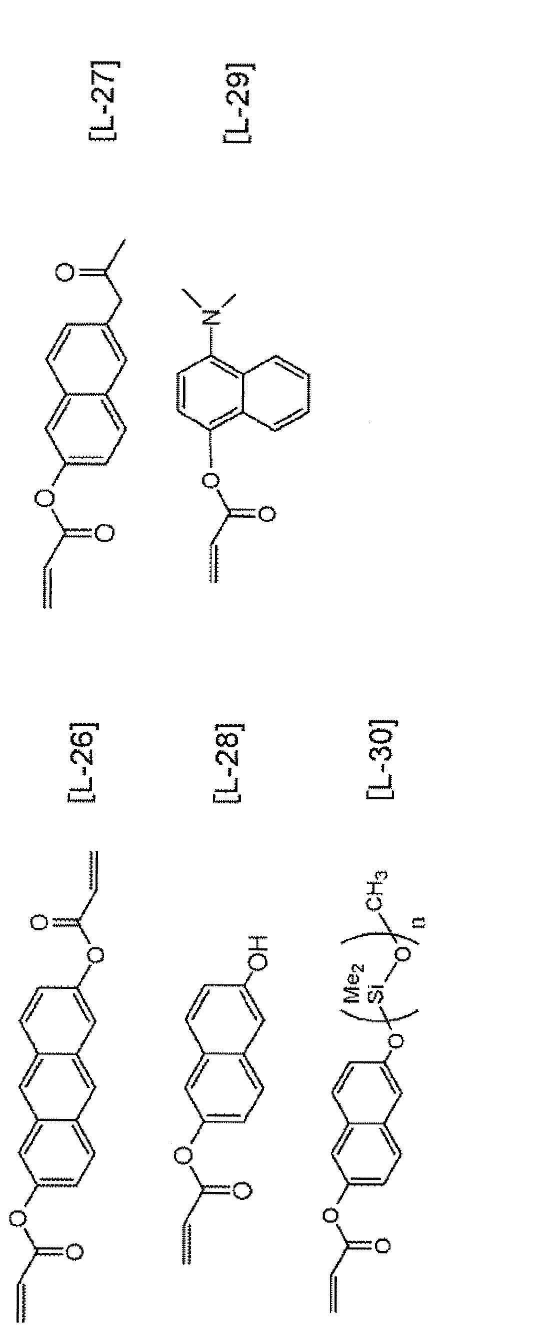

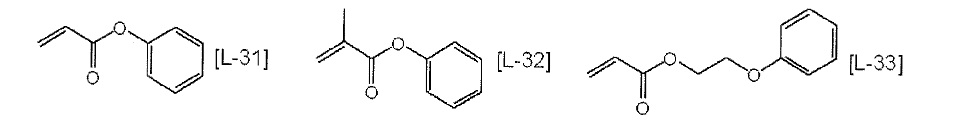

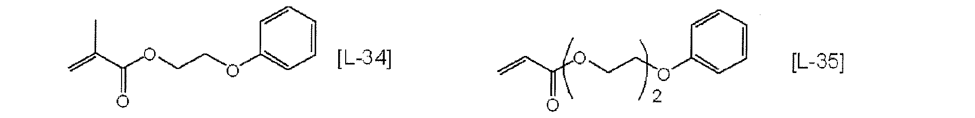

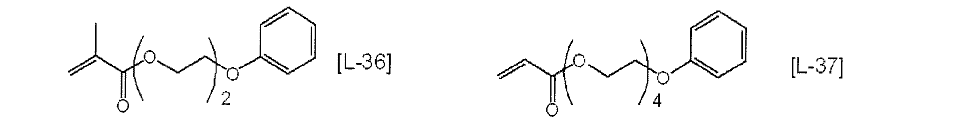

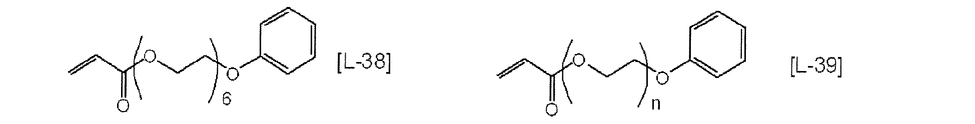

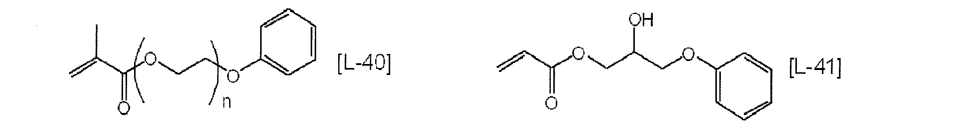

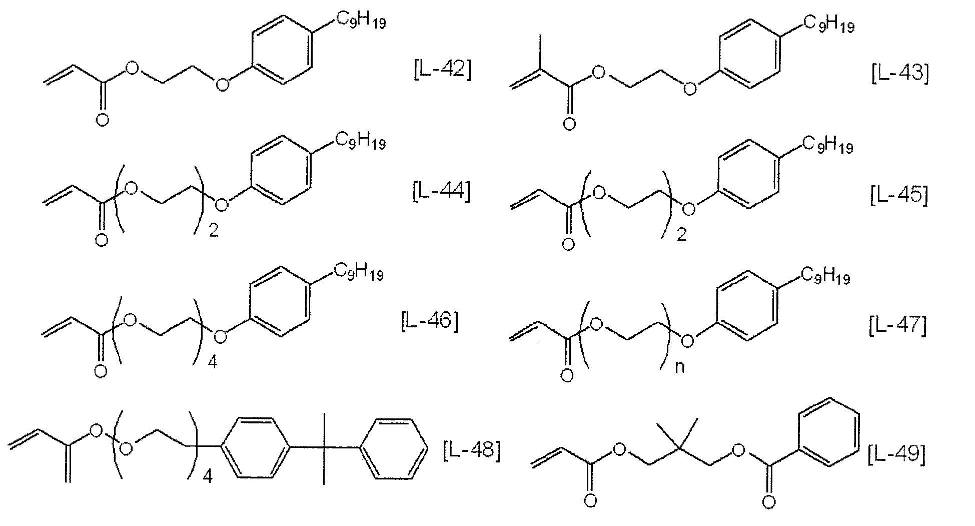

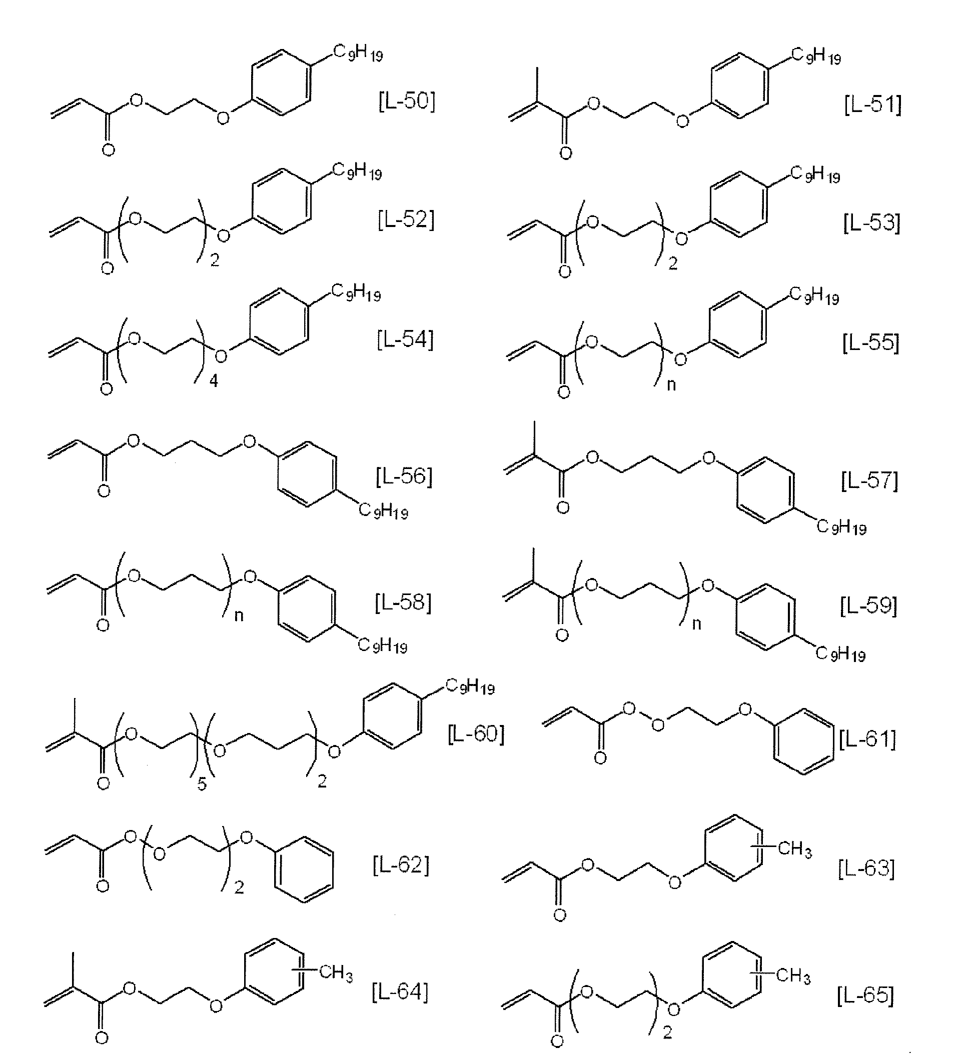

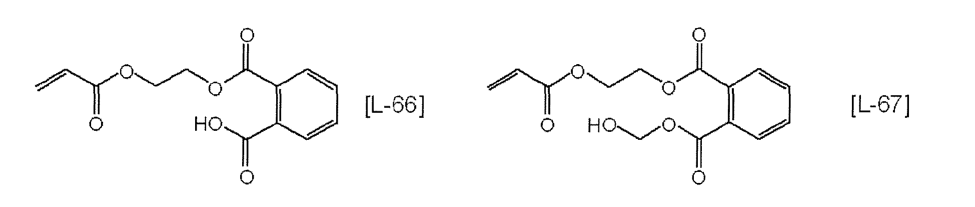

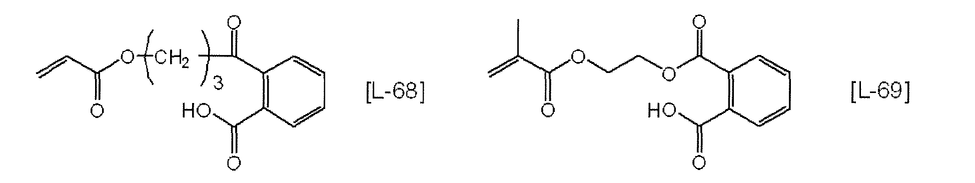

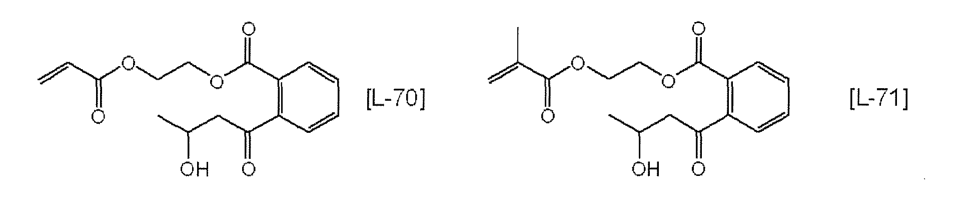

### <Cationic Polymerizable Compound>

A cationic polymerizable compound usable as the polymerizable compound (a) of the present invention is described. The cationic polymerizable compound is a compound that is polymerized or cross-linked by an action of a cationic polymerization initiator activated with irradiation of active radiation rays.

On the cationic polymerizable compound usable in the present invention, there is not any particular limitation as long as the compound starts polymerization and cures by an action of a cationic polymerization initiating species generated from the initiator. Various kinds of conventional cationic polymerizable monomers known as cationic photopolymerizable monomers are usable.
As the cationic polymerizable monomers, for example, epoxy compounds, vinyl ether compounds, and oxetane compounds as disclosed in JP-A Nos. 6-9714, 2001-31892, 2001-40068, 2001-55507, 2001-310938, 2001-310937 and 2001-220526 are exemplified.
Further, as cationic polymerizable compounds, cationic polymer-series photo-curable resins are also known and photo-cationic polymer-series photo-curable resins having been sensitized in visible light wavelength region of 400 nm or more are disclosed in JP-A Nos. 6-43633 and 8-324137 lately.

As the epoxy compounds, aromatic epoxide, alicyclic epoxide, and aliphatic epoxide are exemplified.
As the aromatic epoxide, di- or polyglycidyl ether manufactured by the reaction of polyhydric phenol having at least one aromatic nucleus or alkylene oxide adduct thereof and epichlorohydrin is exemplified. For example, di- or polyglycidyl ether of bisphenol A or alkylene oxide adduct thereof, di- or polyglycidyl ether of hydrogenated bisphenol A or alkylene oxide adduct thereof, and novolak type epoxy resins are exemplified. As the alkylene oxides, ethylene oxide and propylene oxide are exemplified.

As the alicyclic epoxides, cyclohexene oxide or cyclopentene oxidel-containing compounds obtained by epoxydation of compounds having at least one cycloalkane ring such as cyclohexene or cyclopentene ring with an appropriate oxidant such as hydrogen peroxide or peracid are preferably exemplified.
As the aliphatic epoxides, di- or polyglycidyl ethers of aliphatic polyhydric alcohols or alkylene oxide adducts thereof are exemplified. As the representative examples of the aliphatic epoxides, diglycidyl ethers of alkylene glycol such as diglycidyl ether of ethylene glycol, diglycidyl ether of propylene glycol, and diglycidyl ether of 1,6-hexanediol; and diglycidyl ethers of polyalkylene glycol represented by polyglycidyl ether of polyhydric alcohol such as di- or triglycidyl ether of glycerin or alkylene oxide adduct thereof, diglycidyl ether of polyethylene glycol or alkylene oxide adduct thereof, and diglycidyl ether of polypropylene glycol or alkylene oxide adduct thereof are exemplified. As the alkylene oxides, ethylene oxide and propylene oxide are exemplified.

Monofunctional and polyfunctional epoxy compounds for use in the invention will be described in detail below.
As the monofunctional epoxy compounds, e.g., phenyl glycidyl ether, p-tert-butylphenyl glycidyl ether, butyl glycidyl ether, 2-ethylhexyl glycidyl ether, allyl glycidyl ether, 1,2-butylene oxide, 1,3-butadiene monoxide, 1,2-epoxydodecane, epichlorohydrin, 1,2-epoxydecane, styrene oxide, cyclohexene oxide, 3-methacryloyloxymethylcyclohexene oxide, 3-acryloyloxymethylcyclohexene oxide, and 3-vinylcyclohexene oxide are exemplified.

As the polyfunctional epoxy compounds, e.g., bisphenol A diglycidyl ether, bisphenol F diglycidyl ether, bisphenol S diglycidyl ether, brominated bisphenol A diglycidyl ether, brominated bisphenol F diglycidyl ether, brominated bisphenol S diglycidyl ether, epoxy novolak resin, hydrogenated bisphenol A diglycidyl ether, hydrogenated bisphenol F diglycidyl ether, hydrogenated bisphenol S diglycidyl ether, 3,4-epoxycyclohexylmethyl-3',4'-epoxycyclohexane carboxylate, bis(3,4-epoxy-6-methylcyclohexylmethyl) adipate, 3,4-epoxy-6-methylcyclohexyl-3',4'-epoxy-6'-methylcyclohexane carboxylate, methylenebis(3,4-epoxycyclohexane), dicyclopentadiene diepoxide, di(3,4-epoxycyclohexylmethyl) ether of ethylene glycol, ethylenebis(3,4-epoxycyclohexane carboxylate), dioctyl epoxyhexahydrophthalate, di-2-ethylhexyl epoxyhexahydrophthalate, 1,4-butanediol diglycidyl ether, 1,6-hexanediol diglycidyl ether, glycerin triglycidyl ether, trimethylolpropane triglycidyl ether, polyethylene glycol diglycidyl ether, polypropylene glycol diglycidyl ethers, 1,13-tetradecadiene dioxide, limonene dioxide, 1,2,7,8-diepoxyoctane, and 1,2,5,6-diepoxycyclooctane are exemplified.

Of these epoxy compounds, aromatic epoxides and alicyclic epoxides are preferred from the point of being excellent in curing rate, and alicyclic epoxides are especially preferred.

As the vinyl ether compounds, di- or trivinyl ether compounds, e.g., ethylene glycol divinyl ether, diethylene glycol divinyl ether, triethylene glycol divinyl ether, propylene glycol divinyl ether, dipropylene glycol divinyl ether, butanediol divinyl ether, hexanediol divinyl ether, cyclohexanedimethanol divinyl ether, and trimethylolpropane trivinyl ether; and monovinyl ether compounds, e.g., ethyl vinyl ether, n-butyl vinyl ether, isobutyl vinyl ether, octadecyl vinyl ether, cyclohexyl vinyl ether, hydroxybutyl vinyl ether, 2-ethylhexyl vinyl ether, cyclohexanedimethanol monovinyl ether, n-propyl vinyl ether, isopropyl vinyl ether, dodecyl vinyl ether, diethylene glycol monovinyl ether, and octadecyl vinyl ether are exemplified.

Monofunctional vinyl ethers and polyfunctional vinyl ethers are described in detail below.
The examples of monofunctional vinyl ethers include methyl vinyl ether, ethyl vinyl ether, propyl vinyl ether, n-butyl vinyl ether, t-butyl vinyl ether, 2-ethylhexyl vinyl ether, n-nonyl vinyl ether, lauryl vinyl ether, cyclohexyl vinyl ether, cyclohexylmethyl vinyl ether, 4-methylcyclohexylmethyl vinyl ether, benzyl vinyl ether, dicyclopentenyl vinyl ether, 2-dicyclopentenoxyethyl vinyl ether, methoxyethyl vinyl ether, ethoxyethyl vinyl ether, butoxyethyl vinyl ether, methoxyethoxyethyl vinyl ether, ethoxyethoxyethyl vinyl ether, methoxypolyethylene glycol vinyl ether, tetrahydrofurfuryl vinyl ether, 2-hydroxyethyl vinyl ether, 2-hydroxypropyl vinyl ether, 4-hydroxybutyl vinyl ether, 4-hydroxymethyl-cyclohexylmethyl vinyl ether, diethylene glycol monovinyl ether, polyethylene glycol vinyl ether, chloroethyl vinyl ether, chlorobutyl vinyl ether, chloroethoxyethyl vinyl ether, phenylethyl vinyl ether, and phenoxypolyethylene glycol vinyl ether.

As polyfunctional vinyl ethers, divinyl ethers, e.g., ethylene glycol divinyl ether, diethylene glycol divinyl ether, polyethylene glycol divinyl ether, propylene glycol divinyl ether, butylenes glycol divinyl ether, hexanediol divinyl ether, bisphenol A alkylene oxide divinyl ether, and bisphenol F alkylene oxide divinyl ether; polyfunctional vinyl ethers, e.g., trimethylolethane trivinyl ether, trimethylolpropane trivinyl ether, ditrimethylolpropane tetravinyl ether, glycerin trivinyl ether, pentaerythritol tetravinyl ether, dipentaerythritol pentavinyl ether, dipentaerythritol hexavinyl ether, ethylene oxide addition trimethylolpropane trivinyl ether, propylene oxide addition trimethylolpropane trivinyl ether, ethylene oxide addition ditrimethylolpropane tetravinyl ether, propylene oxide addition ditrimethylolpropane tetravinyl ether, ethylene oxide addition pentaerythritol tetravinyl ether, propylene oxide addition pentaerythritol tetravinyl ether, ethylene oxide addition dipentaerythritol hexavinyl ether, and propylene oxide addition dipentaerythritol hexavinyl ether are exemplified.

As the vinyl ether compounds, di- or trivinyl ether compounds are preferred from the viewpoint of a curing property, adhesion to the solid surface of a cured product, and the surface hardness of a cured product, and divinyl ether compounds are especially preferred.

The oxetane compound in the invention means a compound having an oxetane ring, and known oxetane compounds as disclosed in JP-A Nos. 2001-220526, 2001-310937 and 2003-341217 can be arbitrarily selectively used.
The compounds having an oxetane ring that can be used in the invention are preferably compounds having 1 to 4 oxetane rings in the structure are preferred. By the use of such compounds, the viscosity of the ink-jet ink composition can be easily maintained in a good handling range, and also a high adhesion property to the solid surface of an ink-jet ink composition after curing (a cured product) can be obtained.

As the compounds having 1 or 2 oxetane rings in the molecule, the compounds represented by any of the following formulae (1) to (3) are exemplified.

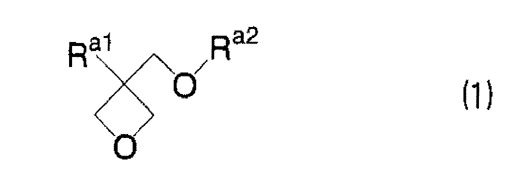

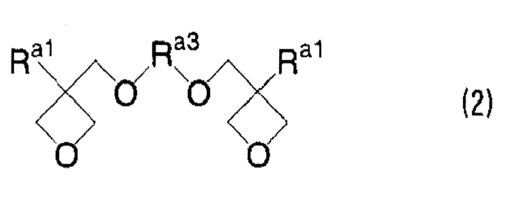

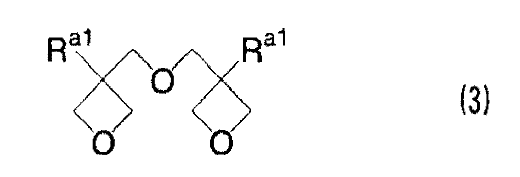

In the above formulae, R^{a1} represents a hydrogen atom, an alkyl group having 1 to 6 carbon atoms, a fluoroalkyl group having 1 to 6 carbon atoms, an allyl group, an aryl group, a furyl group, or a thienyl group. When two R^{a1} are present in the molecule, they may be the same with or different from each other.
As the examples of the alkyl groups, a methyl group, an ethyl group, a propyl group, and a butyl group are exemplified. As the fluoroalkyl groups, any hydrogen atom of these alkyl groups are substituted with a fluorine atom are exemplified.
R^{a2} represents a hydrogen atom, an alkyl group having 1 to 6 carbon atoms, an alkenyl group having 2 to 6 carbon atoms, a group having an aromatic ring, an alkylcarbonyl group having 2 to 6 carbon atoms, an alkoxycarbonyl group having 2 to 6 carbon atoms, or an N-alkylcarbamoyl group having 2 to 6 carbon atoms. As the examples of the alkyl groups, a methyl group, an ethyl group, a propyl group, and a butyl group are exemplified. As the examples of the alkenyl groups, a 1-propenyl group, a 2-propenyl group, a 2-methyl-1-propenyl group, a 2-methyl-2-propenyl group, a 1-butenyl group, a 2-butenyl group, and a 3-butenyl group are exemplified. As the groups having an aromatic ring, a phenyl group, a benzyl group, a fluorobenzyl group, a methoxybenzyl group, and a phenoxyethyl group; as the alkylcarbonyl groups, an ethylcarbonyl group, a propylcarbonyl group, and a butylcarbonyl group; as the alkoxycarbonyl groups, an ethoxycarbonyl group, a propoxycarbonyl group, and a butoxycarbonyl group; and as the N-alkylcarbamoyl groups, an ethylcarbamoyl group, a propylcarbamoyl group, a butylcarbamoyl group, and a pentylcarbamoyl group are exemplified, respectively.

R^{a3} represents a linear or branched alkylene group, a linear or branched poly(alkyleneoxy) group, a linear or branched unsaturated hydrocarbon group, a carbonyl group or an alkylene group containing a carbonyl group, an alkylene group containing a carboxyl group, an alkylene group containing a carbamoyl group, or a group shown below. As the alkylene group, e.g., an ethylene group, a propylene group, or a butylene group is exemplified. As the poly(alkyleneoxy) group, a poly(ethyleneoxy) group or a poly(propyleneoxy) group is exemplified. As the unsaturated hydrocarbon group, a propenylene group, a methylpropenylene group, or a butenylene group is exemplified.

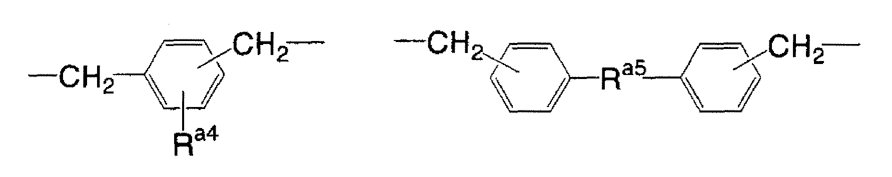

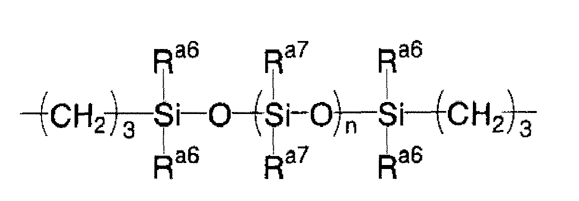

When R^{a3} represents the above polyvalent group, R^{a4} represents a hydrogen atom, an alkyl group having 1 to 4 carbon atoms, an alkoxy group having 1 to 4 carbon atoms, a halogen atom, a nitro group, a cyano group, a mercapto group, a lower alkylcarboxyl group, a carboxyl group, or a carbamoyl group.
R^{a5} represents an oxygen atom, a sulfur atom, a methylene group, NH, SO, SO₂ C(CF₃)₂, or C(CH₃)₂.
R^{a6} represents an alkyl group having 1 to 4 carbon atoms, or an aryl group; n represents an integer of 0 to 2,000.
R^{a7} represents an alkyl group having 1 to 4 carbon atoms, an aryl group, or a monovalent group having the following structure.
In the following formula, R^{a8} represents an alkyl group having 1 to 4 carbon atoms, or an aryl group; and m represents an integer of 0 to 100.

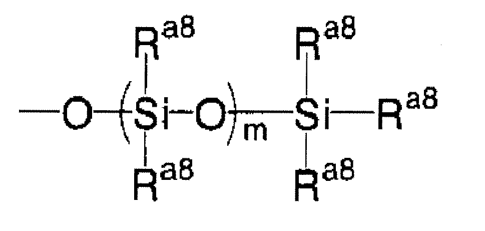

As the compound represented by formula (1), e.g., 3-ethyl-3-hydroxymethyl oxetane (OXT-101, manufactured by TOAGOSEI CO., LTD.), 3-ethyl-3-(2-ethylhexyloxy- methyl) oxetane (OXT-212, manufactured by TOAGOSEI CO., LTD.), 3-ethyl-3-phenoxy- methyl oxetane (OXT-211, manufactured by TOAGOSEI CO., LTD.) are exemplified.
As the compound represented by formula (2), e.g., 1,4-bis[(3-ethyl-3-oxetanyl-methoxy)methyl]benzene (OXT-121, manufactured by TOAGOSEI CO., LTD.) is exemplified.
As the compound represented by formula (3), e.g., bis(3-ethyl-3-oxetanylmethyl) ether (OXT-221, manufactured by TOAGOSEI CO., LTD.) is exemplified.

As the compound having 3 or 4 oxetane rings, a compound represented by the following formula (4) is exemplified.

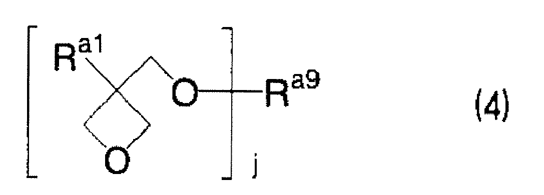

In formula (4), R^{a1} has the same meaning as in formula (1). Further, as the polyvalent linking group R^{a9}, a branched alkylene group represented by any of the following formulae A to C having 1 to 12 carbon atoms, a branched poly(alkyleneoxy) group represented by the following formula D, and a branched polysiloxy group represented by the following formula E are exemplified. J is 3 or 4.

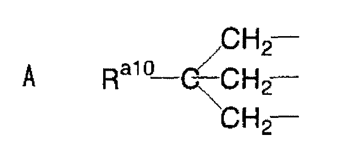

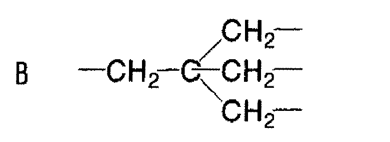

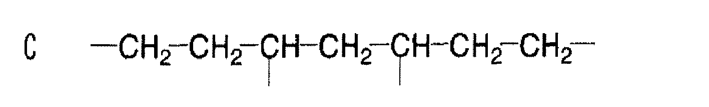

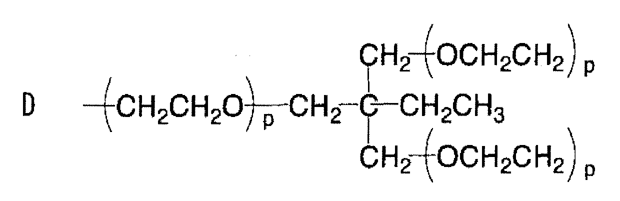

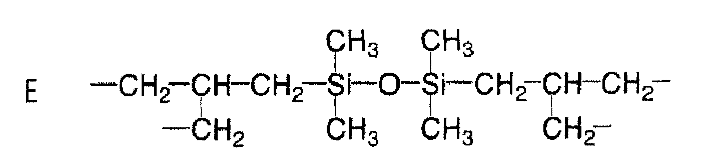

In formula A, R^{a10} represents a methyl group, an ethyl group, or a propyl group. In formula D, p is an integer of 1 to 10.

As another embodiment of the oxetane compound preferably used in the invention, a compound having an oxetane ring in the side chain as represented by the following formula (5) is exemplified.

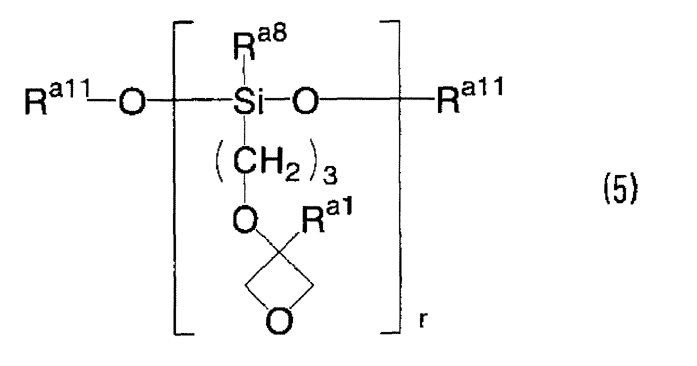

In formula (5), each of R^{a1} and R^{a8} has the same meanings as those in the above formula. R^{a11} represents an alkyl group having 1 to 4 carbon atoms, e.g., a methyl group, an ethyl group, a propyl group, or a butyl group, or a trialkylsilyl group, and r is 1 to 4.

These compounds having an oxetane ring are disclosed in detail in JP-A No. 2003-341217, paragraphs [0021] to [0084], which can be preferably used in the invention. The oxetane compounds disclosed in JP-A No. 2004-91556, paragraphs [0022] to [0058] can also be used in the invention.
Of the oxetane compounds usable in the invention, it is preferred to use those having one oxetane ring in view of the viscosity and adhesion of the ink-jet ink composition.

These cationic polymerizable compounds may be used by one kind alone or two or more compounds may be used in combination in the ink-jet ink composition of the invention, but from the aspect of effectively restraining volume shrinkage of the ink-jet ink composition at the time of curing, it is preferred to use at least one compound selected from oxetane compounds and epoxy compounds in combination with a vinyl ether compound.

In the ink-jet ink composition of the present invention, the content of the polymerizable compound (a) is, when the polymerizable compound is either one of a radical polymerizable compound or a cationic polymerizable compound, appropriately from 10% to 95% by mass, preferably from 30% to 90% by mass, and more preferably from 50% to 85% by mass, with respect to the total solid content of the composition.
When the radical polymerizable compound and the cationic polymerizable compound are used in combination, the total amount thereof is in the range of appropriately from 10% to 95% by mass, preferably from 30% to 90% by mass, and more preferably from 50% to 85% by mass, with respect to the total solid content of the composition. Regarding the relation between the radical polymerizable compound and the cationic polymerizable compound, these compounds are involved preferably in an amount of from 200:1 to 1:200, preferably 50:1 to 1:50, and more preferably from 20:1 to 1:5 in terms of the mass ratio of the radical polymerizable compound to the cationic polymerizable compound.

### <(b) Photopolymerization Initiator>

The ink-jet ink composition of the present invention contains (b) a photopolymerization initiator. In the present invention, as the photopolymerization initiator, known polymerization initiators are usable.

Preferable polymerization initiators usable in the present invention may include: (a) aromatic ketones, (b) an acylphosphine compound, (c) an aromatic onium salt compound, (d) an organic peroxide, (e) a thio compound, (f) a hexaarylbiimidazole compound, (g) a keto oxime ester compound, (h) a borate compound, (i) an azinium compound, (j) a metallocene compound, (k) an active ester compound, and (1) a compound having a carbon to halogen bond. Examples of the polymerization initiators may include polymerization initiators as described in the paragraphs of from [0135] to [0208] of JP-A No. 2006-085049. The polymerization initiators as described above may be used one kind solely or two or more kinds in combination.

In consideration of the specific sensitizer used in the present invention, a preferably usable polymerization initiator may include the one that is selected from the group consisting of a compound having a carbon to halogen bond, a keto oxime ester compound, α-amino ketones, and acrylphosphine oxides, when a radical polymerizable compound is used as the polymerizable compound. Among these, the compound having a carbon to halogen bond is preferable.
Further, as an initiator that is used in combination with the compound having a carbon to halogen bond, an acylphosphine compound having photo-discoloration property and a keto oxime ester compound are preferable.
When a cationic polymerizable compound is used as the polymerizable compound, an aromatic onium salt compound is preferably used.

The lowest excited triplet energy of the photopolymerization initiator is preferably lower than the lowest triplet energy of the sensitizer. A photopolymerization initiator having 280 kJ/mol or less of the lowest excited triplet energy is preferable. Note that, the lowest excited triplet energy is calculated from a phosphorescence spectrum by using the method described later.

As the compound having a carbon to halogen bond, there may be mentioned a trihalomethylazine compound, and examples thereof may include a compound as described in JP-A Nos. 8-269049 and 2005-503545, a non-patent document of J. Am. Chem. Soc., Vol. 121, p.6167-6175(1999), and others.
Specific examples of the trihalomethylazine compound are described below, but the present invention is in no way limited to these examples.

The specific examples may include 2-phenyl-4,6-bis(trichloromethyl)-s-triazine, 2-(p-chlorophenyl)-4,6-bis(trichloromethyl)-s-triazine, 2-(p-tolyl)-4,6-bis(trichloromethyl)-s-triazine, 2-(p-methoxyphenyl)-4,6-bis(trichloromethyl)-s-triazine, 2-(2',4'-dichlorophenyl)-4,6-bis(trichloromethyl)-s-triazine, 2,4,6-tris(trichloromethyl)-s-triazine, 2-methyl-4,6-bis(trichloromethyl)-s-triazine, 2-n-nonyl-4,6-bis(trichloromethyl)-s-triazine, and 2-(α,α,β-trichloroethyl)-4,6-bis(trichloromethyl)-s-triazine, which are described by Wakabayashi et al. in Bull. Chem. Soc. Japan, Vol. 42, p.2924(1969).

Besides the above compounds, the specific examples may be included a compound as described in GB Patent No. 1,388,492, for example, 2-styryl-4,6-bis(trichloromethyl)-s-triazine, 2-(p-methylstyryl)-4,6-bis(trichloromethyl)-s-triazine, 2-(p-methoxystyryl)-4,6-bis(trichloromethyl)-s-triazine, 2-(p-methoxystyryl)-4-amino-6-trichloromethyl-s-triazine, and others; the compound as described in JP-A No. 53-133428, for example, 2-(4-methoxy-naphtho-1-yl)-4,6-bis-trichloromethyl-s-triazine, 2-(4-ethoxy-naphtho-1-yl)-4,6-bis-trichloromethyl-s-triazine, 2-[4-(2-ethoxyethyl)-naphtho-1-yl]-4,6-bis-trichloromethyl-s-triazine, 2-(4,7-dimethoxy-naphtho-1-yl)-4,6-bis-trichloromethyl-s-triazine), 2-(acenaphtho-5-yl)-4,6-bis-trichloromethyl-s-triazine, and others; and the compounds as described in DE Patent No. 3,337,024, for example, the following compounds.

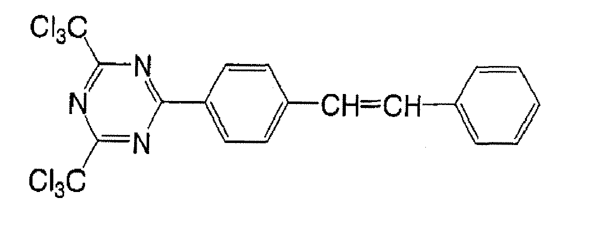

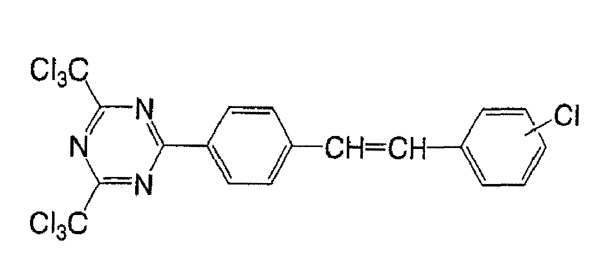

Further, the specific examples may be included a compound as described by F. C. Schaefer et al. in J. Org. Chem., Vol. 29, p.1527(1964), for example, 2-methyl-4,6-bis(tribromomethyl)-s-triazine, 2,4,6-tris(tribromomethyl)-s-triazine, 2,4,6-tris(dibromomethyl)-s-triazine, 2-amino-4-methyl-6-tribromomethyl-s-triazine, 2-methoxy-4-methyl-6-trichloromethyl-s-triazine, and others. Still further, for example, the following compounds and others as described in JP-A No. 62-58241 may be included.

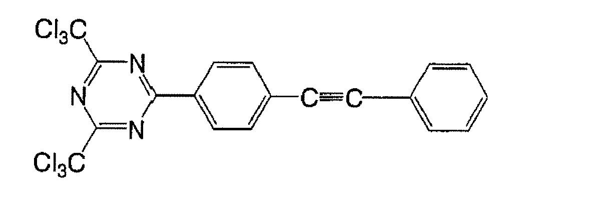

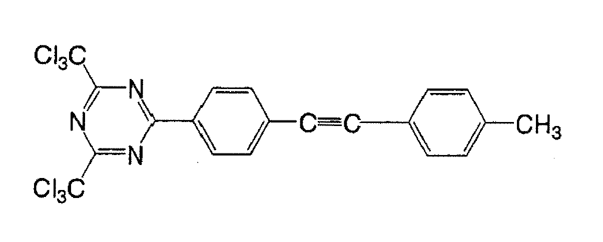

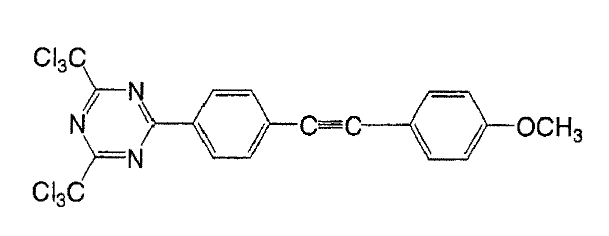

Still further, for example, the following compounds and others as described in JP-A No. 5-281728 may be included.

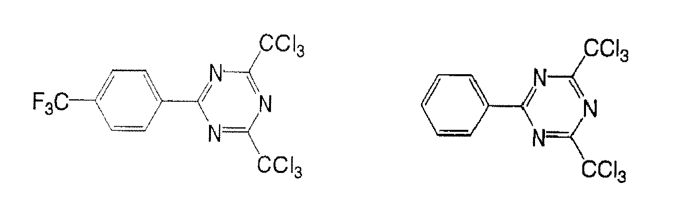

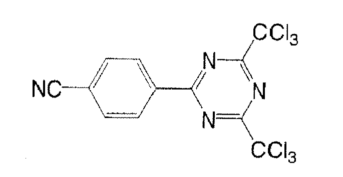

Still further, the specific examples may be included a group of compounds that is easily synthesized by practitioners in the art in accordance with the synthesis process as described in "Journal of Heterocyclic Chemistry", Vol. 7 (No. 3), p. 511 and later (1970) written by M. P. Hutt, E. F. Elslager, and L. M., Herbel, for example, the following compounds and others.

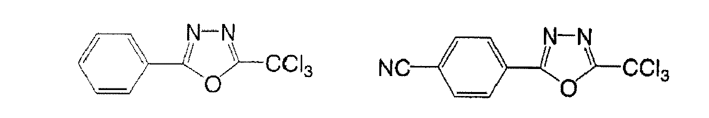

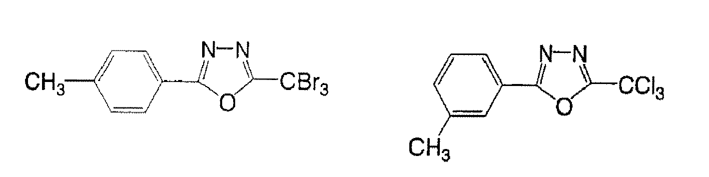

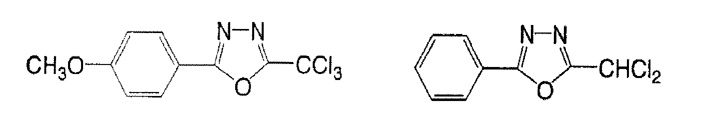

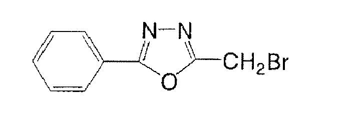

Examples of the keto oxime ester compound may include a compound as described in JP-A Nos. 2007-23100, 2007-322744, 2006-516246, 2001- 233842, 2004-534797, 2005-097141 and 2006-342166, and a non-patent document of Journal of Photochemistry and Photobiology A, Vol. 151, p.27-37(2002). Specific examples of the keto oxime ester compound are described below, but the present invention is in no way limited to these examples. Note that, in the exemplary compounds, Me represents methyl group, Et represents ethyl group, Ac represents acetyl group and Ph represents phenyl group.

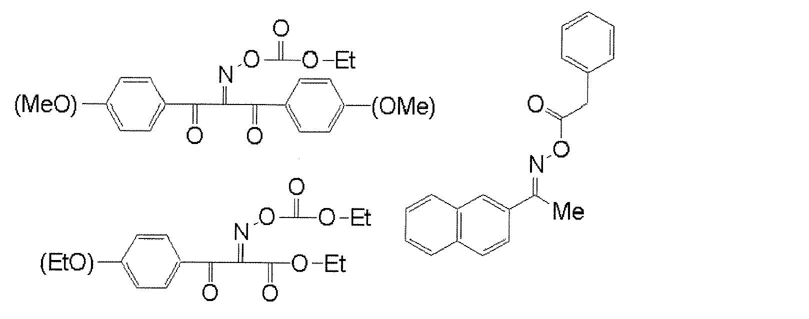

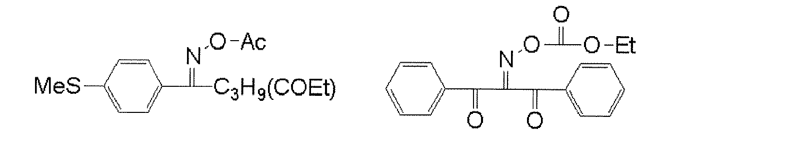

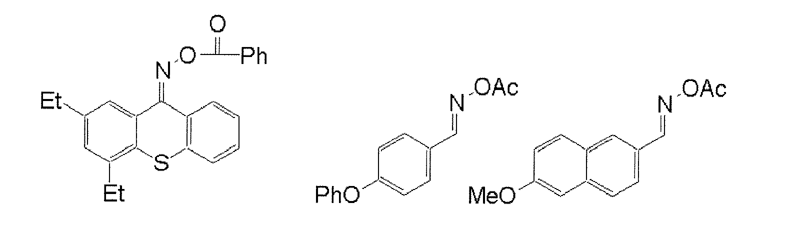

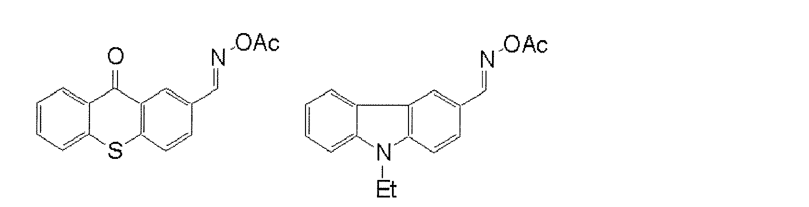

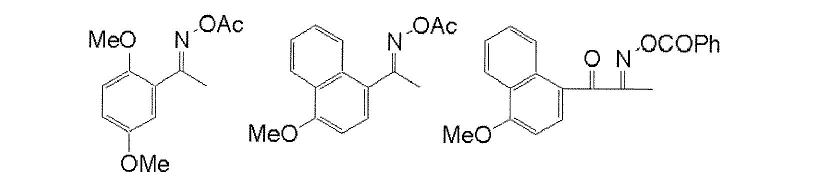

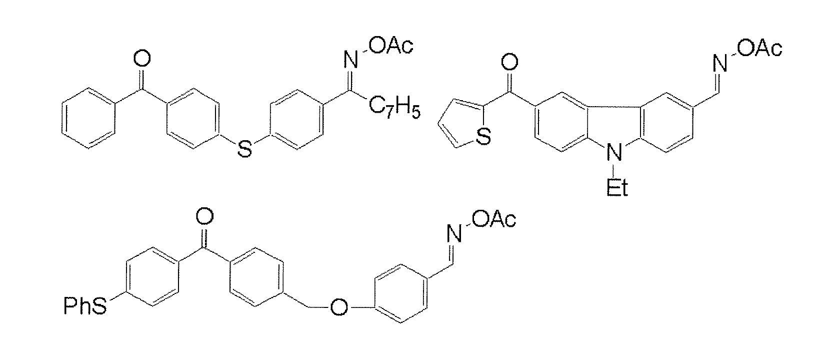

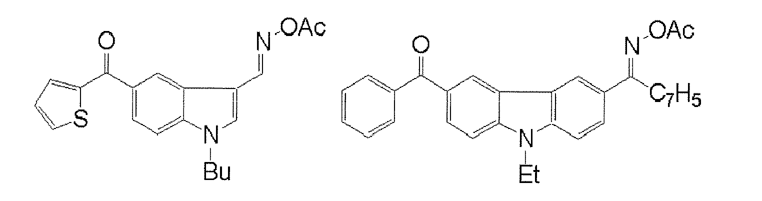

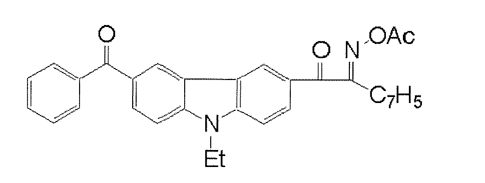

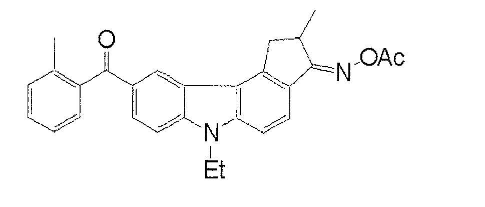

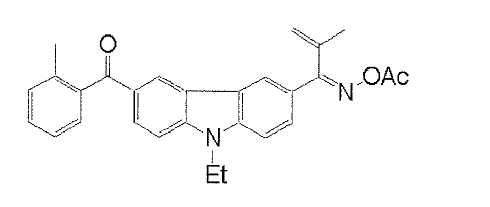

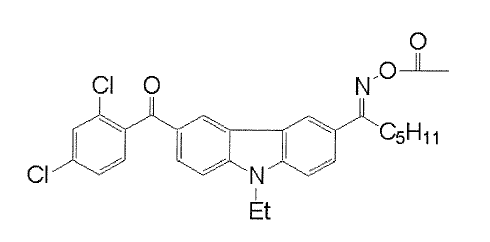

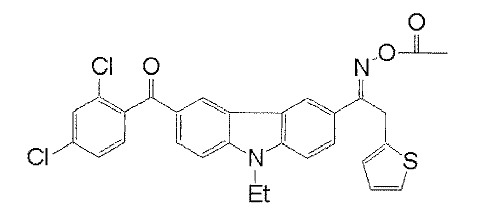

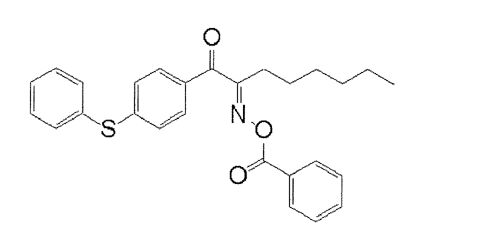

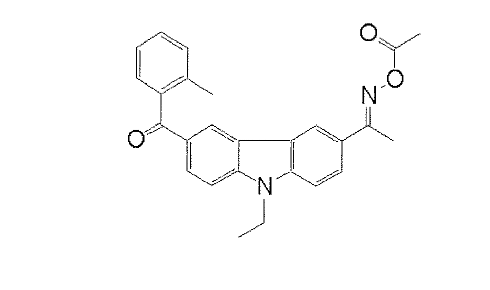

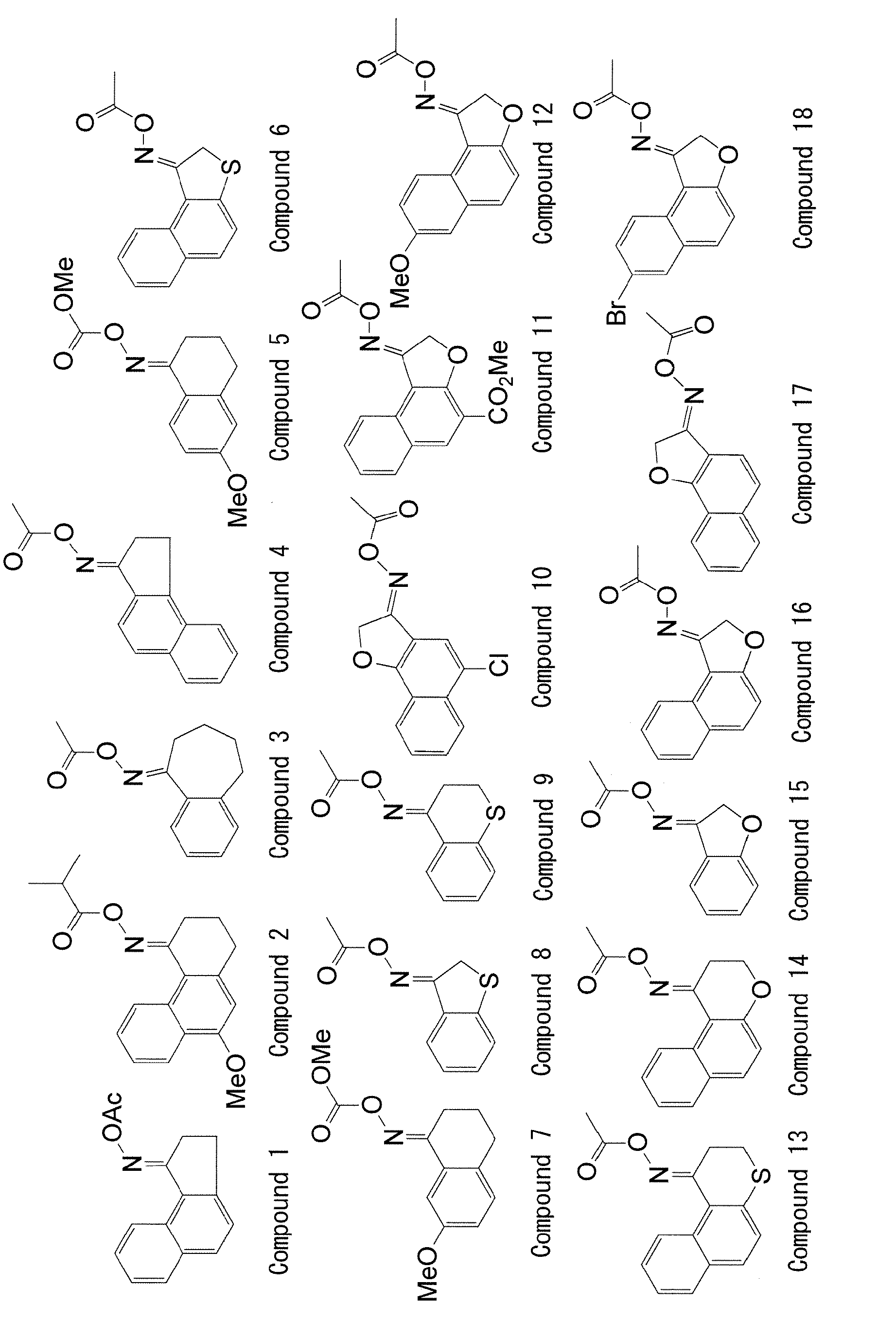

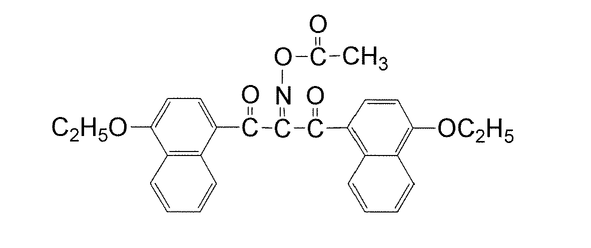

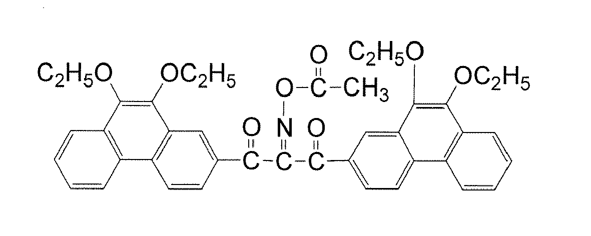

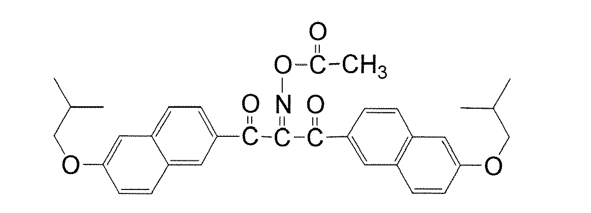

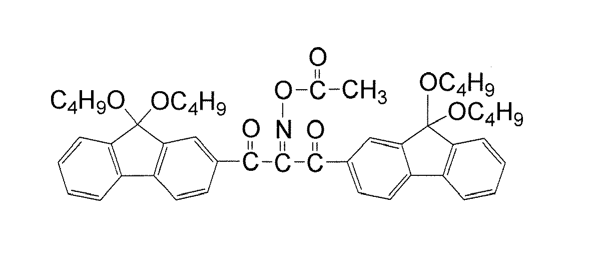

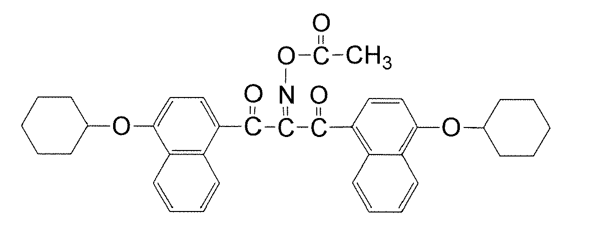

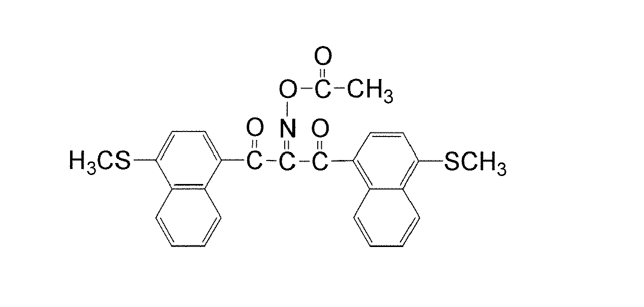

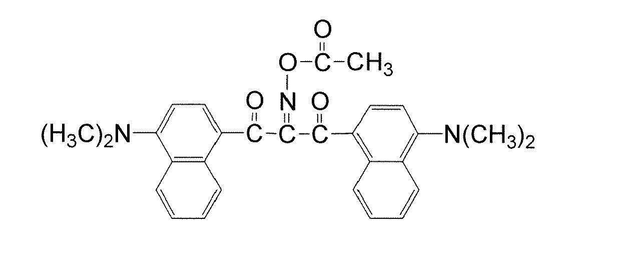

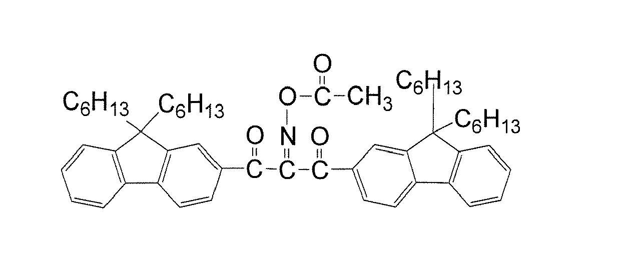

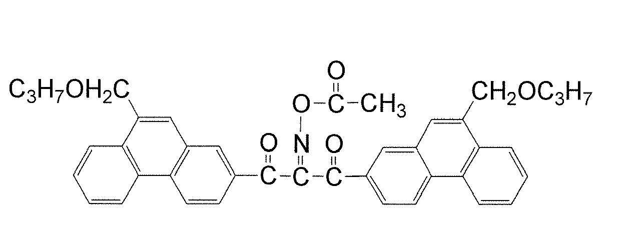

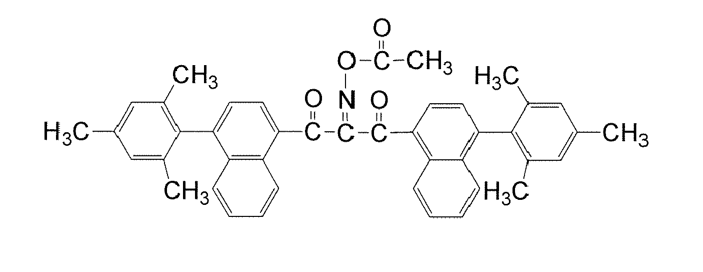

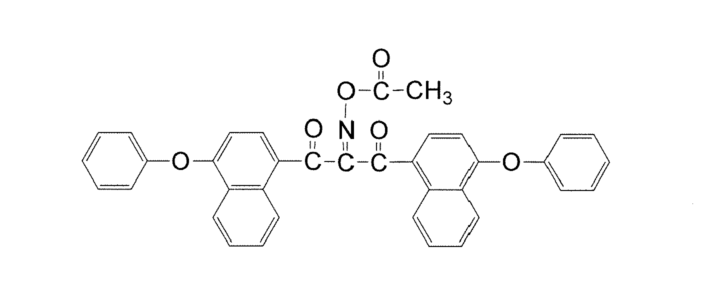

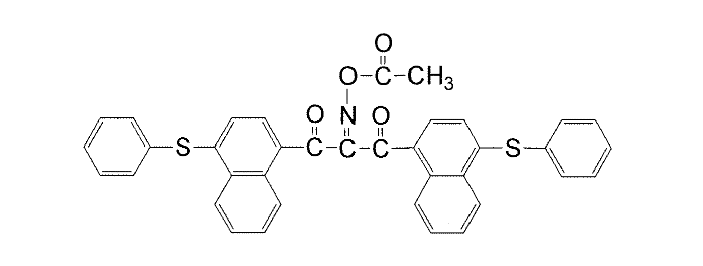

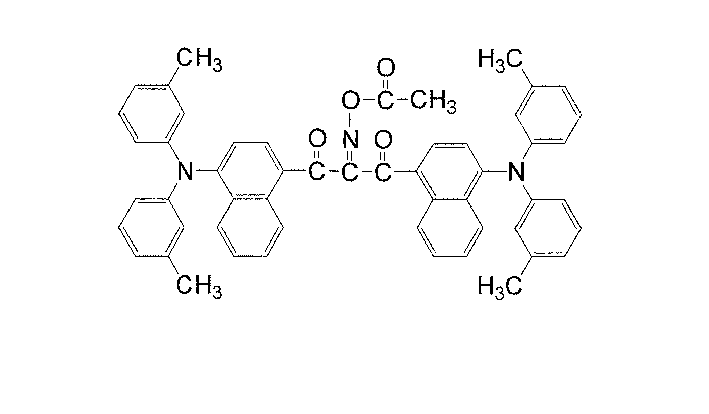

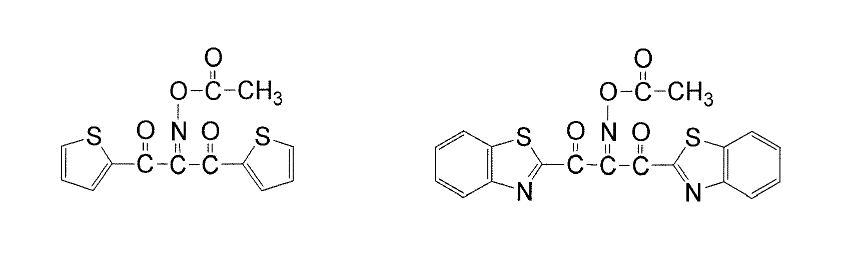

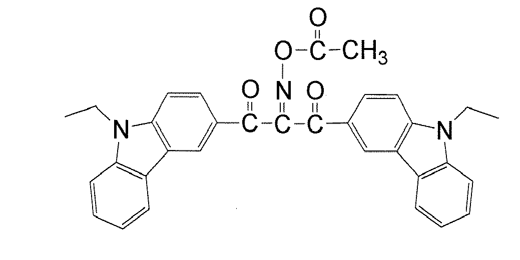

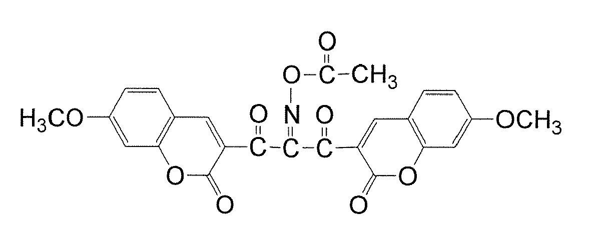

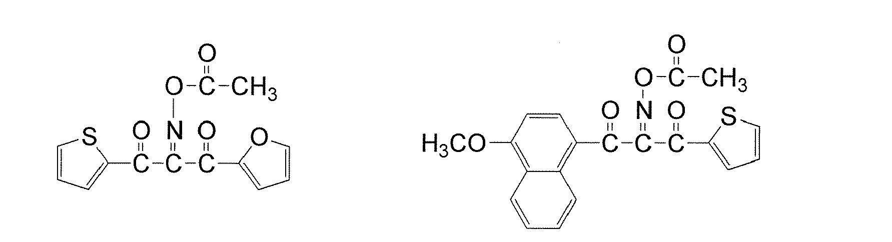

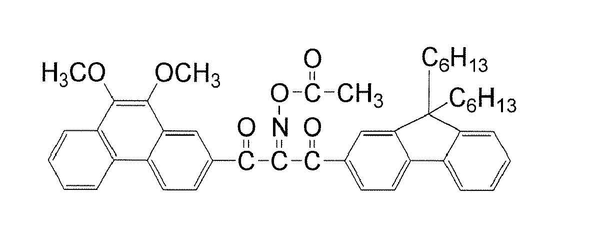

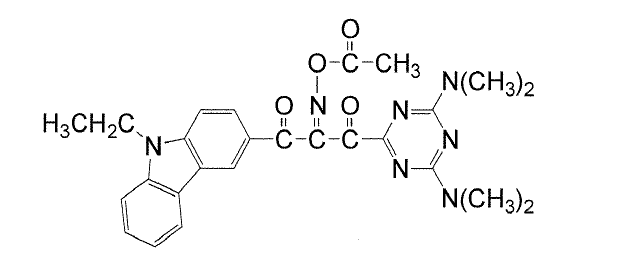

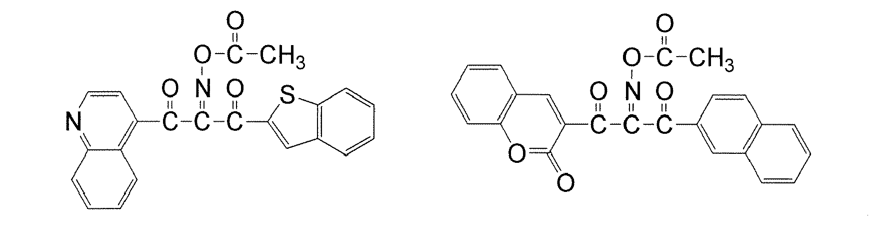

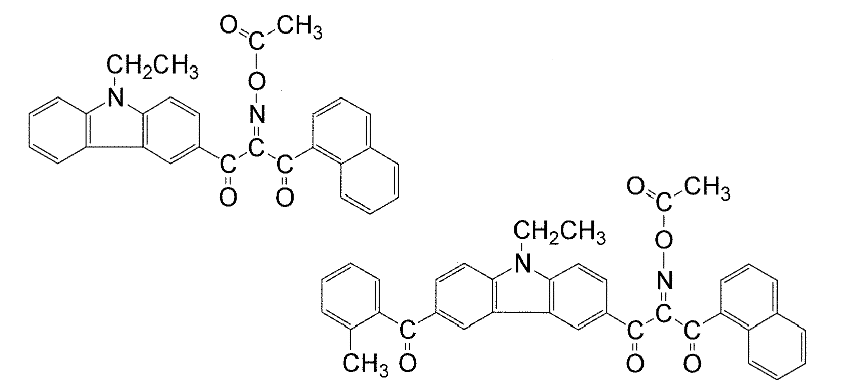

Examples of α-amino ketones may include
2-methyl-1-phenyl-2-morpholinopropan-1-one,
2-metyl-1-[4-(hexyl)phenyl]-2-morpholinopropan-1-one, and
2-ethyl-2-dimethylamino-1-(4-morpholinophenyl)-butanone-1. In addition, IRGACURE series (trade name, manufactured by Ciba-Geigy Ltd.), for example, IRGACURE 907, IRGACURE 369, IRGACURE 379, and others are available in the market, which are included in the α-amino ketones and are preferably usable in the present invention.

The acylphosphine oxide compound may include, for example, a compound as described in Japanese Patent Publication (JP-B) No. 63-40799, JP-B No. 5-29234, and JP-A Nos. 10-95788 and 10-29997. Examples of the acrylphosphine oxides may include IRGACURE series and DAROCURE series (trade names, manufactured by Ciba-Geigy Ltd.), for example, IRGACURE 819, IRGACURE 1800, IRGACURE 1870, DAROCURE TPO, and others, which are available in the market and are preferably usable in the present invention.

Preferable examples of the aromatic onium salt may include an aromatic halonium salt as described in JP-A Nos. 50-151997 and 50-158680; a Group VIA aromatic onium salt as described in JP-A Nos. 50-151997, 52-30899, 56-55420 and 55-125105, and others; a Group VA aromatic onium salt as described in JP-A 50-158698; an oxosulfoxonium salt as described in JP-A Nos. 56-8428, 56-149402 and 57-192429; an aromatic diazonium salt as described in JP-A No. 49-17040; and a thiopyrylium salt as described in US Patent No. 4,139,655. In addition, the other preferable ones may include an iron and allene complex and an initiator based on an aluminum complex and photo-decomposing silicon compound.

Examples of the aromatic onium salt may include
4,4'-bis(di(β-hydroxyethoxy)phenylsulfonio)phenylsulfide-bis-hexafluorophosphate,
4-(4-benzoyl-phenylthio)phenyl-di-(4-fluorophenyl)sulfonium hexafluorophosphate,
4,4'-bis(di(β-hydroxyethoxy)phenylsulfonio)phenylsulfide-bis-hexafluorophosphate,
4,4'-bis(di(β-hydroxyethoxy)phenylsulfonio)phenylsulfide-bis-hexafluoroantimonate,
4,4'-bis(difluorophenylsulfonio)phenylsulfide-bis-hexafluorophosphate,
4,4'-bis(difluorophenylsulfonio)phenylsulfide-bis-hexafluoroantimonate,
4,4'-bis(phenylsulfonio)phenylsulfide-bis-hexafluorophosphate,
4,4'-bis(phenylsulfonio)phenylsulfide-bis-hexafluoroantimonate,
4-(4-benzoylphenylthio)phenyl-di-(4-(β-hydroxyethoxy)phenyl)sulfoniumhexafluoro phosphate,
4-(4-benzoylphenylthio)phenyl-di-(4-(β-hydroxyethoxy)phenyl)sulfoniumhexafluoro antimonate,
4-(4-benzoylphenylthio)phenyl-di-(4-fluorophenyl)sulfoniumhexafluorophosphate,
4-(4-benzoylphenylthio)phenyl-di-(4-fluorophenyl)sulfoniumhexafluoroantimonate,
4-(4-benzoylphenylthio)phenyl-diphenylsulfoniumhexafluorophosphate,
4-(4-benzoylphenylthio)phenyl-diphenylsulfoniumhexafluoroantimonate,
4-(phenylthio)phenyl-di-(4-(β-hydroxyethoxy)phenyl)sulfoniumhexafluorophosphate,
4-(phenylthio)phenyl-di-(4-(β-hydroxyethoxy)phenyl)sulfoniumhexafluoroantimonate,
4-(phenylthio)phenyl-di-(4-fluorophenyl)sulfoniumhexafluorophosphate,
4-(phenylthio)phenyl-di-(4-fluorophenyl)sulfoniumhexafluoroantimonate,
4-(phenylthio)phenyl-diphenylsulfoniumhexafluorophosphate,
4-(phenylthio)phenyl-diphenylsulfoniumhexafluoroantimonate,

4-(2-chloro-4-benzoylphenylthio)phenylbis(4-fluorophenyl) sulfoniumhexafluorophosphate,
4-(2-chloro-4-benzoylphenylthio)phenylbis(4-fluorophenyl) sulfoniumhexafluoroantimonate,
4-(2-chloro-4-benzoylphenylthio)phenydiphenylsulfoniumhexafluorophosphate,
4-(2-chloro-4-benzoylphenylthio)phenydiphenylsulfoniumhexafluoroantimonate,
4-(2-chloro-4-benzoylphenylthio)phenylbis(4-hydroxyphenyl) sulfoniumhexafluorophosphate,
4-(2-chloro-4-benzoylphenylthio)phenylbis(4-hydroxyphenyl) sulfoniumhexafluoroantimonate,
triphenylsulfoniumhexafluorophosphate, triphenylsulfoniumhexafluoroantimonate,
(tolylcumyl)iodoniumhexafluorophosphate, (tolylcumyl)iodoniumhexafluoroantimonate,
(tolylcumyl)iodoniumtetrakis(pentafluorophenyl)borate,
bis(tertiarybutylphenyl)iodonimuhexafluorophosphate,
bis(tertiarybutylphenyl)iodonimuhexafluoroantimonate,
bis(tertiarybutylphenyl)iodonimutetrakis(pentafluorophenyl)borate,
benzyl-4-hydroxyphenylmethylsulfoniumhexafluorophosphate,
benzyl-4-hydroxyphenylmethylsulfoniumhexafluoroantimonate,
benzyldimethylsulfoniumhexafluorophosphate,
benzyldimethylsulfoniumhexafluoroantimonate,
p-chlorobenzyl-4-hydroxyphenylmethylsulfoniumhexafluorophosphate,
p-chlorobenzyl-4-hydroxyphenylmethylsulfoniumhexafluoroantimonate,
4-acetoxyphenyldimethylsulfoniumhexafluorophosphate,
4-acetoxyphenyldimethylsulfoniumhexafluoroantimonate,
4-methoxycarbonyloxyphenyldimethylsulfoniumhexafluorophosphate,
4-methoxycarbonyloxyphenyldimethylsulfoniumhexafluoroantimonate,
4-ethoxycarbonyloxyphenyldimethylsulfoniumhexafluorophosphate,
4-ethoxycarbonyloxyphenyldimethylsulfoniumhexafluoroantimonate,

α-naphthylmethyldimethylsulfoniumhexafluorophosphate,
α -naphthylmethyldimethylsulfoniumhexafluoroantimonate,
α -naphthylmethyltetramethylenesulfoniumhexafluorophosphate,
α -naphthylmethyltetramethylenesulfoniumhexafluoroantimonate,
cinnamyldimethylsulfoniumhexafluorophosphate,
cinnamyldimethylsulfoniumhexafluoroantimonate,
cinnamyltetramethylenesulfoniumhexafluorophosphate,
cinnamyltetramethylenesulfoniumhexafluoroantimonate,
N-(α-phenylbenzyl)-2-cyanopyridiniumhexafluorophosphate,
N-(α-phenylbenzyl)-2-cyanopyridiniumhexafluoroantimonate,
N-cinnamyl-2-cyanopyridiniumhexafluorophosphate,
N-cinnamyl-2-cyanopyridiniumhexafluoroantimonate,
N-(α-naphthylmethyl)-2-cyanopyridiniumhexafluorophosphate,
N-(α-naphthylmethyl)-2-cyanopyridiniumhexafluoroantimonate,
N-benzyl-2-cyanopyridiniumhexafluorophosphate, and
N-benzyl-2-cyanopyridiniumhexafluoroantimonate.

The content of the photopolymerization initiator in the ink-jet ink composition of the present invention is preferably in the range of from 0.1 % to 30% by mass in terms of a solid content, preferably from 1.0% to 20% by mass, and more preferably from 3.0% to 15.0% by mass.

The content of the photopolymerization initiator (b) in the ink-jet ink composition of the present invention is in the range of preferably from 0.01 part to 35 parts by mass, more preferably from 0.1 part to 30 parts by mass, and more preferably from 0.5 part to 20 parts by mass, with respect to 100 parts by mass of the polymerizable compound (a). Note that, the content of the photopolymerization initiator means the total content of photopolymerization initiators including the polymerization initiator described above and the other polymerization initiators usable in combination.

### <Sensitizer>

The ink-jet ink composition of the present invention contains a sensitizer so as to promote decomposition of the photopolymerization initiator by active ray irradiation. The sensitizer contains as an essential component a specific sensitizer that is described in detail below.
Generally, a sensitizer absorbs a specific active radiation ray and turns into an electron excited state. The sensitizer in the electron excited state makes contact with the photopolymerization initiator and brings about interactions including electron transfer, energy transfer, and heat generation, so that the photopolymerization initiator is promoted to have chemical changes, namely, decomposition or generation of active species including radicals, acids, and bases. These active species thus generated bring about or promote polymerization or curing reaction of a polymerizable compound that is described later.

As the sensitizer, a compound that corresponds to a wavelength of an active radiation ray that makes the photopolymerization initiator used in the ink-jet ink composition to generate initiating species may be used, but considering that the sensitizer is used for the curing reaction of conventional ink-jet ink compositions, preferable examples of the sensitizer may include the one that has an absorption wavelength in the range of from 350 nm to 450 nm The ink-jet ink composition of the present invention is required to contain at least one kind of specific sensitizers belonging to the following compounds. ((c) Sensitizer Represented by Formula (i))

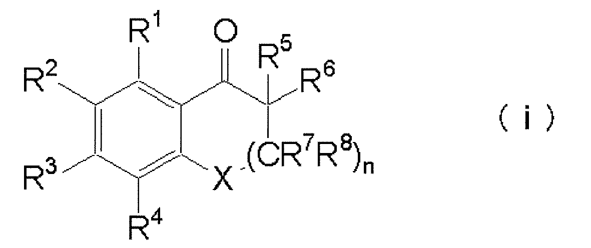

In formula (i), X represents O, S, or NR; R represents hydrogen atom, an alkyl group, or an acyl group, preferably an alkyl group or acryl group; and n is 0 or 1. X is preferably O or S and more preferably S. When n is 0, the carbon atom that directly links to R⁷ and R⁸ does not exist, and X that contains a hetero atom directly links to the carbon atom that links to R⁵ and R⁶ to form an X-containing 5-membered hetero ring.

Each of R¹, R², R³, R⁴, R⁵, R⁶, R⁷ and R⁸ independently represents a hydrogen atom or a monovalent substituent.
As the examples of the monovalent substituents when each of R¹, R², R³, R⁴, R⁵, R⁶, R⁷ and R⁸ represents a monovalent substituent, a halogen atom, an aliphatic group, an aromatic group, a heterocyclic group, a cyano group, a hydroxyl group, a nitro group, an amino group, an alkylamino group, an alkoxy group, an aryloxy group, an amido group, an arylamino group, a ureido group, a sulfamoylamino group, an alkylthio group, an arylthio group, an alkoxycarbonylamino group, a sulfonamide group, a carbamoyl group, a sulfamoyl group, a sulfonyl group, an alkoxycarbonyl group, a heterocyclic oxy group, an azo group, an acyloxy group, a carbamoyloxy group, a silyloxy group, an aryloxycarbonyl group, an aryloxycarbonylamino group, an imido group, a heterocyclic thio group, a sulfinyl group, a phosphoryl group, an acyl group, a carboxyl group, and a sulfo group are exemplified. Of these groups, an alkyl group, an alkoxy group and a halogen atom are preferred, and an alkyl group and a halogen atom are more preferred.

When each of R¹, R², R³, R⁴, R⁵, R⁶, R⁷ and R⁸ in formula (i) represents a monovalent substituent, as alkyl groups, alkyl groups having 1 to 10 carbon atoms are preferred, and alkyl groups having 1 to 4 carbon atoms, e.g., a methyl group, an ethyl group, a propyl group, an n-butyl group, a sec-butyl group, and a t-butyl group are more preferred.
Similarly as alkoxy groups, alkoxy groups having 1 to 4 carbon atoms, e.g., a methoxy group, an ethoxy group, a hydroxyethoxy group, a propoxy group, an n-butoxy group, an isobutoxy group, a sec-butoxy group, and a t-butoxy are preferably exemplified.
As halogen atoms, a fluorine atom, a chlorine atom, a bromine atom, and an iodine atom can be exemplified.

Contiguous two of R¹, R², R³ and R⁴ may be linked, e.g., condensed, to each other to form a ring.
As the ring structures to be formed, 5- or 6-membered aliphatic rings and aromatic rings are exemplified. These rings may be heterocyclic rings containing elements other than a carbon atom, and formed rings may further form a binuclear ring, e.g., a condensed ring by combination. These ring structures may further have substituents such as the substituents exemplified in the case where each of R¹, R², R³, R⁴, R⁵, R⁶, R⁷ and R⁸ in formula (i) represents a monovalent substituent. As the examples of the hetero atoms in the case where the formed ring structures are heterocyclic rings, N, O and S are exemplified.

When n represents 1, R⁵ or R⁶ and R⁷ or R⁸ may be linked to each other to form an aliphatic ring, but they do not form an aromatic ring. The aliphatic ring to be formed is preferably any of a 3- to 6-membered ring, and more preferably a 5- or 6-membered ring.

The sensitizing colorant is more preferably represented by the following formula (iA).

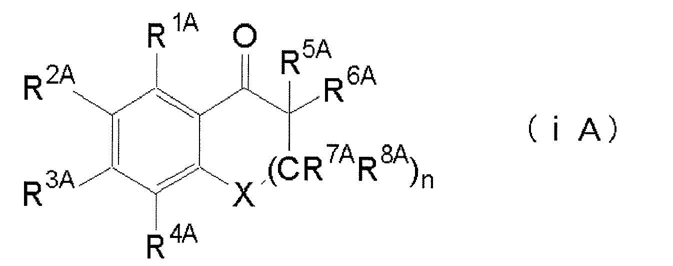

In formula (iA), X represents O or S; n represents 0 or 1; each of R^{1A}, R^{2A}, R^{3A}, R^{4A}, R^{5A} R^{6A}, R^{7A}, and R^{8A} independently represents a hydrogen atom, an alkyl group, a halogen atom, a hydroxyl group, a cyano group, a nitro group, an amino group, an alkylthio group, an alkylamino group, an alkoxy group, an alkoxycarbonyl group, an acyloxy group, an acyl group, a carboxyl group, or a sulfo group, and contiguous two of R^{1A}, R^{2A}, R^{3A} and R^{4A} may be linked (condensed) to each other to form a ring. R^{5A} or R^{6A} and R^{7A} or R^{8A} may be linked to each other to form an aliphatic ring, but they do not form an aromatic ring.

The sensitizer is still more preferably represented by the following formula (iB).

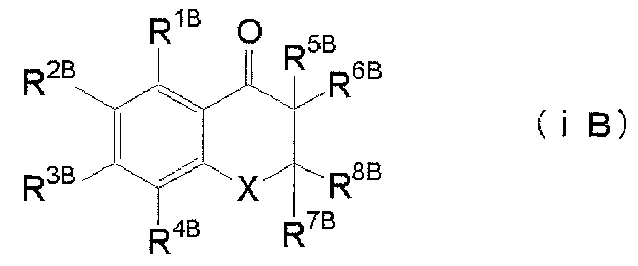

In formula (iB), X represents O or S; each of R^{1B}, R^{2B}, R^{3B}, R^{4B}, R^{5B}, R^{6B}, R^{7B}, and R^{8B} independently represents a hydrogen atom, an alkyl group, a halogen atom, a hydroxyl group, a cyano group, a nitro group, an amino group, an alkylthio group, an alkylamino group, an alkoxy group, an alkoxycarbonyl group, an acyloxy group, an acyl group, a carboxyl group, or a sulfo group, and contiguous two of R^{1B}, R^{2B}, R^{3B} and R^{4B} may be linked (condensed) to each other to form a ring. R^{5B} or R^{6B} and R^{7B} or R^{8B} may be linked to each other to form an aliphatic ring, but they do not form an aromatic ring.

The sensitizer is still yet preferably represented by the following formula (iC).

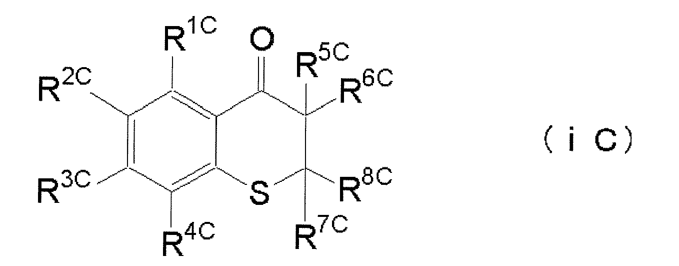

In formula (iC), each of R^{1C}, R^{2C}, R^{3C}, R^{4C}, R^{5C}, R^{6C}, R^{7C} and R^{8C} independently represents a hydrogen atom, an alkyl group, a halogen atom, a hydroxyl group, a cyano group, a nitro group, an amino group, an alkylthio group, an alkylamino group, an alkoxy group, an alkoxycarbonyl group, an acyloxy group, an acyl group, a carboxyl group, or a sulfo group.
Contiguous two of R^{1C}, R^{2C}, R^{3C} and R^{4C} may be linked to each other to form a 5-or 6-membered aliphatic or aromatic ring. These rings may be heterocyclic rings containing elements other than a carbon atom, and formed rings may further form a binuclear ring, e.g., a condensed ring by combination. These ring structures may further have a substituent such as the substituents exemplified in the case where each of R¹, R², R³, R⁴, R⁵, R⁶, R⁷ and R⁸ in formula (i) represents a monovalent substituent. As the examples of the hetero atoms in the case where the formed ring structures are heterocyclic rings, N, O and S are exemplified. R^{5C} or R^{6C} and R^{7C} or R^{8C} may be linked to each other to form an aliphatic ring, but they do not form an aromatic ring.

It is preferred that at least one of R^{1C}, R^{2C}, R^{3C}, R^{4C}, R^{5C}, R^{6C}, R^{7C}, and R^{8C} represents a halogen atom. As preferred substitution positions of halogen atoms, R^{1C}, R^{2C}, R^{3C} and R^{4C} are exemplified, and R^{2C} is most preferred. The number of halogen atoms is preferably one or two, and more preferably one.

Further, R^{2C} is preferably a substituent other than hydrogen, preferably an alkyl group, a halogen atom, an acyloxy group or an alkoxycarbonyl group, and especially preferably an alkyl group or a halogen atom, and in this case good matching with a light source is obtained, and high sensitivity can be ensured.

In addition, it is preferred that either R^{7C} or R^{8C} represents a substituent other than hydrogen, and it is more preferred both R^{7C} and R^{8C} represent substituents other than hydrogen. As preferred substituents, an alkyl group, a halogen atom, a carboxyl group, and an alkoxycarbonyl group are exemplified, an alkyl group and an alkoxycarbonyl group are more preferred, and an alkyl group is most preferred. As halogen atoms, a fluorine atom, a chlorine atom, a bromine atom, or an iodine atom can be exemplified, and a chlorine atom, a bromine atom, and an iodine atom are preferred.

When any of R^{1C}, R^{2C}, R^{3C}, R^{4C}, R^{5C}, R^{6C}, R^{7C}, and R^{8C} represents an alkyl group, the alkyl group is preferably an alkyl group having 1 to 10 carbon atoms, and more preferably the alkyl group is preferably an alkyl group having 1 to 4 carbon atoms, such as a methyl group, an ethyl group, a propyl group, an n-butyl group, a sec-butyl group, or a t-butyl group.

When any of R^{1C}, R^{2C}, R^{3C}, R^{4C}, R^{5C}, R^{6C}, R^{7C}, and R^{8C} represents an acyloxy group, the acyloxy group is preferably an aliphatic acyloxy group having 2 to 10 carbon atoms, and more preferably an aliphatic acyloxy group having 2 to 5 carbon atoms.
When any of R^{1C}, R^{2C}, R^{3C}, R^{4C}, R^{5C}, R^{6C}, R^{7C}, and R^{8C} represents an alkoxycarbonyl group, the alkoxycarbonyl group is preferably an aliphatic alkoxycarbonyl group having 2 to 10 carbon atoms, and more preferably an aliphatic alkoxycarbonyl group having 2 to 5 carbon atoms.

The examples of the specific sensitizers [(exemplified compounds (I-1) to (I-133)] that can be preferably used in the invention are shown below, but the invention is by no means restricted thereto. In the exemplified compounds (I-1) to (I-133), Me represents methyl group, Bu^{t} represents tertiary-butyl group and Prⁱ represents isopropyl group.

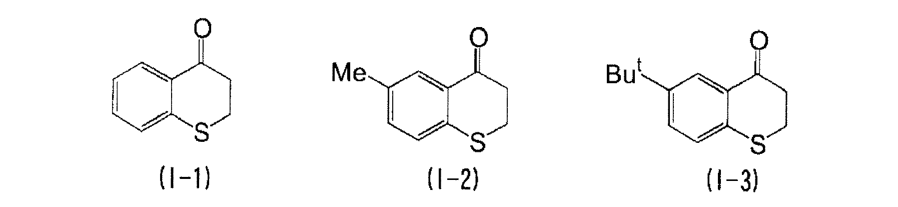

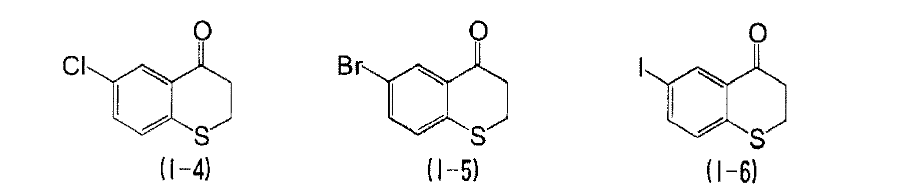

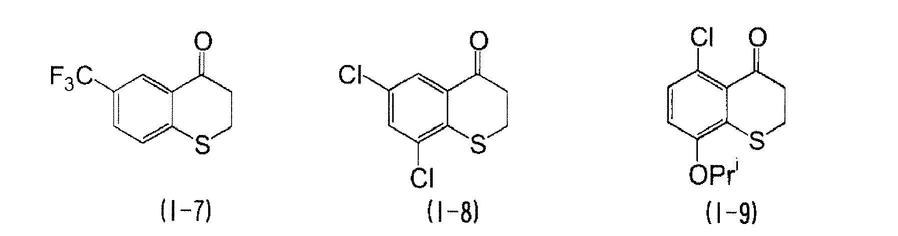

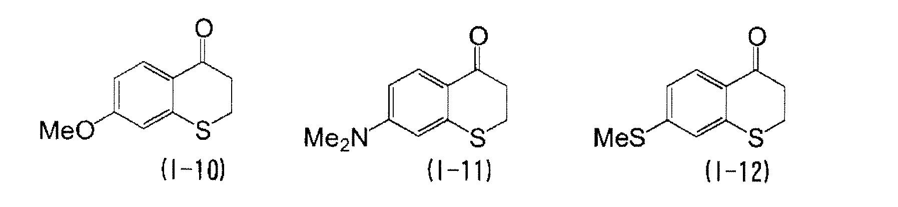

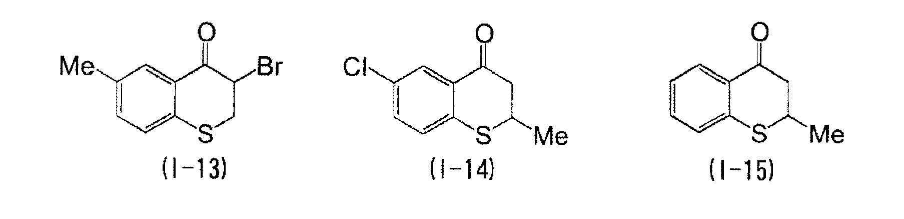

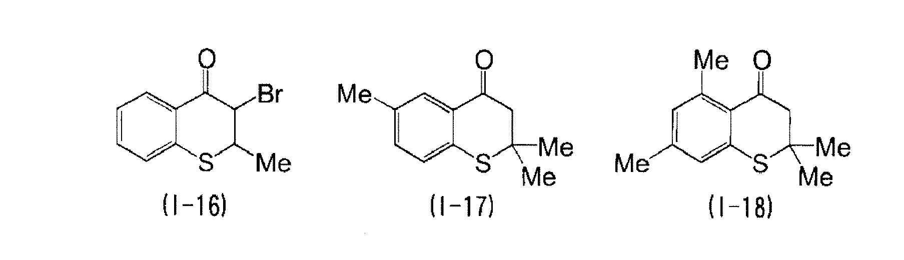

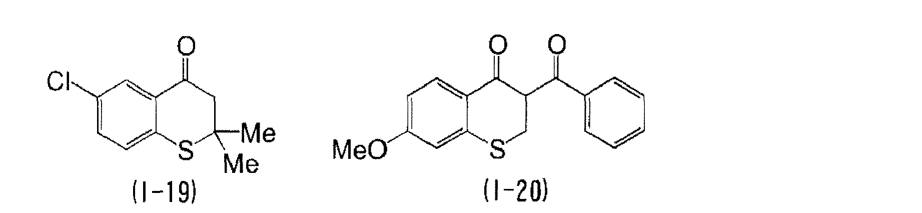

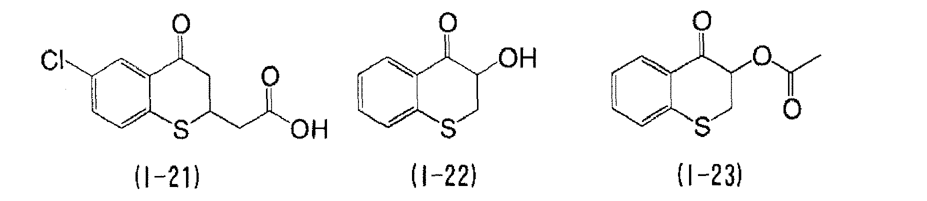

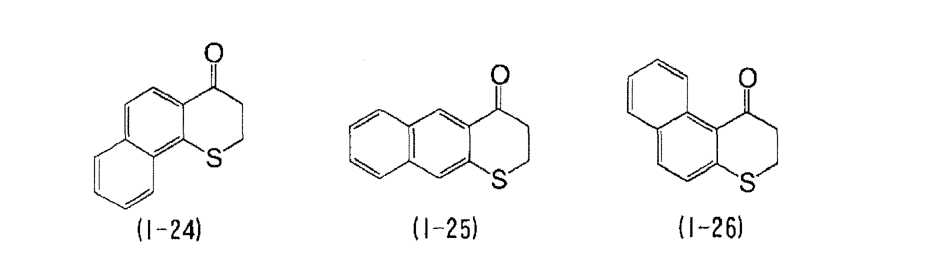

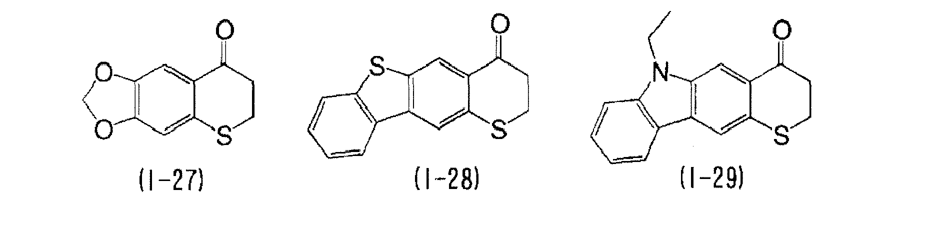

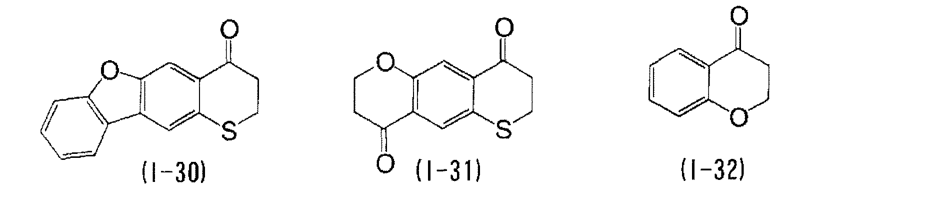

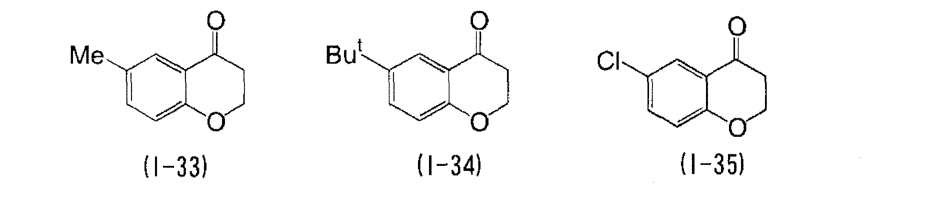

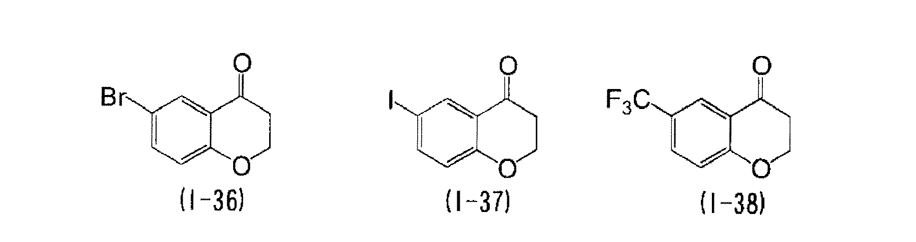

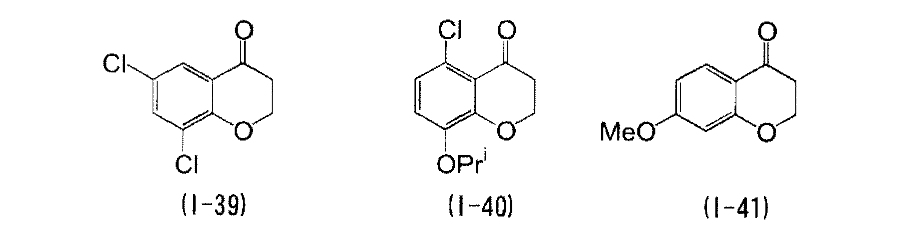

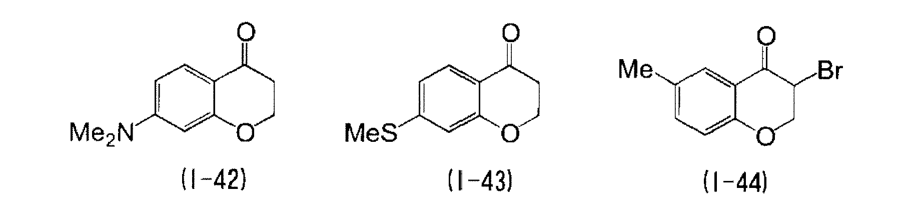

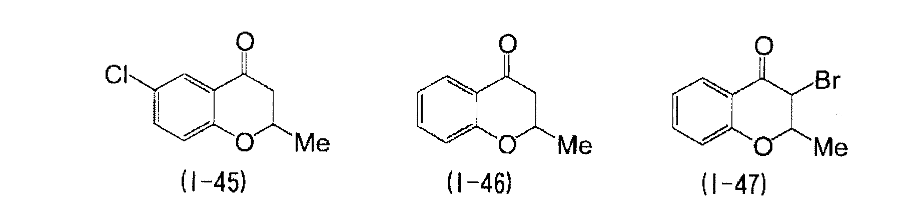

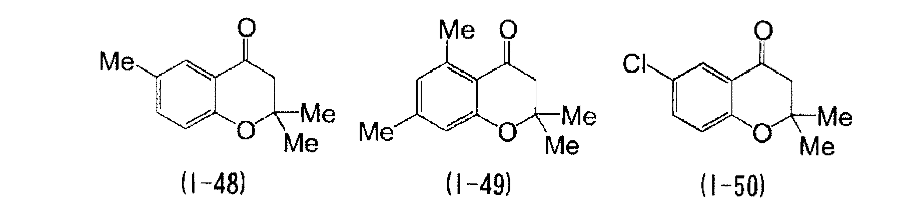

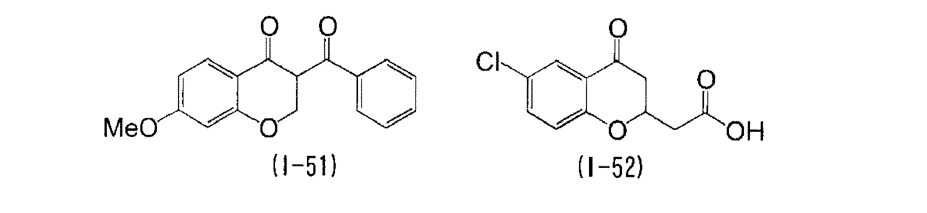

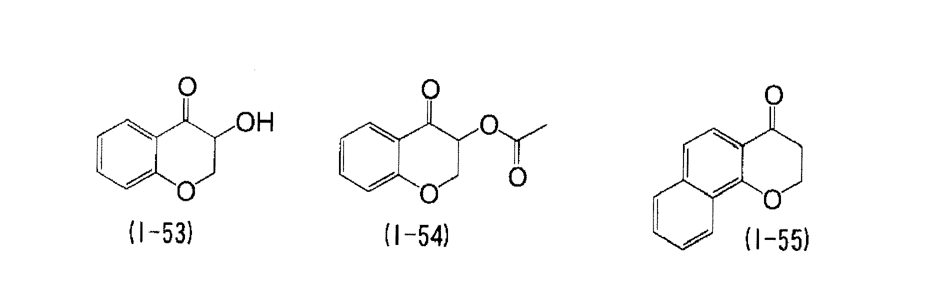

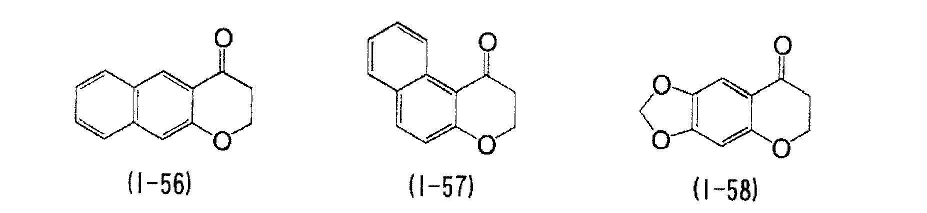

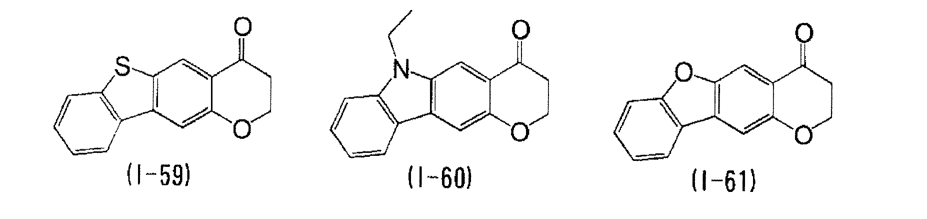

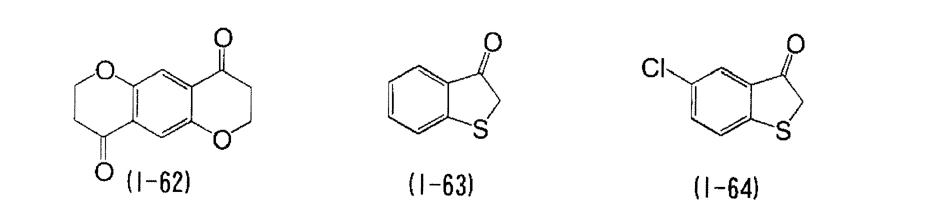

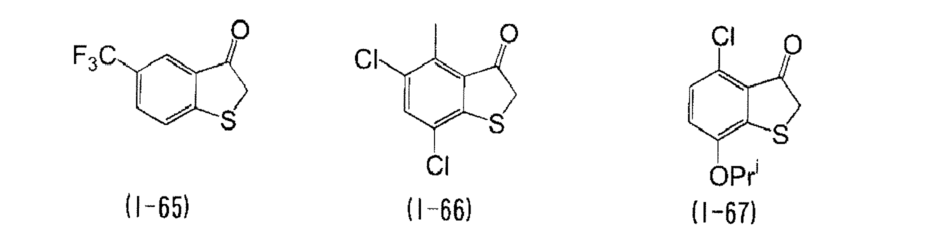

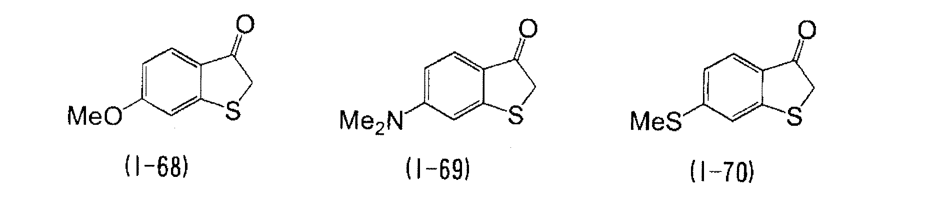

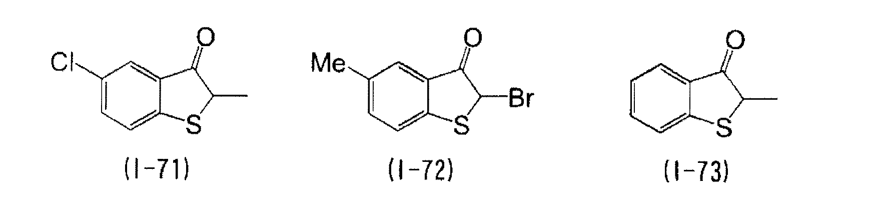

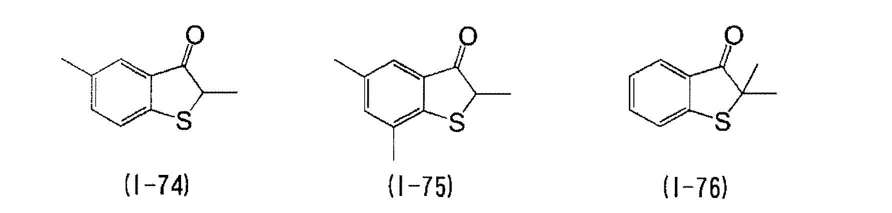

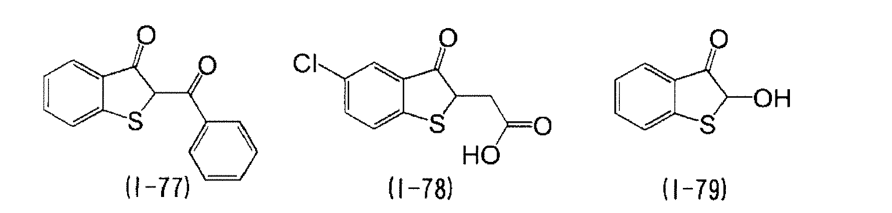

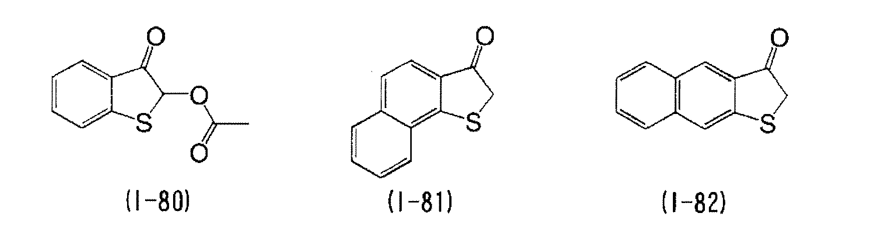

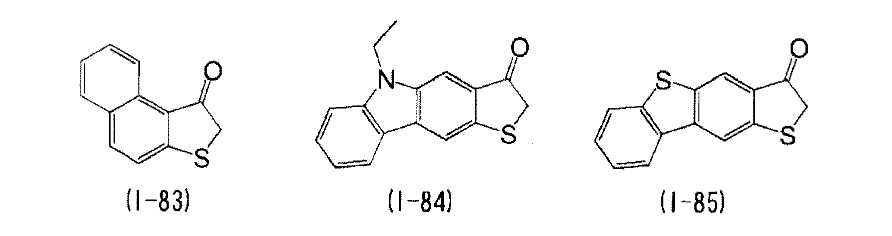

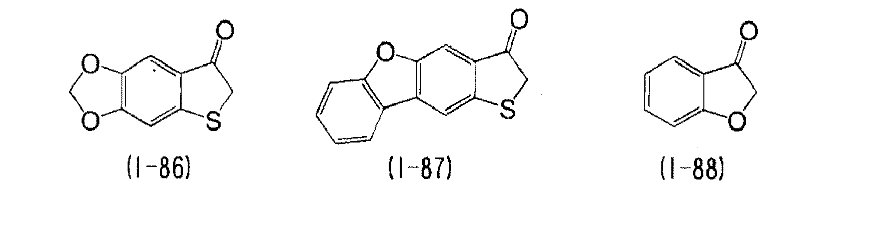

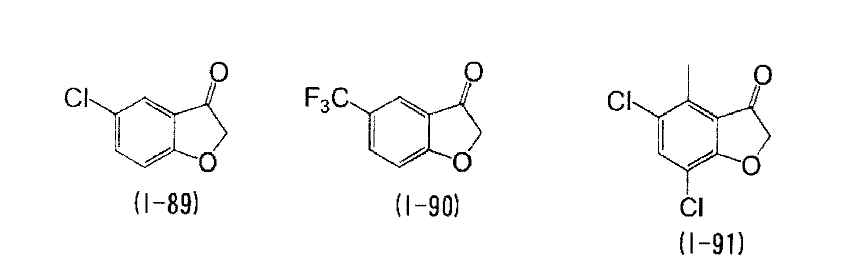

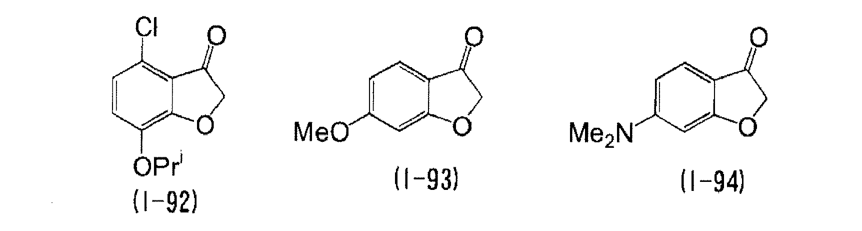

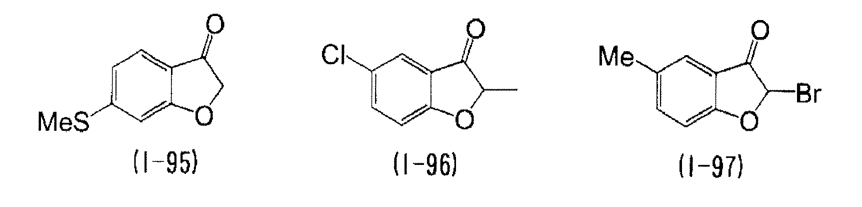

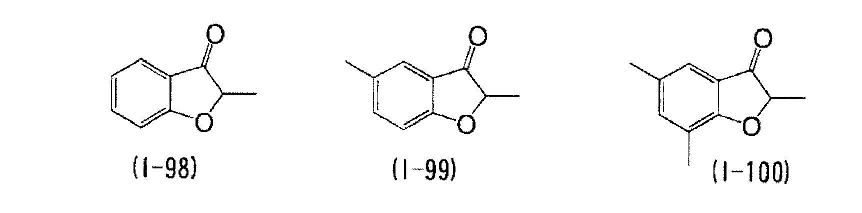

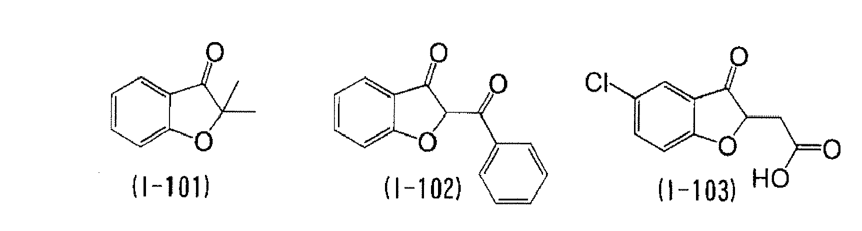

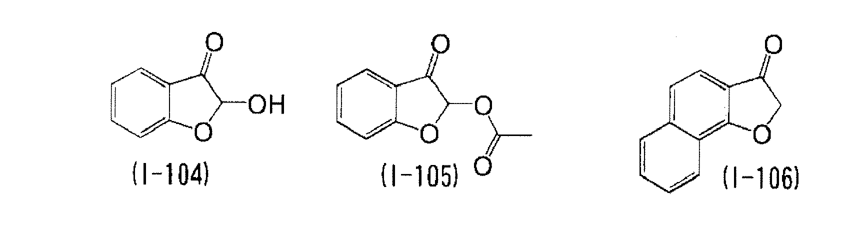

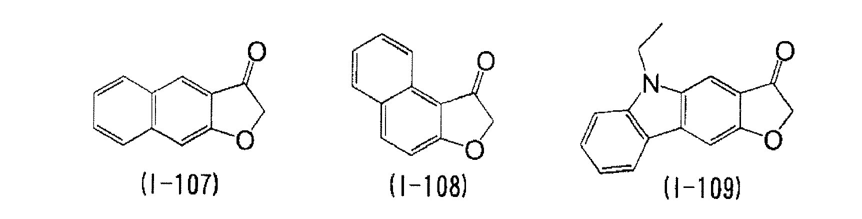

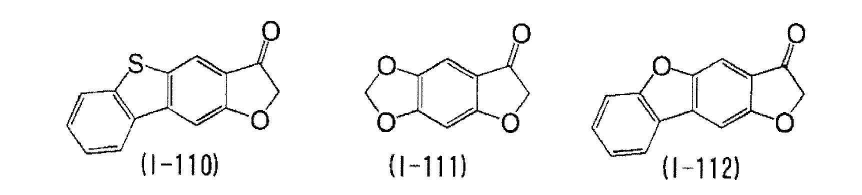

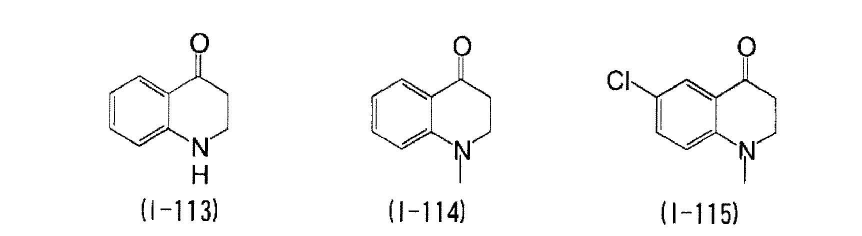

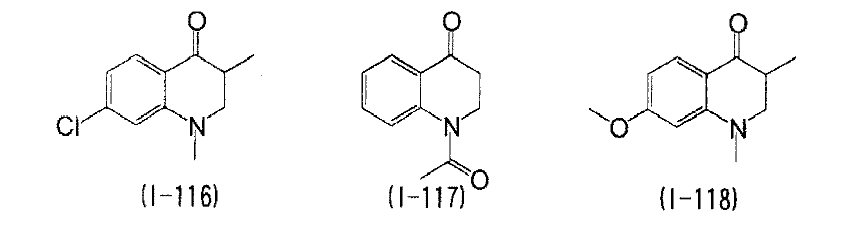

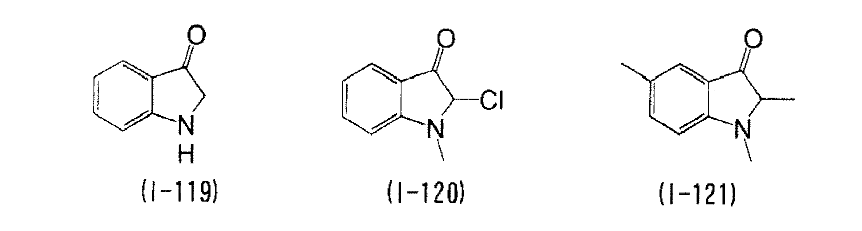

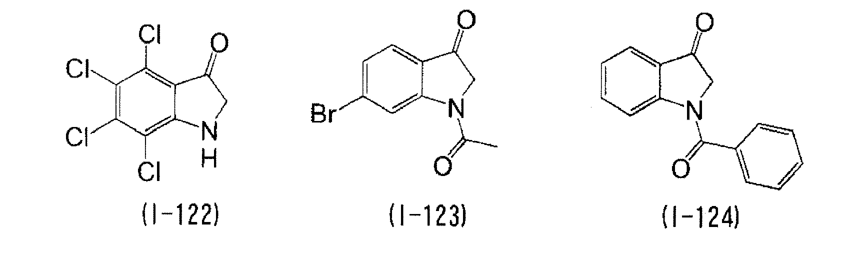

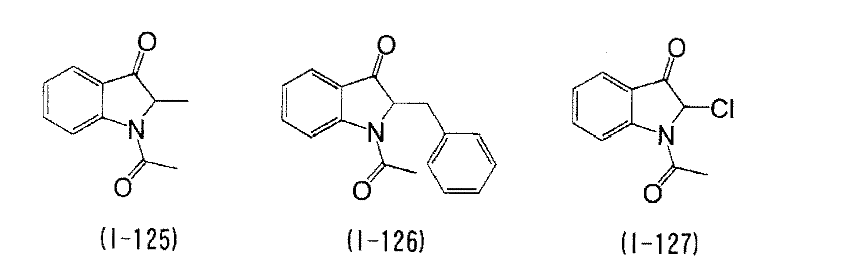

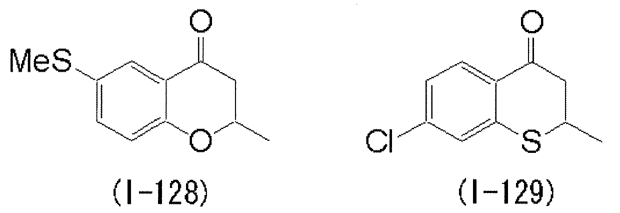

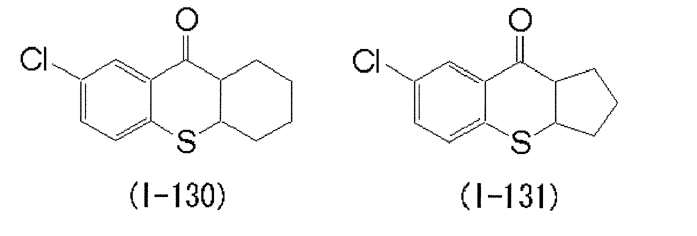

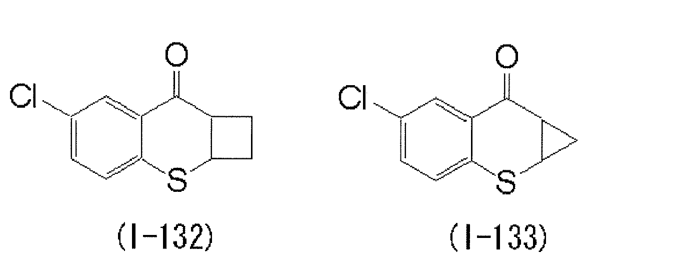

The specific sensitizers in the invention can be synthesized according to the known methods described, e.g., in JP-A No. 2004-189695, "Tetrahedron", Vol. 49, p. 939 (1993), "Journal of Organic Chemistry", p. 893 (1945), and "Journal of Organic Chemistry", p. 4939 (1965).

The content of the specific sensitizers in the ink-jet ink composition in the invention is preferably 0.05 to 30 mass% or so as solid content based on the ink-jet ink composition, more preferably 0.1 to 20 mass%, and still more preferably 0.2 to 10 mass%.
Incidentally, since the specific sensitizers hardly have absorption in the visible ray region, they also have an advantage such that even when the amount capable of exhibiting the effect is added, there is no anxiety to affect the hue of the ink-jet ink composition.
In connection with the content, describing in relationship with (b) photopolymerization initiator, the content of the specific sensitizers is in a mass ratio of (b) photopolymerization initiator /(c) specific sensitizers of 200:1 to 1:200, preferably 50:1 to 1:50, and more preferably 20:1 to 1:5.

### <Other sensitizer>

In the invention, known sensitizers can also be used in combination with the specific sensitizer described above in such a range that the effect of the invention is not impaired. Other sensitizer can be added to the specific sensitizer such that the specific sensitizer : other sensitizer weight ratio becomes 1 : 5 to 100 : 1, preferably 1 : 1 to 100 : 1, more preferably 2 : 1 to 100 : 1.
Examples of usable sensitizers known in the art include benzophenone, thioxanthone, particularly isopropylthioxanthone, anthraquinone and 3-acylcoumarin derivatives, terphenyl, styryl ketone, and 3-(aroylmethylene)thiazoline, camphor quinone, eosin, rhodamine, and erythromycin.
Further examples of the usable sensitizers are as follows:

### (1) Thioxanthones

Thioxanthone, 2-isopropylthioxanthone, 2-chlorothioxanthone,
2-dodecylthioxanthone, 2,4-di-ethylthioxanthone, 2,4-dimethylthioxanthone,
1-methoxycarbonylthioxanthone, 2-ethoxycarbonylthioxanthone,
3-(2-methoxyethoxycarbonyl)thioxanthone, 4-butoxycarbonylthioxanthone,
3-butoxycarbonyl-7-methylthioxanthone, 1-cyano-3-chlorothioxanthone,
1-ethoxycarbonyl-3-chlorothioxanthone, 1-ethoxycarbonyl-3-ethoxythioxanthone,
1-ethoxycarbonyl-3-aminothioxanthone, 1-ethoxycarbonyl-3-phenylsulfurylthioxanthone,
3,4-di-[2-(2-methoxyethoxy) ethoxycarbonyl] thioxanthone,
1-ethoxycarbonyl-3-(1-methyl-1-morpholinoethyl)thioxanthone,
2-methyl-6-dimethoxymethylthioxanthone, 2-methyl-6-(1,1-dimethoxybenzyl)thioxanthone,
2-morpholinomethylthioxanthone, 2-methyl-6-morpholinomethylthioxanthone,
n-allylthioxanthoine-3,4-dicarboxyimide, n-octylthioxanthone-3,4-dicarboxyimide,
N-(1,1,3,3-tetramethylbutyl)thioxanthone-3,4-dicarboxyimide, I-phenoxythioxanthone,
6-ethoxycarbonyl-2-methoxythioxanthone, 6-ethoxycarbonyl-2-methylthioxanthone,
thioxanthone-2-polyethylene glycol ester, and
2-hydroxy-3-(3,4-dimethyl-9-oxo-9H-thioxanthon-2-yloxy)-N,N,N-trimethyl-1-propane aluminum chloride.

### (2) Benzophenones

Benzophenone, 4-phenylbenzophenone, 4-methoxybenzophenone,
4,4'-dimethoxybenzophenone, 4,4'-dimethylbenzophenone, 4,4'-dichlorobenzophenone,
4,4'-dimethylaminobenzophenone, 4,4'-diethylaminobenzophenone, 4-methylbenzophenone,
2,4,6-trimethylbenzophenone, 4-(4-methylthiophenyl)benzophenone,
3,3'-dimethyl-4-methoxybenzophenone, methyl-2-benzoyl benzoate,
4-(2-hydroxyethylthio)benzophenone, 4-(4-tolylthio)benzophenone,
4-benzoyl-N,N,N-trimethylbenzene methane aluminum chloride,
2-hydroxy-3-(4-benzoylphenoxy)-N,N,N-trimethyl-1-propane aluminum chloride monohydrate, 4-(13-acryloyl-1,4,7,10,13-pentaoxatridecyl)benzophenone,
4-benzoyl-N,N-dimethyl-N-[2-(1-oxo-2-propenyl)oxy] ethylbenzene methane aluminum chloride.

### (3) 3-Acyl coumarins

3-Benzoylcoumarin, 3-benzoyl-7-methoxycoumarin, 3-benzoyl-5,7-di(propoxy) coumarin, 3-benzoyl-6,8-dichlorocoumarin, 3-benzoyl-6-chlorocoumarin,
3,3'-carbonylbis[5,7-di(propoxy)coumarin], 3,3'-carbonylbis(7-methoxycoumarin),
3,3'-carbonylbis(7-diethylaminocoumarin), 3-isobutyroylcoumarin,
3-benzoyl-5,7-dimethoxycoumarin, 3-benzoyl-5,7-diethoxycoumarin,
3-benzoyl-5,7-dibutoxycoumarin, 3-benzoyl-5,7-di(methoxyethoxy) coumarin,
3-benzoyl-5,7-di(allyloxy) coumarin, 3-benzoyl-7-dimethylaminocoumarin, 3-benzoyl-7-diethylaminocoumarin, 3-isobutyroyl-7-dimethylaminocoumarin,
5,7-dimethoxy-3-(1-naphthoyl)coumarin, 5,7-dimethoxy-3-(1-naphthoyl)coumarin,
3-benzoylbenzo[f]coumarin, 7-diethylamino-3-thienoylcoumarin, and
3-(4-cyanobenzoyl)-5,7-dimethoxycoumarin.

### (4) 3-(Aroylmethylene)thiazolines

3-Methyl-2-benzoylmethylene-β-naphthothiazoline,
3-methyl-2-benzoylmethylenebenzothiazoline,
3-ethyl-2-propionylmethylene-β-naphthothiazoline.

### (5) Anthracenes

9,10-Dimethoxy-anthracene, 9,10-diethoxy-anthracene,
9,10-dimethoxy-2-ethyl-anthracene.

### (6) Other carbonyl compounds

Acetophenone, 3-methoxyacetophenone, 4-phenylacetophenone, benzil,
2-acetylnaphthalene, 2-naphthoaldehyde, 9,10-naphthoquinone, 9-fluorenone, dibenzosuberon, xanthone, 2,5-bis(4-diethylaminobenzylidene)cyclopentanone,
α -(p-dimethylaminobenzylidene)ketone, for example
2-(4-dimethylaminobenzylidene)indan-1-one or
3-(4-dimethylaminophenyl)-1-indan-5-ylpropenone, 3-phenylthiophthalimide, and
N-methyl-3,5-di(ethylthio)phthalimide.

### <Colorant>

The ink-jet ink composition of the present invention may contain a colorant having various hues.
The colorant usable in the present invention is not particular limited, but is preferably a pigment or an oil-soluble dye that is excellent in weather resistance and full of color reproducibility. A colorant selected from known arbitrary colorants such as soluble dyes may be used. A colorant preferably usable for the ink-jet ink composition of the present invention does not function as a polymerization inhibitor in a polymerization reaction that is a curing reaction. This is for the purpose of not lowering the sensitivity of the curing reaction activated by active radiation rays.

### (Pigment)

There is not any particular limitation on the pigment, but any kind of organic pigments and inorganic pigments that are generally available in the market, a pigment dispersion that is obtained by dispersing the pigments in an insoluble resin or the like that serves as a dispersing medium, a pigment composite that is obtained by grafting resins on the surface of the pigments, and the like are usable. In addition, resin particles dyed with a pigment are also usable.
Examples of these pigments may include the pigments that are described in "Ganryo No Jiten" edited by Seishiro Itoh (published in 2000), "Industrial Organic Pigments" by W. Herbst and K. Hunger, and JP-A Nos. 2002-12607, 2002-188025, 2003-26978 and 2003-342503.

Specific examples of the organic pigments and inorganic pigments usable in the present invention may include:
as a yellow color pigment, a monoazo pigment such as C. I. Pigment Yellow 1 (Fast Yellow G and the like), C.I. Pigment Yellow 74, or C.I. Pigment Yellow 120; a disazo pigment such as C.I. Pigment Yellow 155, C.I. Pigment Yellow 12 (Disazo Yellow AAA and the like), or C.I. Pigment Yellow 17; a non-benzidine azo pigment such as C.I. Pigment Yellow 180; an azolake pigment such as C.I. Pigment Yellow 100 (Tartrazine Yellow Lake and the like); a condensed azo pigment such as C.I. Pigment Yellow 95 (Condensed Azo Yellow GR and the like); an acid dye lake pigment such as C.I. Pigment Yellow 115 (Quinoline Yellow Lake and the like); a basic dye lake pigment such as C.I. Pigment Yellow 18 (Tioflavin Lake and the like); an anthraquinone pigment such as Flavanthrone Yellow (Y-24); an isoindolinone pigment such as Isoindolinone Yellow 3RLT (Y-110); a quinophthalone pigment such as Quinophthalone Yellow (Y-138); an isoindoline pigment such as Isoindoline Yellow (Y-139); a nitroso pigment such as C.I. Pigment Yellow 153 (Nickel Nitroso Yellow and the like); and a metal complex salt azo methine pigment such as C.I. Pigment Yellow 117 (Copper Azo Methine Yellow and the like).

Specific examples of a red or magenta color pigment may include:
a monoazo pigment such as C.I. Pigment Red 3 (Toluidine Red and the like); a disazo pigment such as C.I. Pigment Red 38 (Pyrazolone Red B and the like); an azolake pigment such as C.I. Pigment Red 53:1 (Lake Red C and the like) or C.I. Pigment Red 57:1 (Brilliant Carmine 6B and the like); a condensed azo pigment such as C.I. Pigment Red 144 (Condensed Azo Red BR and the like); an acid dye lake pigment such as C.I. Pigment Red 174 (Phloxine B Lake and the like); a basic dye lake pigment such as C.I. Pigment Red 81 (Rhodamine 6G' Lake and the like); an anthraquinone pigment such as C.I. Pigment Red 177 ( Dianthraquinonyl Red and the like); an thioindigo pigment such as C.I. Pigment Red 88 (Thioindigo Bordeaux and the like); a perylnone pigment such as C.I. Pigment Red 194 (Perynone Red and the like); a perylene pigment such as C.I. Pigment Red 149 (Perylene Scarlet and the like); a quinacridone pigment such as C.I. Pigment Violet 19 (non-substituted quinacridone) or C.I. Pigment Red 122 (Quinacridone Magenta and the like); an isoindolinone pigment such as C.I. Pigment Red 180 (Isoindolinone Red 2BLT and the like); and an alizarin lake pigment such as C.I. Pigment Red 83 (Madder Lake and the like).

Specific examples of a blue or cyan color pigment may include:
a disazo pigment such as C.I. Pigment Blue 25 (Dianisidine Blue and the like); a phthalocyanine pigment such as C.I. Pigment Blue 15 (Phthalocyanine Blue and the like); an acid dye lake pigment such as C.I. Pigment Blue 24 (Peacock Blue Lake and the like); a basic dye lake pigment such as C.I. Pigment Blue 1 (Victoria Pure Blue BO Lake and the like); an anthraquinone pigment such as C.I. Pigment Blue 60 (Indanthrone Blue and the like); and an alkali blue pigment such as C.I. Pigment Blue 18 (Alkali Blue V-5:1 and the like).

Specific examples of a green color pigment may include:
a phthalocyanine pigment such as C.I. Pigment Green 7 (Phthalocyanine Green) or C.I. Pigment Green 36 (Phthalocyanine Green); and an azo metal complex pigment such as C.I. Pigment Green 8 (Nitroso Green).

Specific examples of an orange color pigment may include:
an isoindoline pigment such as C.I. Pigment Orange 66 (Isoindoline Orange); and an anthraquinone pigment such as C.I. Pigment Orange 51 (Dichloropyrantron Orange).

Specific examples of a black color pigment may include carbon black, titan black, and aniline black.

Specific examples of a white color pigment may include basic lead carbonate (2PbCO₃Pb(OH)₂, so-called silver white), zinc oxide (ZnO, so-called zinc white), titanium oxide (TiO₂, so-called titan white), and strontium titanate (SrTiO₃, so-called titan strontium white).

Titanium oxide has a lower specific gravity as compared with the other white color pigments, having a large refraction index and chemical and physical stabilities. Titanium oxide also has a large shielding and coloring power as a pigment and excellent resistances against acid, alkali, and the other environmental conditions. Therefore, as a white color pigment, titanium oxide is preferably used. Naturally, if necessary, the other white color pigments (including the ones other than the above listed white color pigments) may be used.

The pigments may be dispersed with a dispersing machine such as, for example, a ball mill, a sand mill, an attritor, a roll mill, a jet mill, a homogenizer, a paint shaker, a kneader, an agitator, a Henschel mixer, a colloid mill, an ultrasonic homogenizer, a pearl mill, or a wet jet mill.
Upon dispersing the pigments, a dispersing agent may be admixed. Examples of the dispersing agent may include a hydroxyl group containing carboxylic acid ester, a salt of a long chain polyaminoamide and a high molecular weight acid ester, a salt of a high molecular weight polycarboxylic acid, a high molecular weight unsaturated acid ester, a high molecular weight copolymer, a denatured polyacrylate, an aliphatic polycarboxylic acid, a condensate of naphthalenesulfonic acid and formalin, a polyoxyethylene alkylphosphate, and a pigment derivative. In addition, commercially available polymer dispersants such as SOLSPERSE series (trade name) manufactured by Noveon Inc. are also preferably used.
As an auxiliary dispersing agent, a synergist corresponding to each pigment may be used. These dispersing agent and auxiliary dispersing agent are admixed in an amount of from 1 part to 50 parts by mass with respect to 100 parts by mass of the pigments.

To the ink-jet ink composition of the present invention, a solvent may be admixed as a dispersing medium for the pigments and the other components, or the ink-jet ink composition may be free of solvent when the polymerizable compound (a) that is a low molecular weight component is used as a solvent. However, the ink-jet ink composition of the present invention is preferably free of solvent because the ink-jet ink composition is a radiation ray curable ink that is cured after the ink-jet ink composition is applied to a recording medium. This is because solvent resistance of the resulting ink images possibly degrades or VOC (Volatile Organic Compounds) problems possibly occur when solvent is remained in the ink images. In this way, as the dispersing medium, polymerizable compounds are used, and among these a polymerizable monomer having the lowest viscosity is preferably selected from the viewpoint of dispersing adaptability and improvement of handling properties of the ink-jet ink composition.

The average particle diameter of the pigments is selected in the range of preferably from 0.02 µm to 0.9 µm, more preferably from 0.05µm to 0.8 µm, and still more preferably from 0.06 µm to 0.6 µm.
The pigments, dispersant, dispersing medium, dispersing conditions, and filtration conditions are selected in a manner that the average particle diameter of the pigment particles is selected adequately in the above preferable range. By controlling the particle diameter in this way, clogging of head nozzles may be prevented, and the storage stability, transparency and curing sensitivity of ink may be kept to be unchanged when the ink-jet ink composition of the present invention is used for ink-jet recording.

### (Dye)

A dye usable in the present invention is preferably oil-soluble. Specifically, the dye has a solubility to water at 25 °C(the mass of a pigment dissolved in 100 g of water) of 1 g or less, preferably 0.5 g or less, and more preferably 0.1 or less. Therefore, a so-called oil-soluble dye that is insoluble in water is preferably used.

Regarding the dye usable in the present invention, it is also preferable that an oil-solubilizing group is incorporated into the mother nucleus of the dye so as to dissolve the dye in a required amount in the ink-jet ink composition.
Examples of the oil-solubilizing group may include a long-chain or branched alkyl group, a long-chain or branched alkoxy group, a long-chain or branched alkylthio group, a long-chain or branched alkylsulfonyl group, a long-chain or branched acyloxy group, a long-chain or branched alkoxycarbonyl group, a long-chain or branched acyl group, a long-chain or branched acylamino group, a long-chain or branched alkylsulfonylamino group, a long-chain or branched alkylaminosulfonyl group, and an aryl, aryloxy, aryloxycarbonyl, arylcarbonyloxy, arylaminocarbonyl, arylaminosulfonyl, or arylsulfonylamino group that contains the foregoing long-chain or branched substitution groups.
In addition, a water-soluble dye having a carboxylic acid or a sulfonic acid may be modified into a dye having an oil-soluble group such as an alkoxycarbonyl group, an aryloxycarbonyl group, an alkylaminosulfonyl group or an arylaminosulfonyl group by using a long-chain or branched alcohol, amine, phenol, or aniline derivative.

As the oil-soluble dye, a dye having a melting point of 200°C or lower is preferable, a dye having a melting point of 150°C or lower is more preferable, and a dye having a melting point of 100°C or lower is still more preferable. By using an oil-soluble dye having a low melting point, crystallization of pigments in the ink-jet ink composition is prevented, thereby improving the storage stability of the resulting light-cured products.
Further, in order to improve the resistances against discoloration, particularly against an oxidative substance such as ozone, it is preferable that the oxidation potential is noble (high). For this reason, an oil-soluble dye having an oxidation potential of 1.0 V (vs SCE) or higher is preferably used in the present invention. The higher the oxidation potential, the better. An oil-soluble dye having an oxidation potential of 1.1 V (vs SCE) or higher is more preferable, and an oil-soluble dye having an oxidation potential of 1.15 V (vs SCE) or higher is particularly preferable.

As the yellow color dye, a compound having a structure represented by formula (Y-I) described in JP-A No. 2004-250483 is preferable.
Examples of particularly preferable dyes may include a dye that is described in the paragraph of [0034] of JP-A No. 2004-250483 and is represented by formulae (Y-II) to (Y-IV), and specifically a compound that is described in the paragraphs of [0060] to [0071] of JP-A No. 2004-250483. Note that, the oil-soluble dye that is described in the patent document and represented by formula (Y-I) is not limited to yellow color, but may be used for any color ink including a black color ink and a red color ink.

As the magenta color dye, a compound having a structure represented by formulae (3) and (4) described in JP-A No. 2002-114930 is preferable. Specific examples thereof may include a compound as described in the paragraphs of [0054] to [0073] of JP-A No. 2002-114930.
Examples of a particularly preferable dye may include an azo dye that is described in the paragraphs of [0084] to [0122] of JP-A No. 2002-121414 represented by formulae (M-1) to (M-2), and specifically a compound as described in the paragraphs of [0123] to [0132] of JP-A No. 2002-121414. Note that, the oil-soluble dye that is described in the patent document and represented by formulae (3), (4), (M-1) to (M-2) is not limited to magenta color, but may be used for any color ink including a black color ink and a red color ink.

As the cyan color dye, a dye represented by formulae (I) to (IV) described in JP-A No. 2001-181547 and a dye represented by formulae (IV-1) to (IV-4) described in the paragraphs of [0063] to [0078] of JP-A No. 2002-121414 are preferable. Specific examples thereof may include a compound that is described in the paragraphs of [0052] to [0066] of JP-A No. 2001-181547 and a compound as described in the paragraphs of [0079] to [0081] of JP-A No. 2002-121414.
Particularly preferable dyes may include a phthalocyanine dye that is described in the paragraphs of [0133] to [0196] of JP-A No. 2002-121414 and represented by formulae (C-I) and (C-II), and still more preferably a phthalocyanine dye represented by formula (C-II). Specific examples thereof may include a compound as described in the paragraphs of [0198] to [0201]. Note that, the oil-soluble dyes of formulae (I) to (IV), (IV-1) to (IV-4), (C-I), and (C-II) are not limited to cyan color, but may be used for any color ink including a black color ink and a green color ink.

### -Oxidation Potential-

The oxidation potential (Eox) of a dye in the present invention may be easily measured by practitioners in the art. The measurement method thereof is described in, for example, "New Instrumental Methods in Electrochemistry" by P. Delahay (published in 1954 by Interscience Publishers), "Electrochemical Methods" by A. J. Bard et al. (published in 1980 by John Wiley & Sons Inc.), and "Denki Kagaku Sokuteihou" by Akira Fujishima et al. (published in 1984 by Gihodou Shuppan Co., Ltd.).
In practice, the oxidation potential is measured as follows: a test sample is dissolved in an amount of from 1×10⁻² mol/liter to 1×10⁻⁶ mol/liter in a solvent such as dimethylformamide or acetonitrile that contains a supporting electrolyte like sodium perchlorate or tetrapropylammonium perchlorate; with a cyclicvoltammetry or a DC polarography apparatus, a carbon (GC) working electrode is scanned to an oxidation side (noble potential side) against a rotating platinum counter electrode; the resulting oxidation wave is regarded approximately as a linear line, and then a middle potential of a line segment that is determined by an intersection of the linear line and a residual current and potential line and another intersection of the linear line and a saturated current line (or a line running through a peak potential parallel to the longitudinal axis) is measured with respect to SCE (saturated calomel electrode). The middle potential thus measured is often shifted by about several 10s millivolts due to the influence of liquid junction potential difference or liquid resistance of the sample solution, but the reproducibility of the middle potential may be secured by introducing a standard sample (for example, hydroquinone). The supporting electrolyte and solvent used herein may be selected appropriately in accordance with the oxidation potential or solubility of the test sample. The supporting electrolyte and solvent usable herein are described in "Denki Kagaku Sokuteihou" by Akira Fujishima et al., page 101 to 118 (published in 1984 by Gihodou Shuppan Co., Ltd.).

These colorants are added in an amount of preferably from 1% to 30% by mass to the ink-jet ink composition and more preferably from 2% to 25% by mass in terms of a solid content.

In the ink-jet ink composition of the present invention, besides each component described above, the additional components may be used in combination for the purpose of improving performances and others as long as the effect of the present invention is not impaired.
Hereinafter, these additional arbitrary components are described.

### <Co-Sensitizer>

The ink-jet ink composition of the present invention may contain also a co-sensitizer. In the present invention, the co-sensitizer has actions such as improving still more the sensitivity of the sensitizer to the active radiation rays or preventing polymerization inhibition of the polymerizable compound caused by oxygen.

Examples of the co-sensitizer may include amines, for example, a compound as described in Journal of Polymer Science, Vol. 10, p. 3173 (1972) by M. R. Sander et al.; JP-B No. 44-20189; JP-A Nos. 51-82102, 52-134692, 59-138205, 60-84305, 62-18537 and 64-33104; and Research Disclosure No. 33825. Specifically, triethanolamine, p-dimethylaminobenzoic acid ethylester, p-formyldimethylaniline, and p-methylthiodimethylaniline may be included.

Another example of the co-sensitizer may include thiols and sulfides such as a thiol compound as described in JP-A No. 53-702, JP-B No. 55-500806 and JP-A No. 5-142772 or a disulfide compound as described in JP-A No. 56-75643. Specifically, 2-mercaptobenzothiazole, 2-mercaptobenzoxazole, 2-mercaptobenzoimidazole, 2-mercapto-4(3H)-quinazoline, and β-mercaptonaphthalene may be included.

Still another example of the co-sensitizer may include an amino acid compound (for example, N-phenylglycine and the like), an organic metal compound, for example, tributyl tin acetate and the like, as described in JP-B No. 48-42965, a hydrogen donor as described in JP-B No. 55-34414, a sulfur compound as described in JP-A No. 6-308727 (for example, trithiane and the like), a phosphorus compound (diethyl phosphite and the like) as described in JP-A No. 6-250387, and an Si-H or a Ge-H compound as described in JP-A No. 8-65779.

### <UV-Light Absorber>

For the ink-jet ink composition of the present invention, an UV-light absorber may be used from the viewpoint of improving weather resistance and preventing discoloration of resulting images.
Examples of the UV-light absorber may include a benzotriazole compound as described in JP-A Nos. 58-185677, 61-190537, 2-782, 5-197075 and 9-34057, and others; a benzophenone compound as described in JP-A Nos. 46-2784 and 5-194483, U.S. Patent No. 3,214,463, and others; a cinnamic acid compound as described in JP-B Nos. 48-30492 and 56-21141, JP-A No. 10-88106, and others; a triazine compound as described in JP-A Nos. 4-298503, 8-53427, 8-239368, 10-182621 and 8-501291, and others; and a compound, so-called a fluorescence brightener, that absorbs UV-light and emits fluorescence and is represented by a stilbene or benzoxazole compound as described in Research Disclosure No. 24239.
The addition amount thereof may be selected arbitrarily in accordance with purposes, but usually may be preferably from 0.5% to 15% by mass in terms of solid content.

### <Oxidation Inhibitor>

For the purpose of improving the stability of the ink-jet ink composition of the present invention, an oxidation inhibitor may be added.
Examples of the oxidation inhibitor may include the one described in European Patent Application Laid-Open Nos. 223739, 309401, 309402, 310551, 310552 and 459416, DE Patent No. 3,435,443, JP-A Nos. 54-48535, 62-262047, 63-113536, 63-163351, 2-262654, 2-71262, 3-121449, 5-61166 and 5-119449, U.S. Patent Nos. 4,814,262 and 4,980,275, and others. The addition amount thereof may be selected arbitrarily in accordance with purposes, but usually may be preferably from 0.1% to 8% by mass in terms of solid content.

### <Discoloration Inhibitor>

For the ink-jet ink composition of the present invention, various kinds of organic or metal complex discoloration inhibitors may be used.
Examples of the organic discoloration inhibitors may include hydroquinones, alkoxyphenols, dialkoxyphenols, phenols, anilines, amines, indanes, chromanes, alkoxyanilines, and hetero rings.
Examples of the metal complex discoloration inhibitors may include nickel complexes and zinc complexes, specifically, a compound as described in from I to J sections in VII of Research Disclosure No. 17643, Research Disclosure No. 15162, left column in page 650 of Research Disclosure No. 18716, page 527 of Research Disclosure No. 36544, page 872 of Research Disclosure No. 307105, and Research Disclosure No. 15162, and a compound that is included in the formula of a typical compound and the examples of compounds described in page 127 to 137 of JP-A No. 62-215272.
The addition amount thereof may be selected arbitrarily in accordance with purposes, but usually may be preferably from 0.1% to 8% by mass in terms of solid content.

### <Conductive Salts>

To the ink-jet ink composition of the present invention, for the purpose of controlling the jetting properties, conductive salts such as potassium thiocyanate, lithium nitrate, ammonium thiocyanate, or dimethylamine hydrochlorate may be added.

### <Solvent>

To the ink-jet ink composition of the present invention, for the purpose of improving adhesion to a recording medium, an organic solvent may be effectively added in an extremely small amount.
Examples of the solvent may include a ketone solvent such as acetone, methylethylketone, or diethylketone; an alcohol solvent such as methanol, ethanol, 2-propanol, 1-propanol, 1-butanol, or tert-butanol; a chloro solvent such as chloroform or methylene chloride; an aromatic solvent such as benzene or toluene; an ester solvent such as ethylacetate, butylacetate, or isopropylacetate; an ether solvent such as diethylether, tetrahydrofuran, or dioxane; and a glycolether solvent such as ethyleneglycol monomethylether or ethyleneglycol dimethylether.
There solvents are effectively added within a range where solvent resistance or VOC does not become a problem. The amount of the solvent is preferably in the range of from 0.1% to 5% by mass and more preferably from 0.1% to 3% by mass, with respect to the whole of the ink-jet ink composition.

### <Polymer Compound>

To the ink-jet ink composition of the present invention, for the purpose of controlling film properties, various kinds of polymer compounds may be added.
Examples of the polymer compounds may include an acrylic polymer, a polyvinylbutyral resin, a polyurethane resin, a polyamide resin, a polyester resin, an epoxy resin, a phenol resin, a polycarbonate resin, a polyvinylbutyral resin, a polyvinylformal resin, shellac, a vinyl resin, an acrylic resin, a rubber resin, waxes, and the other natural resins. These may be used two or more kinds in combination. Among these, a vinyl copolymer that is obtained by copolymerization of acrylic monomers is preferable.
Further, as a copolymerization composition of a polymer binder, a copolymer that contains a carboxyl group containing monomer, an alkylmethacrylate, or an alkylacrylate as a structure unit is preferably used.

### <Surfactant>

To the ink-jet ink composition of the present invention, a surfactant may be added.
Surfactants that are described in JP-A Nos. 62-173463 and 62-183457 respectively may be used. Examples of the surfactants may include an anionic surfactant such as dialkylsulfosuccinic acid salts, alkylnaphthalenesulfonic acid salts, or fatty acid salts; a nonionic surfactant such as polyoxyethylene alkylethers, polyoxyethylene alkylallylethers, acetyleneglycols, block copolymers of polyoxyethylene and polyoxypropylene; and a cationic surfactant such as alkylamine salts or quaternary ammonium salts.
In place of the surfactant, an organic fluoro-compound may be used.
The organic fluoro-compound is preferably hydrophobic. The organic fluoro-compound may include a fluoro-surfactant, an oily fluoro-compound (for example, fluoro-oil), and a solid state fluoro-compound resin (for example, tetrafluoroethylene resin). The surfactants described in JP-B No. 57-9053 (from 8th to 17th columns) and JP-A No. 62-135826 respectively may be included.

### <Additional Components>

Besides the components described above, if necessary, an additional component such as a leveling additive, a mat agent, waxes that condition film properties, a tackifire that does not inhibit polymerization and improves adhesion to a recording medium made of polyolefin, PET or the like may be incorporated.
Specific examples of the tackifire may include a high molecular weight adhesive polymer as described in page 5 to 6 of JP-A No. 2001-49200 (for example, an ester of (meth)acrylic acid and an alcohol with an alkyl group having from 1 to 20 carbon atoms, an ester of (meth)acrylic acid and an alicyclic alcohol having from 3 to 14 carbon atoms, or a copolymer formed from an ester of (meth)acrylic acid and an aromatic alcohol having from 6 to 14 carbon atoms) and a low molecular weight resin that has a polymerizable unsaturated bond and provides adhesion.

### <Ink-Jet Ink Composition Characteristics>

The ink-jet ink composition of the present invention, as described above, contains essentially the polymerizable compound (a), the photopolymerization initiator (b), and the specific sensitizer (c), further contains, as optional components, the other sensitizers, colorants and the like.
These components are contained as: the colorants are in an amount of preferably from 1% to 10% by mass and more preferably from 2% to 8% by mass; and the all of the polymerizable compounds are in an amount of preferably from 5% to 97% by mass and more preferably from 30% to 95% by mass, with respect to the mass of the whole ink-jet ink composition. The photopolymerization initiator is contained, with respect to all of the polymerizable compounds, in an amount of preferably from 0.01% to 35% by mass, more preferably from 0.1% to 30% by mass, and still more preferably from 0.5% to 30% by mass, appropriately.

### -Ink-Jet Ink Composition Properties-

The ink-jet ink composition of the present invention is used preferably as an ink-jet recording ink. Preferable properties as an ink-jet recording ink for use in illustrative embodiments are described.
In the ink-jet ink composition of the present invention, the ratios of the components are controlled appropriately in a manner that the viscosity at 25°C is regulated in the range of from 5 mPa·s to 100 mPa·s. Within this range, a combination of the specific sensitizer and the photopolymerization initiator of the present invention works particularly effectively. An ink having a viscosity of less than 5 mPa·s has a problem of degrading the curing property thereof and the properties of resulting films. At a viscosity higher than 100 mPa·s, the ink has problems in jetting. Considering ink jetting performance, the viscosity is preferably from 5 mPa·s to 30 mPa·s and more preferably from 5 mPa·s to 20 mPa·s at an jetting temperature (for example, from 40°C to 80°C and preferably from 25°C to 50°C). The viscosity of the ink-jet ink composition of the present invention at 25°C is in the range of preferably from 5 mPa·s to 50 mPa·s, more preferably from 5 mPa·s to 30 mPa·s, and still more preferably from 10 mPa·s to 25 mPa·s.

The surface tension of the ink-jet ink composition of the present invention is in the range of preferably from 20 mN/m to 30 mN/m and more preferably from 23 mN/m to 28 mN/m. Upon recording on various kinds of printing media such as polyolefin, PET, coated paper, or non-coated paper, the surface tension is preferably 20 mN/m or more considering bleeding and penetration, and the surface tension is preferably 30 mN/m or less considering wettability.

### (Ink-Jet Ink Composition)

The ink-jet ink composition of the present invention thus prepared is jetted with an ink-jet printer onto a recording medium, and then radiation rays are irradiated on the jetted composition so as to cure the composition for recording.
In the printed article obtained from the ink composition, image portions are cured by irradiation of radiation rays such as UV-light, so that the image portions have an excellent strength. Therefore, the ink composition is also usable for various kinds of applications including preparation of an ink-receiving layer (image portion) of a planographic printing plate, for example.

### (Ink-Jet Recording Method)

Hereinafter, the ink-jet recording method of the present invention and an ink-jet recording apparatus to which the ink-jet recording method is applicable are described.
The ink-jet recording method of the present invention includes jetting the ink-jet ink composition of the present invention for use in ink-jet recording is jetted onto a recording medium (support, recording material, or the like); and irradiating an active radiation ray on the ink-jet ink composition jetted on the recording medium, so that the ink composition is cured to form an image.

Namely, the ink-jet recording method of the present invention includes (a) a step of jetting the ink-jet ink composition of the present invention for use in ink-jet recording is jetted onto a recording medium and (b) a step of curing the ink-jet ink composition by irradiating an active radiation ray on the jetted ink-jet ink composition.
The ink-jet recording method of the present invention includes the step (a) and the step (b), so that an image is formed from the ink-jet ink composition that is cured on the recording medium.
In the step (a) of the ink-jet recording method according to the present invention, an ink-jet recording apparatus that will be described in detail below is usable.

### <Ink-Jet Recording Apparatus>

An ink-jet recording apparatus used in the recording method of the present invention is not particularly limited, but any apparatus that is arbitrarily selected from known ink-jet recording apparatuses capable of providing an objective resolution may be used. That is, with any known ink-jet recording apparatus including commercially available ones, the ink composition is ejectable onto a recording medium in the step (a) of the ink-jet recording method according to the present invention.

An ink-jet recording apparatus usable in the present invention may include, for example, an apparatus that has an ink supply system, a temperature sensor, and an active radiation ray source.
The ink supply system is composed of, for example, a source tank keeping therein the ink-jet ink composition of the present invention, a supply piping, an ink supply tank placed just before an ink-jet head, a filter, and a piezo type ink-jet head serving as the ink-jet head. The piezo type ink-jet head may be driven in a manner that a multi-size dot of from 1 pl to 100 pl and preferably from 8 pl to 30 pl is allowed to be jetted at a resolution of from 320×320 dpi to 4000×4000 dpi, preferably from 400×400 dpi to 1600×1600 dpi, and more preferably 720×720 dpi. In the present invention, dpi represents the number of dots per 2.54 cm.

As described above, the radiation ray curable ink is jetted preferably at a constant temperature, so that the portion from the ink supply tank to the ink-jet head may be heat-insulated or heated. There is not any particular limitation on the method of controlling the temperature, but preferably plural temperature sensors are placed at each position of piping and heat control is performed in accordance with the flow rate of the ink and the temperature of the environment. The temperature sensors may be placed on the ink supply tank and around the nozzles of the ink-jet head. The head unit that is heated is preferably thermally shielded or heat-insulated, so that the main body thereof does not have an influence of the outside air temperature. In order to reduce the printer warm-up time required for heating or to reduce heat energy losses, preferably the head unit is heat-insulated from the other units and the heat capacity of the whole heating unit is selected to be small.

Next, the step (b) of curing the ink-jet ink composition by irradiating an active radiation ray on the jetted ink-jet ink composition is described.
The ink-jet ink composition jetted onto a recording medium is cured by irradiation of an active radiation ray. Namely, the photopolymerization initiator contained in the ink-jet ink composition of the present invention is decomposed by irradiation of an active ray and generates initiation species such as radicals, acid or base; by an action of the initiation species, polymerization of the polymerizable compound is initiated and promoted, so that the ink-jet ink composition is cured. At this time, when the sensitizer exists along with the photopolymerization initiator in the ink-jet ink composition, the sensitizer in the composition absorbs the active radiation ray and turns into an excited state. The exited sensitizer makes contact with the photopolymerization initiator and promotes the decomposition of the photopolymerization initiator, thereby achieving a curing reaction with high sensitivity.

The active radiation ray used herein may include α rays, γ rays, electron beams, X rays, UV-light, and visible or far infrared light. The peak wavelength of the active radiation ray is, for example, preferably from 200 nm to 600 nm, more preferably from 300 nm to 450 nm, and still more preferably from 350 nm to 420 nm, although it depends on the absorption characteristics of the sensitizer.

The polymerization initiation system of the present invention exhibits a sufficient sensitivity even to a low power active radiation ray. Therefore, the power of the active radiation ray is preferably 2,000 mJ/cm² or less, more preferably from 10 mJ/cm² to 2,000 mJ/cm², still more preferably from 20 mJ/cm² to 1,000 mJ/cm², and particularly preferably from 50 mJ/cm² to 800 mJ/cm².
The active radiation ray is irradiated appropriately at an illuminance on an exposure plane of from 10 mW/cm² to 2,000 mW/cm² for example and preferably from 20 mW/cm² to 1,000 mW/cm².

As the active radiation ray source, a mercury lamp, a gas or solid laser or the like is mainly used. As a light source used to cure an UV-light curing ink-jet recording ink, a mercury lamp and a metal halide lamp are widely known. However, at present, mercury-free technologies are strongly expected from the viewpoint of protection of environment, so that replacement to a GaN semiconductor UV-light emitting device is industrially environmentally extremely valuable. LEDs (UV-LEDs) and LDs (UV-LDs) are expected as a light source for use in a photo-curing ink-jet system because they are small in size, high in operating life performance and efficiency, and low in cost.

In addition, light emitting diodes (LEDs) and laser diodes (LDs) are usable as the active radiation ray source. In particular, when an UV-light source is required, UV-LEDs and UV-LDs are usable. For example, purple color LEDs that have a main light emitting spectrum in the wavelength range of from 365 nm to 420 nm are available in the market from Nichia Corp. Further, in order to meet the requirement for a still shorter wavelength, U.S. Patent No. 6,084,250 discloses a LED that is capable of emitting an active radiation ray having a central wavelength between 300 nm and 370 nm. Other UV-LEDs are available, so that a radiation having a different UV-light spectrum may be irradiated. A particularly preferably active radiation ray source in the present invention is an UV-LED, especially, an UV-LED having a peak wavelength between 350 nm to 420 nm.
The maximum illuminance of the LEDs on a recording medium is preferably from 10 mW/cm² to 2,000 mW/cm², more preferably 20 mW/cm² to 1,000 mW/cm², and particularly preferably 50 mW/cm² to 800 mW/cm².

The ink-jet ink composition of the present invention is appropriately irradiated by the above described active radiation rays for from 0.01 sec to 120 sec for example, and preferably from 0.1 sec to 90 sec.
Irradiation conditions and basic irradiation processes of active radiation rays are disclosed in JP-A 60-132767. In practice, light sources are placed on both sides of a head unit including an jetting device of inks, and the head unit and light sources are scanned in a so-called shuttle mode. After inks are spotted, active radiation rays are irradiated after a predetermined interval of time (for example, from 0.01 sec to 0.5 sec, preferably from 0.01 sec to 0.3 sec, and more preferably from 0.01 sec to 0.15 sec).
In this way, by regulating the time from ink spotting to irradiation to be extremely short, the spotted ink may be prevented from bleeding before it is cured. In addition, in the case of a porous recording medium, the spotted ink may be exposed to the light from the light source before the ink is penetrated into deep portions of the recording medium to which the light is difficult to reach. Due to this, unreacted monomers are prevented from remaining therein, as a result, odor may be reduced.
Further, curing may be completed by using another light source that is not movable. WO99/54415 discloses a light irradiation method in which an optical fiber is used or UV-light is irradiated on recorded portions by illuminating a mirror face placed on the side face of the head unit with a collimated light source. Such a curing method may be also applicable to the recording method of the present invention.

By applying the ink-jet recording method as described above, the dot size of spotted ink may be kept constant on various kinds of recording media which have different wettability from each other, thereby improving image qualities. Note that, to obtain a color image, successive coating from a color with a low luminosity is desirable.
Successive coating from a color with a low luminosity makes irradiated rays to reach easily undercoated inks, thereby expecting adequate curing sensitivity, reduction in remaining monomers and odor, and increase in adhesion. Light irradiation may be carried out in a manner that all of the colors are exposed to light at a time after they are jetted, but it is desirable that light exposure is performed for each color one by one from the viewpoint of promoting curing.
In this way, the ink-jet ink composition of the present invention is cured at a high sensitivity by irradiation of active radiation rays and forms a hydrophobic image on the surface of a recording medium.

The active radiation ray source used to cure inks and preferable irradiation conditions thereof are similar to the ones described in the ink-jet recording method.
The ink-jet ink composition of the present invention is cured at high sensitivity by radiation rays and has a capability of forming a hydrophobic area having an excellent adhesion to a support and excellent film properties. Owing to this, in addition to color image formation, marking and the like, the ink composition may be used to form image areas on a planographic printing board, so that, in this application, a planographic printing board having a high image quality and an excellent printing property are also attainable.
For the reasons described above, the ink-jet ink composition of the present invention is excellent for use in the application of ink-jet recording, but is also obviously useful as an ink-jet ink composition for general use.

Hereinafter, exemplary embodiments of the present invention will be described. <1> An ink-jet ink composition contains following components of (a), (b), and (c), and having a viscosity at 25°C in the range of from 5 mPa·s to 100 mPa·s,
(a) a polymerizable compound,
(b) a photopolymerization initiator, and
(c) a sensitizer represented by the following formula (i):

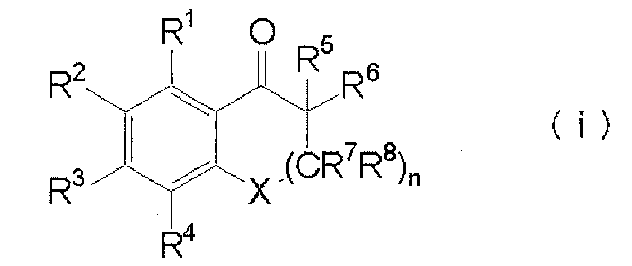

wherein, in Formula (i), X represents O, S or NR; n represents an integer of 0 or 1; R represents a hydrogen atom, an alkyl group or an acyl group; each of R¹, R², R³, R⁴, R⁵, R⁶, R⁷ and R⁸ independently represents a hydrogen atom or a monovalent substituent, provided that any neighboring two of R¹, R², R³ and R⁴ may be bonded to each other to form a ring, and R⁵ and R⁷ or R⁸, or R⁶ and R⁷ or R⁸, may be bonded to each other to form an aliphatic ring but do not form an aromatic ring.

The ink-jet ink composition according to <1>, wherein the viscosity at 25°C is in the range of from 5 mPa·s to 30 mPa·s.

The ink-jet ink composition according to <1> or <2>, wherein the sensitizer (c) represented by formula (i) is a sensitizer in which both R⁷ and R⁸ in formula (i) are not hydrogen atoms.

The ink-jet ink composition according to any one of <1> to <3>, wherein the photopolymerization initiator (b) is a trihalomethylazine compound.

An ink-jet recording method comprising:
(1) jetting the ink-jet ink composition according to any one of <1> to <4> onto a recording medium, and
(2) curing the ink-jet ink composition by irradiating actinic rays onto the jetted ink-jet ink composition.

The ink-jet recording method according to <5>, wherein the actinic rays are an UV-light irradiated from a light emitting diode generating an UV-light having an emission peak in the range of from 340 nm to 370 nm and a maximum illuminance of from 10 mW/cm² to 2,000 mW/m² on the surface of a recoding medium.

The ink-jet ink composition of the present invention has a viscosity at 25°C in the range of preferably from 5 mPa·s to 100 mPa·s and more preferably from 5 mPa·s to 30 mPa·s.
The sensitizer (c) represented by formula (i) is preferably a sensitizer in which both R⁷ and R⁸ are not hydrogen atom. The photopolymerization initiator (b) is preferably a trihalomethylazine compound.
The ink-jet ink composition of the present invention is preferably used for ink-jet recording.

### EXAMPLES

Properties of sensitizers used in Examples were measured.

### <Lowest Excited Triplet Energy>

The 0-0 band of a phosphorescence spectrum was measured, and then the lowest excited triplet energy was calculated. The 0-0 band of a phosphorescence spectrum is measurable by the following method.

### <Method of Measuring 0-0 Band of Phosphorescence Spectrum>

A compound to be measured was dissolving in a mixed solvent of diethylether, isopentane and ethanol (in a volume ratio of 5:5:2), which has been sufficiently deoxidated. After the resulting solution is put in a phosphorescence spectrum measurement cell, an excitation light is irradiated at a liquid nitrogen temperature of 77 K, and then an emission spectrum 100 ms later after the excitation light is irradiated is measured. Phosphorescence has a longer wavelength as compared with fluorescence, so that the light remained 100 ms later may be considered to be practically phosphorescence. For a compound having a phosphorescence lifetime of 100 ms or shorter, the delay time may be shortened in the measurement, but the problem is that when the delay time is shortened to such an extent that differentiation of phosphorescence becomes difficult, separation between phosphorescence and fluorescence becomes difficult. Therefore, a delay time that allows the separation is required to be selected.

For a compound that is not dissolved in the solvent described above, an arbitrary solvent that is capable of dissolving the compound may be used. Practically, there is not any problem because solvent effect on phosphorescence wavelength is quite small in the measurement method described above.

Regarding the method how to get the 0-0 band, the 0-0 band is defined as a wavelength at an intersection between a tangential line drawn along the tail on the short wavelength side of a phosphorescence spectrum chart obtained above and a wavelength axis (horizontal axis) in the present invention.

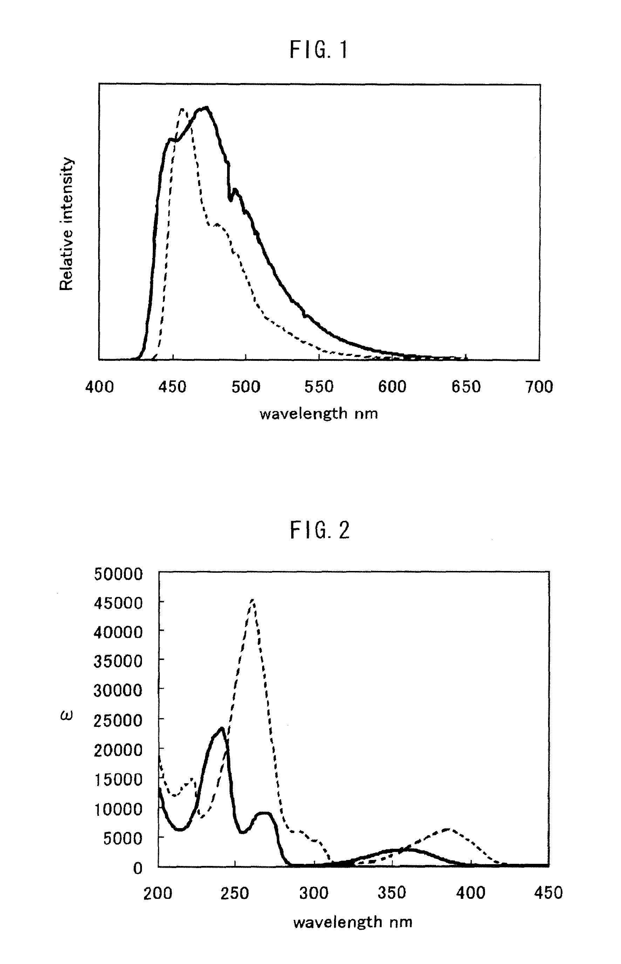

Phosphorescence spectra usually have weak intensities in many cases, so that peaks and noises are sometimes difficult to identify separately when they are magnified. In this case, an emitting spectrum (for the sake of simplicity, referred to as a stationary light spectrum) during irradiation of the excitation light is magnified and superimposed on an emitting spectrum (for the sake of simplicity, referred to as a phosphorescence spectrum) obtained 100 ms later after the excitation light is irradiated, and the peak wavelength of the phosphorescence spectrum is determined by reading it out of the partial structure of the stationary spectrum derived from the phosphorescence spectrum. Alternatively, peaks and noises are separated by smoothing the phosphorescence spectrum, and then the peak wavelength is read out. Note that as smoothing treatment, smoothing method of "Savitzky & Golay" can be adopted. The measurement results are shown in Table 1.
Phosphorescence spectra of a specific sensitizer I-14 of the resent invention and a comparative sensitizer of diethylthioxanthone are shown in Fig. 1.

### <Molar Absorbance Coefficient>

A methanol solution dissolving a compound to be measured in an amount of 0.01 g/L was prepared. An absorbance of the solution was measured with a CARY-5UV-VIS-NIRSPECTROPHOTMETERS manufactured by Variant Corp. so as to determine a molar absorbance coefficient ε (mol⁻¹·L·cm⁻¹) at 365 nm and 400 nm. The measurement results are shown in Table 1.
Absorption spectra of the specific sensitizer I-14 and an existing sensitizer of diethylthioxanthone are shown in Fig. 2.

### <Coloring Property Evaluation>

On the basis of the following criteria, evaluation is performed by visual observation.
A: Colorless,
B: Colored faint yellow, and
C: Colored yellow.

**Table 1**

| Sensitizer | Lowest excitation triplet energy (kJ/mol) | ε at 365 nm | ε at 400 nm | Coloring |
|---|---|---|---|---|
| I-14 | 278 | 2578 | 156 | A |
| Diethylthioxanthone | 271 | 3792 | 4078 | C |
| Benzophenone | 288 | 81 | 0 | A |
| N-ethylcarbazole | 292 | 92 | 0 | A |

Table 1 shows that the specific sensitizer I-14 of the present invention exhibits a high lowest excitation triplet energy and has sufficient absorption in a long wavelength region.
Yellow coloring is observed in the comparative compound of diethylthioxanthone because it has an absorption in visible region, so that the comparative compound is not appropriate for an ink that does not contain a colorant or a white color ink where yellow coloring is unfavorable. Benzophenone and N-ethylcarbazole are high in the lowest excitation triplet energy, but not having sufficient absorption in a long wavelength region.
The lowest excitation triplet energy of photopolymerization initiators used in Examples is shown in Table 2.
The chemical structures of these initiators are shown by the following formula of initiators A to F.
Further, the structures of the specific sensitizers of the present invention used in Examples are also shown by the following formulae of I-4, I-14, I-17, and I-19.

**Table 2**

| Initiator | Lowest excitation triplet energy (kJ/mol) |
|---|---|
| Initiator A | 246 |
| Initiator B | 252 |
| Initiator C | 223 |
| Initiator D | 276 |
| Initiator E | 270 |
| Initiator F | 295 |

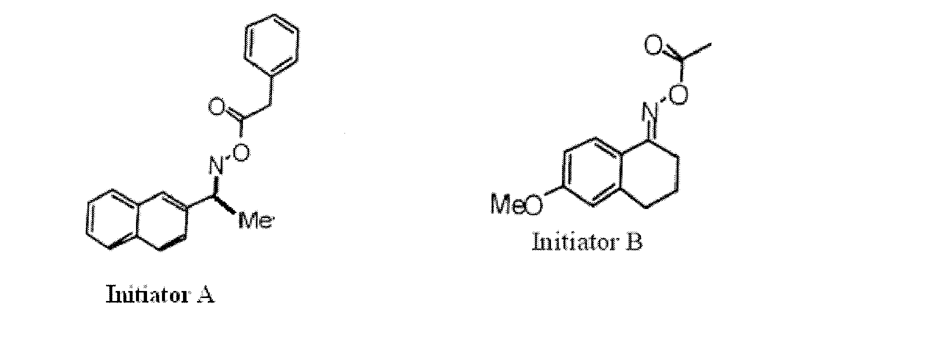

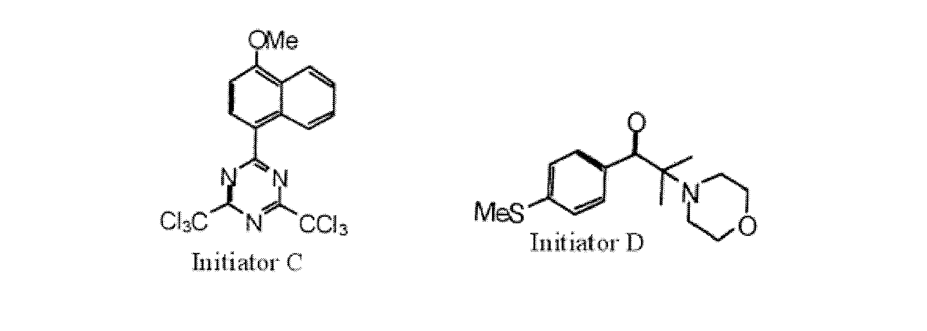

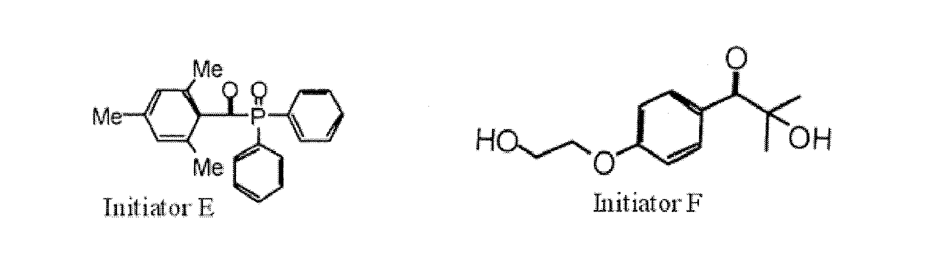

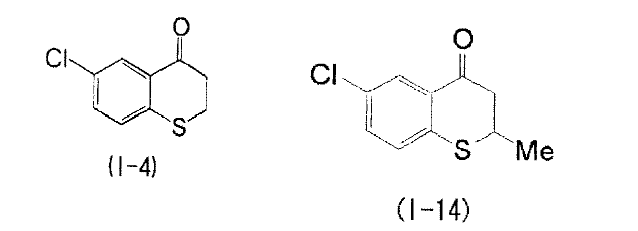

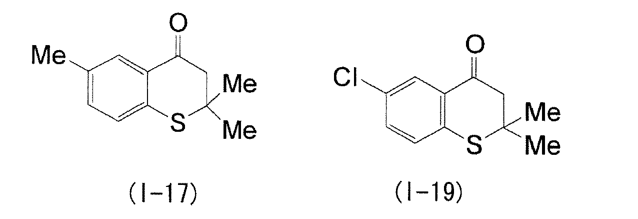

The present invention will be further described in detail with reference to the following examples, but it should be construed that the invention is in no way limited to those examples. In the following description, "part(s)" means "part(s) by mass" unless otherwise mentioned.

### (Preparation of Pigment Dispersion)

Components shown in Table 3 were mixed and agitated with a stirrer for 1 hour. After agitation, the resulting mixtures, each was dispersed respectively with a beads-mill to obtain a pigment dispersion with a different color from each other. The dispersing conditions were: zirconia beads having a diameter of 0.65 mm were loaded at a filling of 70%; the circumferential speed was 9 m/s; and the dispersing time was 4 hours for a magenta pigment A and 2 hours for the other pigments.

**Table 3**

| | Cyan Pigment A | Magenta pigment B | Yellow Pigment A | Carbon black | Titanium oxide | Dispersant A | Dispersant B | Polymerizable compound A |
|---|---|---|---|---|---|---|---|---|
| Cyan pigment dispersion A | 30 | - | - | - | - | 20 | - | 50 |
| Magenta pigment dispersion A | - | 30 | - | - | - | 20 | - | 50 |
| Yellow pigment dispersion A | - | - | 30 | - | - | 20 | - | 50 |
| Black pigment dispersion A | - | - | - | 40 | - | 25 | - | 35 |
| White pigment dispersion A | - | - | - | - | 60 | - | 5 | 35 |

Pigments, dispersants, and polymerizable compounds used and shown in Table 3 are as follows:
Cyan pigment A: PB 15:3 (IRGALITE BLUE GLO (trade name), manufactured by Ciba Specialty Chemicals Inc.),
Magenta pigment A: PV 19 (CINQUASIA MAGENTA RT-355D (trade name), manufactured by Ciba Specialty Chemicals Inc.),
Yellow pigment A: PY155 (NOVOPERM YELLOW 4G-01 (trade name), manufactured by Clariant Corp.),
Carbon black: SPECIAL BLACK 250 (trade name, manufactured by Degussa Corp.),
Titanium dioxide: CR60-2 (trade name, manufactured by Ishihara Sangyo Kaisha Ltd.),
Dispersant A: BYK-168 (trade name, manufactured by BYK Corp.),
Dispersant B: SOLSPERS 36000 (trade name, manufactured by Noveon, Inc.),
Polymerizable compound A: PEA (phenoxyethylacrylate, manufactured by Dai-Ichi Kogyo Seiyaku Co., Ltd.).

### <Preparation of Ink-Jet Ink Composition>

Components (unit: part(s) by mass) shown in Tables 4 to 6 were mixed and dissolved by agitation to obtain ink-jet ink compositions (Examples 1 to 15, Comparative Examples 1 to 9). The surface tension of these ink-jet ink compositions was measured with a surface tension meter (CBVP-Z (trade name, manufactured by Kyowa Interface Science Co., Ltd.) or the like) at a liquid temperature of 25°C using the Wilhelmy method. All of the ink-jet ink compositions provided a surface tension within the range of from 23 mN/m to 25 mN/m.
The viscosity of each ink-jet ink composition at 25°C was measured with an E-type viscometer (manufactured by Toki Sangyo Co., Ltd.). All of the ink-jet ink compositions except the ink-jet ink composition of Example 13 provided a viscosity within the range of from 10 mPa·s to 25 mPa·s. The ink-jet ink composition of Example 13 provided a viscosity of 50 mPa·s.

Further, the following ink-jet ink compositions in which the content of multifunctional monomers or oligomers is increased were prepared.

### (Comparative Example 10)

An ink-jet ink composition was prepared similarly to the ink-jet ink composition of Comparative Example 2, except the polymerizable compound B in Comparative Example 2 was replaced by tetramethylolmethane triacrylate (A-TMM-3 (trade name), manufactured by Shin-Nakamura Chemical Co., Ltd.).
The viscosity of thus prepared ink-jet ink composition at 25°C measured with an E-type viscometer (manufactured by Toki Sangyo Co., Ltd.) was 320 mPa·s.

### (Comparative Example 11)

An ink-jet ink composition was prepared similarly to the ink-jet ink composition of Comparative Example 2, except the polymerizable compound B in Comparative Example 2 was replaced by UA-4200 (trade name, manufactured by Shin-Nakamura Chemical Co., Ltd.). The viscosity of thus prepared ink-jet ink composition at 25 °C measured with an E-type viscometer (manufactured by Toki Sangyo Co., Ltd.) was 700 mPa·s.

**Table 4**

| Composition | Example 1 | Example 2 | Example 3 | Example 4 | Example 5 |
|---|---|---|---|---|---|
| White pigment A | 9.6 | | | | |
| Black pigment A | | 9 | | | |
| Magenta dispersed pigment A | | | 18 | | |
| Cyan dispersed pigment A | | | | 7 | |
| Yellow dispersed pigment A | | | | | 15 |
| Polymerizable compound A | 28.2 | 28.8 | 19.8 | 30.8 | 22.8 |
| Polymerizable compound B | 34 | 34 | 34 | 34 | 34 |
| Polymerizable compound C | 1 | 1 | 1 | 1 | 1 |
| Polymerizable compound D | 15 | 15 | 15 | 15 | 15 |
| Surfactant A | 0.1 | 0.1 | 0.1 | 0.1 | 0.1 |
| Inhibitor A | 0.1 | 0.1 | 0.1 | 0.1 | 0.1 |
| Initiator C | 6 | 6 | 6 | 6 | 6 |
| Sensitizer I-14 | 6 | 6 | 6 | 6 | 6 |

**Table 5**

| Composition | Example 6 | Example 7 | Example 8 | Example 9 | Example 10 | Example 11 | Example 12 | Example 13 | Example 14 | Example 15 |
|---|---|---|---|---|---|---|---|---|---|---|
| White pigment A | 9.6 | 9.6 | 9.6 | 9.6 | 9.6 | 9.6 | 9.6 | 9.6 | 9.6 | 9.6 |
| Polymerizable compound A | 28.2 | 28.2 | 28.2 | 28.2 | 28.2 | 28.2 | 28.2 | 28.2 | 28.2 | 28.2 |
| Polymerizable compound B | 34 | 34 | 34 | 34 | 34 | 34 | 34 | | 34 | 32 |
| Polymerizable compound C | 1 | 1 | 1 | 1 | 1 | 1 | 1 | 35 | 1 | 1 |
| Polymerizable compound D | 15 | 15 | 15 | 15 | 15 | 15 | 15 | 15 | 15 | 15 |
| Surfactant A | 0.1 | 0.1 | 0.1 | 0.1 | 0.1 | 0.1 | 0.1 | 0.1 | 0.1 | 0.1 |
| Inhibitor A | 0.1 | 0.1 | 0.1 | 0.1 | 0.1 | 0.1 | 0.1 | 0.1 | 0.1 | 0.1 |
| Initiator A | | | | | | | | | | 4 |
| Initiator B | 6 | | | | | | | | | |
| Initiator C | | 6 | 4 | 4 | 6 | 6 | 6 | 6 | | 4 |
| Initiator D | | | 4 | | | | | | | |
| Initiator E | | | | 4 | | | | | | |
| Initiator F | | | | | | | | | 6 | |
| Sensitizer I-14 | 6 | 6 | 6 | 6 | | | | 6 | 6 | 6 |
| Sensitizer I-19 | | | | | 6 | | | | | |
| Sensitizer I-4 | | | | | | 6 | | | | |
| Sensitizer I-17 | | | | | | | 6 | | | |

**Table 6**

| Composition | Comparativ e Example 1 | Comparativ e Example 2 | Comparativ e Example 3 | Comparativ e Example 4 | Comparativ e Example 5 | Comparativ e Example 6 | Comparativ e Example 7 | Comparativ e Example 8 | Comparativ e Example 9 |
|---|---|---|---|---|---|---|---|---|---|
| White pigment A | 9.6 | 9.6 | 9.6 | 9.6 | 9.6 | 9.6 | 9.6 | 9.6 | 9.6 |
| Polymerizable compound A | 34.2 | 28.2 | 28.2 | 28.2 | 28.2 | 28.2 | 28.2 | 28.2 | 28.2 |
| Polymerizable compound B | 34 | 34 | 34 | 34 | 34 | 34 | 34 | 34 | 34 |
| Polymerizable compound C | 1 | 1 | 1 | 1 | 1 | 1 | 1 | 1 | 1 |
| Polymerizable compound D | 15 | 15 | 15 | 15 | 15 | 15 | 15 | 15 | 15 |
| Surfactant A | 0.1 | 0.1 | 0.1 | 0.1 | 0.1 | 0.1 | 0.1 | 0.1 | 0.1 |
| Inhibitor A | 0.1 | 0.1 | 0.1 | 0.1 | 0.1 | 0.1 | 0.1 | 0.1 | 0.1 |
| Initiator C | 6 | 6 | 6 | 6 | 6 | | 6 | 6 | |
| Initiator F | | | | | | | | | 6 |
| Sensitizer I-14 | | | | | | 6 | | | |
| Diethyl thioxanthone | | 6 | | | | | | | 6 |
| Chloro thioxanthone | | | 6 | | | | | | |
| Benzophenone N-ethyl Carbazole | | | | 6 | | | | | |
| | | | | | 6 | | | | |
| Diethanol Amine | | | | | | 6 | | | |
| Compound (a) | | | | | | | 6 | | |
| Compound (b) | | | | | | | | 6 | |

Polymerizable compounds, surfactants, inhibitors (polymerization inhibitors), photopolymerization initiators, and sensitizers used and shown in Tables 4 to 6 are as follows:
Polymerizable compound A: PEA (phenoxyethylacrylate, manufactured by Dai-ichi Kyogyo Seiyaku Co., Ltd.),
Polymerizable compound B: DPGDA (dipropyleneglycol diacrylate, manufactured by Daicell-Cytec Co., Ltd.),
Polymerizable compound C: A-TMPT (trade name, trimethylolpropane triacrylate, manufactured by Shin-Nakamura Chemical Co., Ltd.),
Polymerizable compound D: FA-512A (trade name, dicyclopentenyloxy ethylacrylate, manufactured by Shin-Nakamura Chemical Co., Ltd.),
Surfactant A: BYK-307 (trade name, surfactant, manufactured by BYK Corp.),
Inhibitor A: FIRSTCURE ST-1 (trade name, manufactured by Albemarle Corp.),

### <Evaluation of Ink Compositions>

### -Evaluation of Viscosity-

The viscosity of each ink-jet ink composition at 25°C was measured with an E-type viscometer (manufactured by Toki Sangyo Co., Ltd) and evaluated on the basis of the following criteria. The results are shown in Table 7.
A: over 5 mPa·s and 30 mPa·s or less, in a level of no problem,
B: over 30 mPa·s and 100 mPa·s or less, in a level of practically no problem, and
C: over 100 mPa·s, in a level of practically causing problems in jetting.

**Table 7**

| | Viscosity | | | Viscosity | | | Viscosity |
|---|---|---|---|---|---|---|---|
| Example 1 | A | | Example 10 | A | | Comparative Example 4 | A |
| Example 2 | A | | Example 11 | A | | Comparative Example 5 | A |
| Example 3 | A | | Example 12 | A | | Comparative Example 6 | A |
| Example 4 | A | | Example 13 | B | | Comparative Example 7 | A |
| Example 5 | A | | Example 14 | A | | Comparative Example 8 | A |
| Example 6 | A | | Example 15 | A | | Comparative Example 9 | A |
| Example 7 | A | | Comparative Example 1 | A | | Comparative Example 10 | C |
| Example 8 | A | | Comparative Example 2 | A | | Comparative Example 11 | C |
| Example 9 | A | | Comparative Example 3 | A | | | |

The viscosity of the ink-jet ink compositions of Comparative Examples 10 and 11 was evaluated as C, and these ink compositions were not ejectable. The following ink-jet jetting experiment was carried out for the ink-jet ink compositions of Examples 1 to 15 and Comparative Examples 1 to 9 so as to evaluate the curing sensitivity and jetting stability thereof.

The ink-jet ink composition obtained in Example 1 was shot onto a polyvinylchloride sheet and passed beneath a light of UV-light emitting diode (UV-LED) at a specific speed so as to be irradiated and cured and to obtain a printed article.
In the example, the ink composition was jetted with a commercially available ink-jet recording apparatus having a piezo type ink-jet nozzle. As the light emitting diode (UV-LED) for curing, NCCU033 (trade name) manufactured by Nichia Corp. is used. A single chip of the LED emits UV-light with a wavelength of 365 nm. About 100 mW light is emitted from the chip by applying a current of about 500 mA. By arraying two or more chips with a spacing of 7 mm, a power of 0.3 W/cm² is obtained on the surface of a recording medium (hereinafter, also referred to as a medium). The time elapsed until light exposure after shot and the duration of time of light exposure are changeable by the traveling speed of the medium and the distance between the head and LEDs along the traveling direction. In the example, the ink composition was exposed to light about 0.5 sec later after it has been shot.
In accordance with the distance to the medium and the traveling speed, the light exposure energy on the medium is adjustable between 0.01 J/cm² to 15 L/cm².
On this occasion, the following evaluations were carried out and the results are shown in Table 8.

### -Curing Sensitivity-

Curing sensitivity is defined in terms of a light exposure energy at which surface stickiness disappears after printing.
Whether the surface stickiness disappears or not after printing is judged as: a plain paper (C² (trade name), copy paper, manufactured by Fuji Xerox Co., Ltd.) is pressed onto the surface immediately after printing; and when color transfer occurs, surface stickiness is judged "not to disappear", on the other hand, when color transfer does not occur, surface stickiness is judged "to disappear". As the value of the light exposure energy is lower, the sensitivity is evaluated to be higher. The following criteria are applied.
A: at a light exposure energy of 1500 mJ/m² or less, the surface stickiness disappears;
B: at a light exposure energy of higher than 1500 mJ/cm² and 2000 mJ/cm² or lower, the surface stickiness disappears;
C: at a light exposure energy of higher than 2000 mJ/cm² and 2500 mJ/cm² or lower, the surface stickiness disappears; and
D: a light exposure energy of higher than 2500 mJ/cm² is needed to eliminate the surface stickiness.

### -Jetting Stability-

After the resulting ink-jet ink compositions are stored for 4 weeks at room temperature, recording on a recording medium with a commercially available ink-jet recording apparatus having a piezo type ink-jet nozzle was carried out. Upon 48 hours continuous printing at normal temperature, whether dot deletion or ink scattering occurs or not is evaluated by visual observation on the basis of the following criteria. The results are shown in Table 8.
A: no dot deletion or ink scattering occurs, or occurs equal to or 3 times or less;
B: dot deletion or ink scattering occurs from 4 to 10 times; and
C: dot deletion or ink scattering occurs equal to or 11 times or more.

The ink supply system of the ink-jet recording apparatus used for the evaluation is composed of a source tank, a supply piping, an ink supply tank placed just before an ink-jet head, a filter, a piezo type ink-jet head serving as the ink-jet head. The portion from the ink supply tank to the ink-jet head was heat-insulated and heated. Temperature sensors were placed at the ink supply tank and nearby a nozzle of the ink-jet head respectively so as to perform temperature control in a manner that the temperature of the nozzle portion was kept constantly at 40°C±2°C. The piezo type ink-jet head was driven in a manner that a multi-size dot of from 8 pl to 30 pl was allowed to be jetted at a resolution of 720×720 dpi. Note that, dpi used in the present invention represents the number of dots per 2.54 cm.

**Table 8**

| | Sensitizer | Color | Initiator | Curing sensitivity | Jetting stability |
|---|---|---|---|---|---|
| Example 1 | I-14 | White | Initiator C | A | A |
| Example 2 | I-14 | Yellow | Initiator C | A | A |
| Example 3 | I-14 | Magenta | Initiator C | A | A |
| Example 4 | I-14 | Cyan | Initiator C | A | A |
| Example 5 | I-14 | Black | Initiator C | A | A |
| Example 6 | I-14 | White | Initiator A | B | A |
| Example 7 | I-14 | White | Initiator B | B | A |
| Example 8 | I-14 | White | Initiator A + initiator D | A | A |
| Example 9 | I-14 | White | Initiator C + initiator E | A | A |
| Example 10 | I-19 | White | Initiator C | A | A |
| Example 11 | I-4 | White | Initiator C | A | A |
| Example 12 | I-17 | White | Initiator C | A | A |
| Example 13 | I-14 | White | Initiator C | A | A |
| Example 14 | I-14 | White | Initiator F | C | A |
| Example 15 | I-14 | White | Initiator A + initiator C | A | A |
| Comparative Example 1 | None | White | Initiator C | D | A |
| Comparative Example 2 | Diethylthioxanthone | White | Initiator C | C | B |
| Comparative Example 3 | Chlorothioxanthone | White | Initiator C | C | C |
| Comparative Example 4 | Benzophenone | White | Initiator C | D | B |
| Comparative Example 5 | N-ethylcarbazole | White | Initiator C | D | B |
| Comparative Example 6 | I-14 | White | | D | A |
| Comparative Example 7 | Compound (a) | White | Initiator C | D | A |
| Comparative Example 8 | Compound (b) | White | Initiator C | D | A |
| Comparative Example 9 | Diethylthioxanthone | White | Initiator F | D | B |

The compound (a) and compound (b) used and shown in Table 8 are described below.

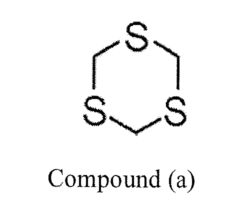

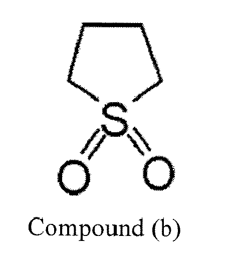

As is clear from Table 8, as compared with Comparative Example 1 in which no sensitizer is used, Examples 1 to 15 in which specific sensitizers of the present invention are used are better in curing property even when the amount of irradiation is low, and are also better in jetting stability even though as compared with Comparative Examples 1 to 5 and Comparative Examples 7 and 8 in which sensitizers other than the specific sensitizers of the present invention are used. Comparative Example 6 uses the specific sensitizer of the present invention, but no photopolymerization initiator is used therein, so that Comparative Example 6 is inferior in curing sensitivity. Note that, Table 1 and Table 2 show that the lowest excitation triplet energy of the photopolymerization initiators A to E used in Examples is low as compared with sensitizers, so that energy transfer sensitization is considered to proceed efficiently. Example 14 that uses the initiator F is less advantageous in curing sensitivity as compared with the photopolymerization initiators A to E because the lowest excitation triplet energy is higher than the sensitizer, but providing a higher sensitivity than Comparative Example 9 in which the sensitizer of the present invention is not used.

Images formed on printed articles in Examples 1 and 7 to 15 provide white color adequately. This shows that a white color ink excellent in sensitivity and jetting stability and having excellent color reproducibility may be obtained from the ink-jet ink compositions of the present invention.
To the contrary, the white inks of Comparative Examples 2 and 3 provide less adequate color reproducibility in white images because of yellow coloring that is considered to be caused by 2,4-diethylthioxanthone or chlorothioxanthone.

Even in the case where the specific sensitizers of the present invention are used, the ink of Comparative Example 7 in which diethanolamine is added in place of the photopolymerization initiators is less advantageous in curing property and provides, after light exposure, yellow coloring that is considered to be caused by amines. In addition, when the initiator F that has a higher lowest excitation triplet energy than the sensitizers is used, curing property is not good.
Furthermore, Comparative Examples 8 and 9 using the compound (a) and compound (b) that are used preferably in the photo-curing compositions described in JP-A No. 6-308727 are poor in curing property in the case of ink-jet inks.

Separately, ink-jet ink compositions having similar compositions as Examples 1, 10, 11, and 12 except that only pigments were eliminated were prepared. The ink-jet ink compositions were stored at 60°C for 4 weeks, although the condition was oppressive.
The ink-jet ink composition corresponding to Example 11 showed gelation, but the ink-jet ink composition corresponding to Example 1 did not show gelation although the viscosity was slightly increased. This is a result under the oppressive condition, but from the viewpoint of thermal stability, it is considered that the smaller the number of hydrogen atoms bonded to a carbon atom adjacent to a sulfur (S) atom, the more preferable.

According to the present invention, an ink-jet ink composition having a high sensitivity to the irradiation of active radiation rays, an excellent curing property and an excellent jetting stability, and an ink-jet recording method using the ink-jet ink composition are attainable.

## Claims

1. An ink-jet ink composition comprising the following components (a), (b), and (c), and having a viscosity at 25°C in the range of from 5 mPa·s to 100 mPa·s:
(a) a polymerizable compound;
(b) a photopolymerization initiator; and
(c) a sensitizer represented by the following formula (i): 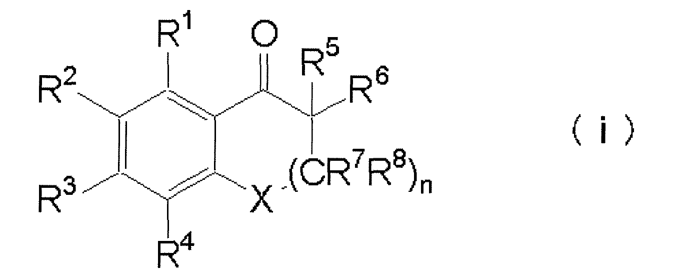
wherein, in Formula (i), X represents O, S or NR; n represents an integer of 0 or 1; R represents a hydrogen atom, an alkyl group or an acyl group; each of R¹, R², R³, R⁴, R⁵, R⁶, R⁷ and R⁸ independently represents a hydrogen atom or a monovalent substituent, provided that any neighboring two of R¹, R², R³ and R⁴ may be bonded to each other to form a ring, and R⁵ and R⁷ or R⁸, or R⁶ and R⁷ or R⁸, may be bonded to each other to form an aliphatic ring but do not form an aromatic ring.

2. The ink-jet ink composition according to claim 1, wherein the viscosity at 25°C is in the range of from 5 mPa·s to 30 mPa·s.

3. The ink-jet ink composition according to claim 1, wherein the sensitizer (c) represented by formula (i) is a sensitizer in which both R⁷ and R⁸ in formula (i) are not hydrogen atoms.

4. The ink-jet ink composition according to claim 1, wherein the photopolymerization initiator (b) is a trihalomethylazine compound.

5. An ink-jet recording method comprising:
(1) jetting the ink-jet ink composition according to claim 1 onto a recording medium, and
(2) curing the ink-jet ink composition by irradiating actinic rays onto the jetted ink-jet ink composition.

6. The ink-jet recording method according to claim 5, wherein the actinic rays are an UV-light irradiated from a light emitting diode generating an UV-light having an emission peak in the range of from 340 nm to 370 nm and a maximum illuminance of from 10 mW/cm² to 2,000 mW/m² on the surface of a recoding medium.
